(19) Europäisches Patentamt
European Patent Office
Office européen des brevets

(11) **EP 4 460 117 A1**

(12) **EUROPEAN PATENT APPLICATION**
published in accordance with Art. 153(4) EPC

(43) Date of publication:
06.11.2024 Bulletin 2024/45

(21) Application number: 22916683.0

(22) Date of filing: 27.12.2022

(51) International Patent Classification (IPC):
*H04W 64/00* (2009.01)   *H04W 24/10* (2009.01)
*H04W 72/20* (2023.01)   *H04W 4/40* (2018.01)

(52) Cooperative Patent Classification (CPC):
H04W 4/40; H04W 24/10; H04W 64/00;
H04W 72/04; H04W 72/20

(86) International application number:
PCT/KR2022/021363

(87) International publication number:
WO 2023/128542 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.12.2021 KR 20210193540

(71) Applicant: Innovative Technology Lab Co., Ltd.
Seocho-gu, Seoul 06744 (KR)

(72) Inventor: YOON, Sung Jun
Seoul 06744 (KR)

(74) Representative: Diehl & Partner
Patent- und Rechtsanwaltskanzlei mbB
Erika-Mann-Straße 9
80636 München (DE)

(54) **METHOD AND DEVICE FOR PERFORMING POSITIONING ON BASIS OF SIDELINK PRS IN WIRELESS COMMUNICATION SYSTEM**

(57)    A method of performing sidelink positioning in a wireless communication system according to an aspect of the present disclosure may include, as an operation of receiving, by a first user equipment (UE), respective allocation information on one or more UEs including the first UE from a base station, receiving, by each of the one or more UEs, the respective allocation information from the base station; transmitting, by the first UE, allocation information of the first UE and the respective allocation information on the one or more UEs to a second UE; as an operation of transmitting, by the first UE, a sidelink positioning reference signal (SL PRS) to the second UE based on the allocation information of the first UE, receiving, by the second UE, an SL PRS from each of the one or more UEs based on the allocation information on the one or more UEs received from the first UE; receiving, by the first UE, measurement information from the second UE; and reporting, by the first UE, the measurement information to the base station.

**FIG. 16**

**Description**

**TECHNICAL FIELD**

The present disclosure relates to a method and device for performing positioning basis of a sidelink positioning reference signal (PRS) in a wireless communication system.

**RELATED ART**

Device-to-device (D2D) communication represents that a single user equipment (UE) directly communicates with another UE. Direct communication represents that a single UE communicates with another UE under control of a network or without using another network device through determination of the UE itself.

The D2D communication may be applied to vehicular communication, which is generally referred to as vehicle-to-everything (V2X). V2X communication refers to a communication method that exchanges or shares information such as traffic conditions, through communication with road infrastructure and other vehicles while driving. A V2X-based service may include, for example, an autonomous driving service, a remote vehicle control service, an interactive service such as a game, and a high-capacity audio/video service such as augmented reality (AR) and virtual reality (VR). Detailed techniques additionally required for Long Term Evolution (LTE) and new radio (NR) system that are radio access technology (RAT) in a 5G system is under discussion based on performance requirements for supporting various V2X-bsed services through the 5G system.

**DETAILED DESCRIPTION**

**TECHNICAL SUBJECT**

A technical subject of the present disclosure relates to a method and apparatus for performing sidelink positioning in a wireless communication system.

An additional technical subject of the present disclosure relates to a method and apparatus for providing allocation information based on a device-to-device (D2D) sidelink formation status.

An additional technical subject of the present disclosure relates to a method and apparatus for configuring allocation information for a sidelink positioning reference signal (SL PRS).

An additional technical subject of the present disclosure relates to a method and apparatus for configuring sequence information of allocation information for an SL PRS.

An additional technical subject of the present disclosure relates to a method and apparatus for configuring resource information of allocation information for an SL PRS.

Technical subjects achievable from the present disclosure are not limited to the aforementioned technical subjects and still other technical subjects not described herein may be clearly understood by one of ordinary skill in the art to which the disclosure pertains from the following description.

**TECHNICAL SOLUTION**

A method of performing sidelink positioning in a wireless communication system according to an aspect of the present disclosure may include, as an operation of receiving, by a first user equipment (UE), respective allocation information on one or more UEs including the first UE from a base station, receiving, by each of the one or more UEs, the respective allocation information from the base station; transmitting, by the first UE, allocation information of the first UE and the respective allocation information on the one or more UEs to a second UE; as an operation of transmitting, by the first UE, a sidelink positioning reference signal (SL PRS) to the second UE based on the allocation information of the first UE, receiving, by the second UE, an SL PRS from each of the one or more UEs based on the allocation information on the one or more UEs received from the first UE; receiving, by the first UE, measurement information from the second UE; and reporting, by the first UE, the measurement information to the base station.

Also, a method of performing sidelink positioning in a wireless communication system according to an aspect of the present disclosure may include receiving, by a first UE, respective allocation information on one or more UEs including the first UE from a base station; transmitting, by the first UE, the respective allocation information on the one or more UEs to the one or more UEs; transmitting, by the first UE, allocation information of the first UE and the respective allocation information on the one or more UEs to a second UE; as an operation of transmitting, by the first UE, an SL PRS to the second UE based on the allocation information of the first UE, receiving, by the second UE, an SL PRS from each of the one or more UEs based on the allocation information on the one or more UEs received from the first UE; receiving, by the first UE, measurement information from the second UE; and reporting, by the first UE, the measurement information to the base station.

A method of performing sidelink positioning in a wireless communication system according to an aspect of the present disclosure may include transmitting, by a first UE, respective allocation information on one or more UEs to the one or more UEs; transmitting, by the first UE, allocation information of the first UE and the respective allocation information on the one or more UEs to a second UE; as an operation of transmitting, by the first UE, an SL PRS to the second UE based on the allocation information of the first UE, receiving, by the second UE, an SL PRS from each of the one or more UEs based on the allocation information on the one or more UEs received from the first UE; and receiving, by the first UE, measurement information from the second UE.

EFFECT

According to the present disclosure, it is possible to provide a method and apparatus for performing sidelink positioning in a wireless communication system.

According to the present disclosure, it is possible to provide a method and apparatus for providing allocation information based on a device-to-device (D2D) sidelink formation status.

According to the present disclosure, it is possible to provide a method and apparatus for configuring allocation information for a sidelink positioning reference signal (SL PRS).

According to the present disclosure, it is possible to provide a method and apparatus for configuring sequence information of allocation information for an SL PRS.

According to the present disclosure, it is possible to provide a method and apparatus for configuring resource information of allocation information for an SL PRS.

Effects achievable from the present disclosure are not limited to the aforementioned effects and still other effects not described herein may be clearly understood by one of ordinary skill in the art to which the present disclosure pertains from the following description.

**BRIEF DESCRIPTION OF DRAWINGS**

FIG. 1 illustrates examples of a vehicle-to-everything (V2X) scenario to which the present disclosure may apply.
FIG. 2 illustrates examples of a V2X scenario to which the present disclosure may apply.
FIG. 3 illustrates examples of a V2X scenario to which the present disclosure may apply.
FIG. 4 illustrates examples of a service provided based on a sidelink to which the present disclosure may apply.
FIG. 5 illustrates a new radio (NR) frame structure to which the present disclosure may apply.
FIG. 6 illustrates an NR resource structure to which the present disclosure may apply.
FIG. 7 illustrates an example of a V2X resource pool configuration to which the present disclosure may apply.
FIG. 8 illustrates an example of a V2X resource pool configuration to which the present disclosure may apply.
FIG. 9 illustrates a method of performing positioning based on an observed time difference of arrival (OTDOA) to which the present disclosure may apply.
FIG. 10 illustrates a control plane and user plane configuration diagram for present invention-related to which the present disclosure may apply.
FIG. 11 illustrates a comb pattern applicable to the present disclosure.
FIG. 12 illustrates a method of performing a cyclic prefix based on a downlink positioning reference signal (DL PRS) allocation pattern applicable to the present disclosure.
FIG. 13 illustrates a method of performing a cyclic prefix based on a DL PRS allocation pattern applicable to the present disclosure.
FIG. 14 illustrates a DL PRS resource allocation method applicable to the present disclosure.
FIG. 15 illustrates a method of performing sidelink-based positioning based on base station coverage and a sidelink communication formation status, applicable to the present disclosure.
FIG. 16 illustrates a method of performing sidelink-based positioning based on base station coverage and a sidelink communication formation status, applicable to the present disclosure.
FIG. 17 illustrates a method of performing sidelink-based positioning based on base station coverage, a sidelink communication formation status, and request information, applicable to the present disclosure.
FIG. 18 illustrates a method of performing sidelink-based positioning based on base station coverage, a sidelink communication formation status, and request information, applicable to the present disclosure.
FIG. 19 illustrates a method of performing sidelink-based positioning based on base station coverage and a sidelink communication formation status, applicable to the present disclosure.
FIG. 20 illustrates a method of performing sidelink-based positioning based on base station coverage and a sidelink communication formation status, applicable to the present disclosure.

FIG. 21 illustrates a method of performing sidelink-based positioning based on base station coverage, a sidelink communication formation status, and request information, applicable to the present disclosure.

FIG. 22 illustrates a method of performing sidelink-based positioning based on base station coverage, a sidelink communication formation status, and request information, applicable to the present disclosure.

FIG. 23 illustrates a method of performing sidelink-based positioning based on base station coverage and a sidelink communication formation status, applicable to the present disclosure.

FIG. 24 illustrates a method of performing sidelink-based positioning based on base station coverage and a sidelink communication formation status, applicable to the present disclosure.

FIG. 25 illustrates a method of performing sidelink-based positioning based on base station coverage, a sidelink communication formation status, and request information, applicable to the present disclosure.

FIG. 26 illustrates a method of performing sidelink-based positioning based on base station coverage, a sidelink communication formation status, and request information, applicable to the present disclosure.

FIG. 27 is a flowchart illustrating a method of performing sidelink-based positioning based on base station coverage and a sidelink communication formation status, applicable to the present disclosure.

FIG. 28 is a flowchart illustrating a method of performing sidelink-based positioning based on base station coverage and a sidelink communication formation status, applicable to the present disclosure.

FIG. 29 is a flowchart illustrating a method of performing sidelink-based positioning based on base station coverage and a sidelink communication formation status, applicable to the present disclosure.

FIG. 30 is a block diagram illustrating a base station device and a terminal device to which the present disclosure may apply.

## BEST MODE TO CARRY OUT THE INVENTION

Various examples of the disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

When it is determined that detailed description related to a known configuration or function in describing the examples of the present disclosure, the detailed description is omitted. Also, a part irrelevant to the description of the disclosure is omitted and like reference numerals refer to like elements.

It will be understood that when an element is referred to as being "connected to," "coupled to," or "accessed to" another element, it can be directly connected, coupled, or accessed to the other element or intervening elements may be present. Also, it will be further understood that when an element is described to "comprise/include" or "have" another element, it specifies the presence of still another element, but do not preclude the presence of another element uncles otherwise described.

Further, the terms, such as first, second, and the like, may be used herein to describe elements in the description herein. The terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent that the elements are necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the disclosure.

Herein, elements described in various examples may not be necessarily essential and may be partially selectable. Therefore, an example including a partial set of elements described in an example is also included in the scope of the disclosure. Also, an example that additionally includes another element to elements described in various examples is also included in the scope of the disclosure.

The description described herein is related to a wireless communication network, and an operation performed in the wireless communication network may be performed in a process of controlling a network and transmitting data in a system that controls the wireless communication network (e.g., a base station), or may be performed in a process of transmitting or receiving a signal in a user equipment connected to the wireless communication network.

It is apparent that various operations performed for communication with a terminal in a network including a base station and a plurality of network nodes may be performed by the base station or by other network nodes in addition to the base station. Here, the term 'base station (BS)' may be interchangeably used with other terms, for example, a fixed station, a Node B, eNodeB (eNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes a meaning of transmitting or receiving information or a signal through the corresponding channel. For example, transmitting a control channel indicates transmitting control information or a signal through the control channel. Likewise, transmitting a data channel indicates transmitting data information or a signal through the data channel.

The definitions of abbreviations used herein as below.

D2D: Device to Device (communication)
DCI: Downlink Control Information
V2X: Vehicle to X(everything)
V2V: Vehicle to Vehicle
V2P: Vehicle to Pedestrian
V2I/N: Vehicle to Infrastructure/Network
SL: Sidelink
SCI: Sidelink Control Information
SFCI: Sidelink Feedback Control Information
PSSCH: Physical Sidelink Shared Channel
PSBCH: Physical Sidelink Broadcast Channel
PSCCH: Physical Sidelink Control Channel
PSDCH: Physical Sidelink Discovery Channel
PSFICH: Physical Sidelink Feedback Indication Channel
ProSe: (Device to Device) Proximity Services
SLSS: Sidelink Synchronization Signal
PSSID: Physical Sidelink Synchronization Identity
$n^{SA}_{ID}$ : Sidelink group destination identity
$N^{SL}_{ID}$ : Physical sidelink synchronization identity
SA: Scheduling assignment
TB: Transport Block
TTI: Transmission Time Interval
RB: Resource Block

In the following description, although the term "new radio (NR) system" is used to distinguish a system according to various examples of the present disclosure from the existing system, the scope of the present disclosure is not limited thereto.

For example, a new radio (NR) system supports various subcarrier spacings (SCSs) by considering various scenarios, service requirements, potential system compatibility, and the like. Also, to overcome a poor channel environment, such as high pathloss, phasenoise, and frequency offset, occurring on a high carrier frequency, the NR system may support transmission of a physical signal/channel through a plurality of beams.

Through this, the NR system may support applications, for example, enhanced Mobile Broadband (eMBB), massive Machine Type Communications (mMTC)/ultra Machine Type Communications (uMTC), and Ultra Reliable and Low Latency Communications (URLLC). Here, the term "NR system" used herein is used as an example of a wireless communication system, and the term "NR system" itself is not limited to the aforementioned features.

Also, for example, 5-th generation (5G) mobile communication technology may be defined. Here, 5G mobile communication technology may be defined by including the existing Long Term Evolution-Advanced (LTE-A) system as well as the aforementioned NR system. That is, 5G mobile communication technology may operate by considering backward compatibility with a previous system as well as a newly defined NR system.

For example, a sidelink field of 5G may include all of sidelink technology in an LTE system and sidelink technology in an NR system. Here, the sidelink field may be essential to enhance a performance and to integrate new and various services through an ultra high reliability and an ultra low latency.

In the following, for clarity of description, an operation for vehicle-to-everything (V2X) communication and related information will be described based on the NR system. Here, the following features may not be limited to a specific system and may apply alike to other systems that are similarly configured. However, it is provided as an example only and the present disclosure is not limited thereto.

Meanwhile, V2X communication may be communication based on a vehicle. Here, the concept of a vehicle is evolving from a simple transportation device to a new platform. For example, information technology (IT) applies to a vehicle and various V2X services are provided accordingly. Services, such as, for example, prevention of traffic accidents, improvement of traffic environments, automatic driving, and remote driving, are provided. To this end, there is a growing need for developing and applying sidelink related technology.

In detail, with respect to existing communication technology, a communication from an Base Station (BS) to a user equipment (UE) may be a downlink and a communication from the UE to the BS may be an uplink. Here, communication between UEs may be required in addition to the communication between the BS and the UE. Here, the communication from one UE to another UE may be the aforementioned sidelink. For example, with respect to the aforementioned V2X communication, a vehicle-to-vehicle (V2V) communication or communication between a vehicle and another object (e.g., an object, excluding the BS, such as a pedestrian UE, a UE-type roadside unit (RSU), and the like) may be a sidelink. That is, in the case of performing vehicle-based communication, there are some constraints using only communication with the eNodeB alone. Therefore, the aforementioned sidelink technology may be developed and applied.

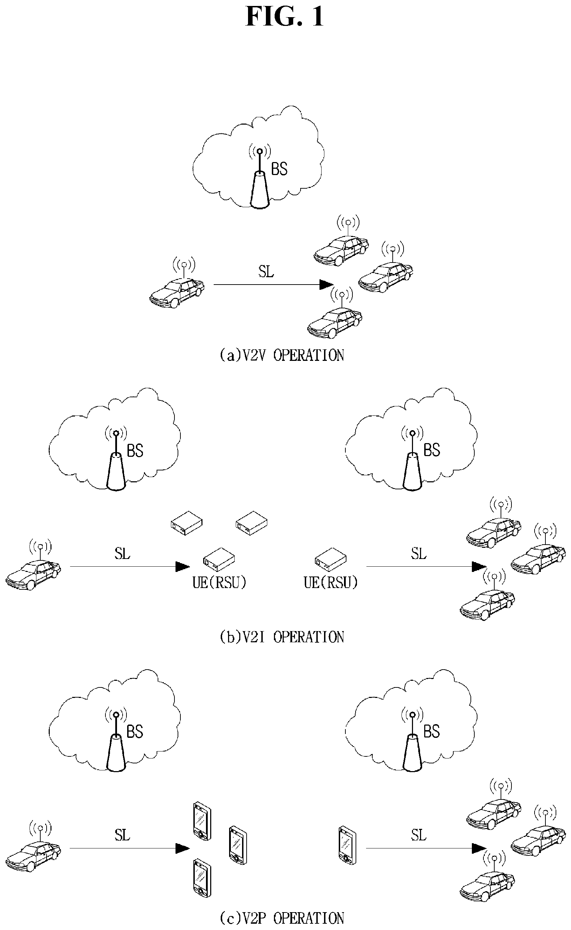

FIGS. 1 to 3 illustrate V2X scenarios which the present disclosure could be applied.

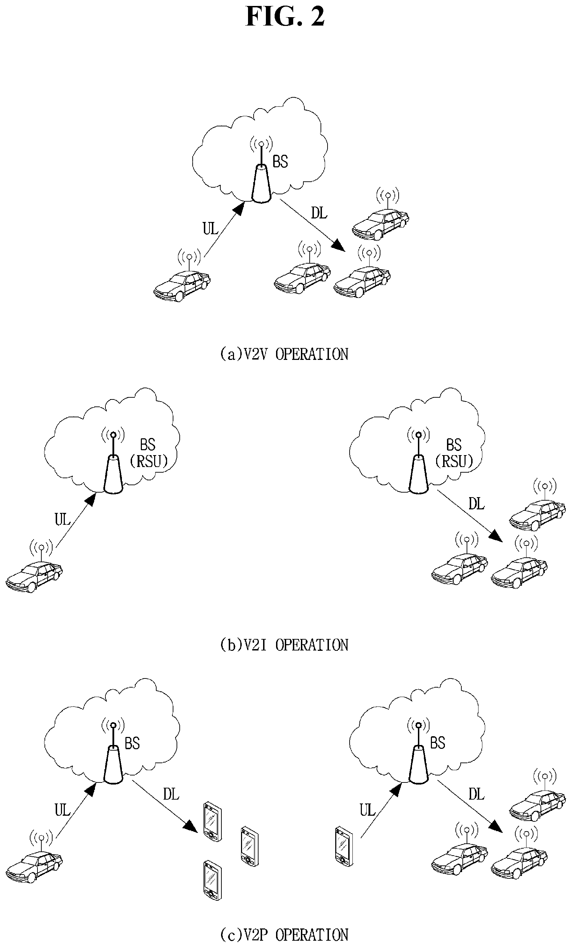

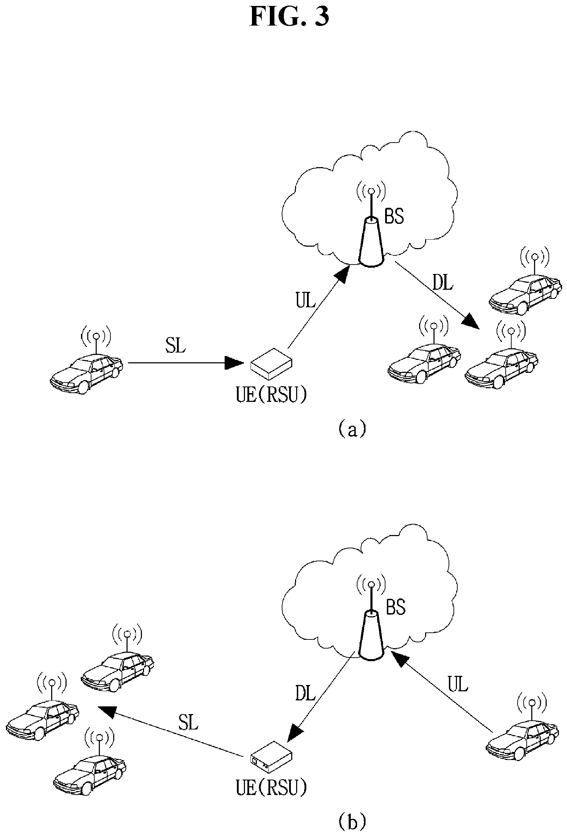

FIG. 1 may be a scenario of performing communication based on the aforementioned sidelink. FIG. 2 may be a scenario of performing a V2X operation using communication between a UE (or a vehicle) and a BS. FIG. 3 may be a scenario of performing communication using all of the aforementioned sidelink and communication with the BS.

For example, in the description related to V2X, the UE may be a vehicle. In the description related to V2X, the UE and the vehicle are collectively referred to as the UE. For example, the UE may refer to a device capable of performing communication with a sidelink and a BS, and may include a vehicle for V2X.

Also, in relation to V2X, D2D (Device to Device) may refer to communication between UEs. Also, the term "proximity-based service (ProSe)" may indicate a proximity service to a UE that performs D2D communication. Also, SL (sidelink) may be the aforementioned sidelink and sidelink control information (SCI) may indicate control information related to the aforementioned sidelink. Also, a Physical Sidelink Shared Channel (PSSCH) may be a channel used to transmit data through a sidelink and a Physical Sidelink Control Channel (PSCCH) may be a channel used to transmit control information through a sidelink. Also, a Physical Sidelink Broadcast Channel (PSBCH) may be a channel used to broadcast a signal through a sidelink and to forward system information. Also, a Physical Sidelink Feedback Indication Channel (PSFICH) may be a channel used for directing feedback information as a sidelink feedback channel. Also, a sidelink synchronization signal (SLSS) may be a synchronization signal for sidelink and physical sidelink synchronization identity (PSSID) may be ID information for sidelink synchronization. Also, $n_{ID}^{SA}$ (Sidelink group destination identity) may be ID information for distinguishing a sidelink group, and $N_{ID}^{SL}$ (Physical sidelink synchronization identity) may be ID information for sidelink synchronization. V2V may mean vehicle-to-vehicle communication, V2P may mean communication between vehicles and pedestrians, and V2I/N may mean communication between vehicles and infrastructure/networks.

The terms SA, TB, TI, and RB may be the same terms used in the existing LTE. for example, in V2X communication, control information transmitted from a UE to another UE may be scheduling assignment (SA). If the aforementioned control information is used for sidelink communication, the control information may be SCI. Herein, the SCI may be transmitted through the PSCCH. Also, a portion of the SCI may be transmitted through the PSCCH and another portion may be transmitted through the PSSCH.

In V2X communication, data transmitted from a UE to another UE may be configured based on a unit of a transport port (TB). Here, the sidelink data may be transmitted through the PSSCH.

Next, herein, an operation mode may be defined based on a resource allocation method for transmitting data and control information for V2X communication or direct link (e.g., D2D, ProSe, or SL) communication.

For example, an eNodeB resource scheduling mode may be a mode in which an eNodeB or a relay node schedules resources used for a UE to transmit V2X (or direct link) control information and/or data. Through this, the UE may transmit the V2X (or direct link) control information and/or data. This mode may refer to the eNodeB resource scheduling mode.

For more detailed example, the eNodeB or the relay node may provide, to a sidelink (or direct link) transmitting UE, scheduling information about resources used to transmit sidelink (or direct ink) control information and/or data through downlink control information (DCI). Therefore, the sidelink (or direct link) transmitting UE may transmit the sidelink (or direct link) control information and data to a sidelink (or direct link) receiving UE, and the sidelink (or direct link) receiving UE may receive sidelink (or direct link) data based on the sidelink (or direct link) control information.

Also, a UE autonomous resource selection mode may be a resource allocation mode in which a UE autonomously selects resources used to transmit control information and data. The resource selection of the UE may be determined through sensing of the UE from a resource pool (i.e., a set of resource candidates). On the selected resource, the UE may transmit V2X (or direct link) control information and/or data.

For more detailed example, the sidelink (or direct link) transmitting UE may transmit sidelink (or direct link) control information and data to the sidelink (or direct link) receiving UE using its selected resource, and the sidelink (or direct link) receiving UE may receive sidelink (or direct link) data based on sidelink (or direct link) control information.

The aforementioned BS resource scheduling mode may be referred to as Mode 1 in sidelink (or direct link) communication for D2D and the like. Also, the BS resource scheduling mode may be referred to as Mode 3 in sidelink communication for V2X and the like. Also, the UE autonomous resource selection mode may be referred to as Mode 2 in sidelink (or direct link) communication for D2D and the like. Also, the UE autonomous resource selection mode may be referred to as Mode 4 in sidelink communication for V2X and the like. However, they are provided as examples only and the present disclosure is not limited thereto. That is, they may be regarded as the same mode with respect to the same target and the same operation.

For example, in NR V2X, BS resource scheduling mode may be referred to as mode 1 (Mode 1) and the UE autonomous resource selection mode may be referred to as mode 2 (Mode 2).

Although the following description is made based on V2X communication for clarity of description, it is not limited thereto. For example, the present disclosure may apply alike to communication based on a direct link such as D2D, ProSe, and the like.

Also, for example, V2X may be a general term for V2V, V2P, and V2I/N. Here, each of V2V, V2P, and V2I/N may be defined as the following Table 1, however, it is not limited thereto. That is, the following Table 1 is provided as an example only and not limited thereto.

[Table 1]

| V2V | - LTE or NR based communication between a vehicle and another vehicle |
|---|---|
| V2P | - LTE or NR based communication between a vehicle and a device carried by an individual (e.g., a terminal carried by a pedestrian, a cyclist, a driver, or a passenger) |
| V2I/N | - LTE or NR based communication between a vehicle and a roadside unit(RSU)/network<br>- The RSU refers to a suspended social infrastructure entity that supports V2X applications and may exchange messages with other independent entities that support V2X applications.<br>- The RSU is a logical independent entity integrated with a V2X application logic having functions of a BS (in this case, referable as a BS-type RSU) or a UE (in this case, referable as a UE-type RSU). |

Also, V2X communication may include PC5 based communication that is an interface for sidelink communication.

For example, the following Table 2 and FIG. 1 may refer to a scenario for supporting a V2X operation based on a PC5 interface (or SL). Here, (a) of FIG. 1 illustrates an example of a V2V operation, (b) of FIG. 1 illustrates an example of a V2I operation, and (c) of FIG. 1 illustrates an example of a V2P operation. That is, FIG. 1 illustrates a method of performing communication based on the sidelink (SL). Here, communication may be performed without a BS.

[Table 2]

| - Scenario that supports a V2X operation operating based on only PC5<br>- In this scenario, a UE transmits a V2X message to a plurality of UEs present in a local area through a sidelink.<br>- With respect to V2I, a transmitter UE or receiver UE(s) may be a UE-type roadside unit (RSU).<br>- With respect to V2P, a transmitter UE or receiver UE(s) may be a pedestrian UE. |
|---|

Meanwhile, the following Table 3 and FIG. 2 may refer to a scenario for supporting a V2X operation based on a Uu interface (i.e., an interface between a UE and a BS). Here, (a) of FIG. 2 illustrates an example of a V2V operation, (b) of FIG. 2 illustrates an example of a V2I operation, and (c) of FIG. 2 illustrates an example of a V2P operation. That is, the V2X operation may be supported using communication between a UE and a BS.

[Table 3]

| - Scenario that supports a V2X operation operating based on only Uu interface<br>- In this scenario,<br>With respect to V2V and V2P, a UE transmits a V2X message to a BS through an uplink, and the BS transmits the V2X message to a plurality of UEs present in a local area through a downlink.<br>With respect to V2I, if a receiver is a BS-type RSU, a UE transmits a V2I message to a BS (BS-type RSU) through an uplink; and if a transmitter is a BS-type RSU, the BS (BS-type RSU) transmits the V2I message to a plurality of UEs present in a local area. |
|---|

(continued)

- With respect to V2P, a transmitter UE or receiver UE(s) may be a pedestrian UE.
- To support this scenario, the BS performs uplink reception and downlink transmission of a V2X message and uses a broadcast mechanism with respect to a downlink.

The following Table 4 and FIG. 3 may refer to a scenario for supporting a V2X operation that uses all of a UE interface and PC5 interface (or SL). Here, (a) of FIG. 3 illustrates Scenario 3A of Table 4 and (b) of FIG. 3 illustrates Scenario 3B of Table 4.

In detail, referring to (a) of FIG. 3, a UE may transmit a V2X message to other UEs through a sidelink. One of the UEs receiving the V2X message may transmit the V2X message to a BS through an uplink (UL). The BS may receive the V2X message and may transmit a message based on the V2X message to other neighboring UEs through a downlink (DL). Here, for example, the downlink transmission may be performed using a broadcast method.

Referring to (b) of FIG. 3, a UE may transmit a V2X message to a BS through an uplink (UL) and the BS may transmit the V2X message to at least one UE or RSU. In response thereto, the UE or the RSU may transmit the received message to a plurality of neighboring UEs through a sidelink (SL).

In (a) and (b) of FIG. 3, the V2X operation may be supported using all of communication between the BS and the UE and the sidelink.

[Table 4]

- Scenario in which a UE transmits a V2X message to other UEs through a sidelink

- Scenario 3A(Scenario 3A)

In this scenario, a UE transmits a V2X message to other UEs through a sidelink. One of a plurality of receiver UEs is a UE-type RSU and receives the V2X message through the sidelink and transmits the V2X message to a BS through an uplink. The BS receives the V2X message from the UE-type RSU and transmits the V2X message to a plurality of UEs present in a local area through a downlink.

To support this scenario, the BS performs uplink reception and downlink transmission of the V2X message, and uses a broadcast mechanism with respect to the downlink

- Scenario 3B(Scenario 3B)

In this scenario, a UE transmits a V2X message to a BS through an uplink. The BS transmits the V2X message to at least one UE-type RSU. The UE-type RSU transmits the V2X message to other UEs through a sidelink.

To support this scenario, the BS performs uplink reception and downlink transmission of the V2X message, and uses a broadcast mechanism with respect to the downlink.

As described above, the V2X communication may be performed through the BS and may be performed through direct communication between UEs. Here, if the BS is used, transmission and reception may be performed through a Uu link that is a communication interface between an LTE BS and UE in LTE-based V2X communication. Also, if the sidelink is used for the direct communication between UEs, transmission and reception may be performed through a PC5 link that is a communication interface between LTE UEs in the LTE-based V2X communication.

For example, even in an NR system, the V2X communication may be performed using communication between a UE and a BS and a sidelink between UEs. Here, there may be a difference between a communication (uplink/downlink) method between the BS and the UE in the NR system. For example, the communication methods may be similar in terms of some features and there may be some changes based on the NR system that is a new system. Also, for example, there may be a difference between the sidelink in the NR system and the sidelink in the existing system. That is, there may be some changes in the sidelink based on the NR system that is a new system by considering the aforementioned communication difference between the BS and the UE.

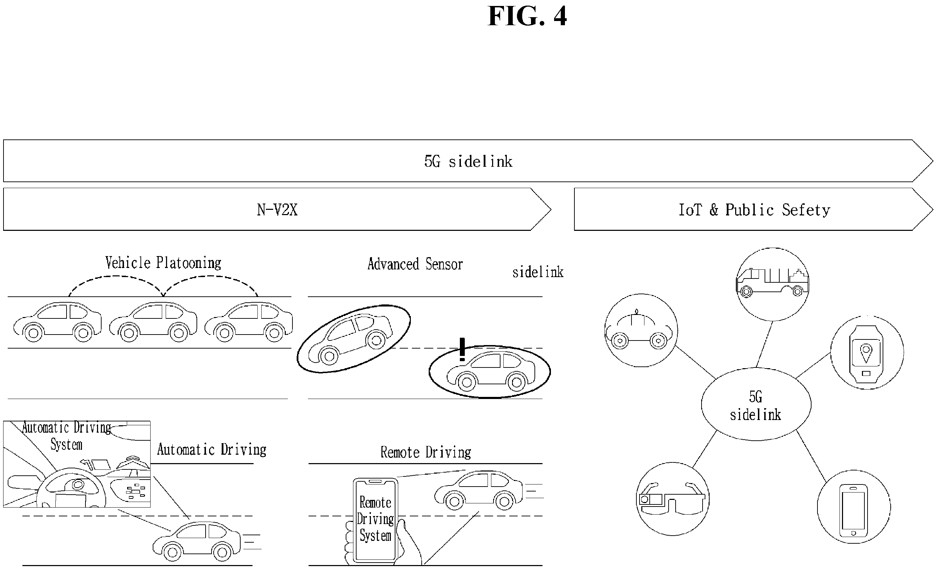

FIG. 4 illustrates an example of a service provided based on a sidelink to which the present disclosure may apply.

Referring to FIG. 4, a V2X related service or an Internet of Things (IoT) service may be provided based on a 5G sidelink. Here, for example, the 5G sidelink may be a concept that includes all of a sidelink based on an existing LTE system and a sidelink based on an NR system. That is, the 5G sidelink may be a service that is provided by considering the sidelink applied in each system.

For example, referring to FIG. 4, with respect to aV2X service, a vehicle platooning, an automatic driving, an advanced sensor, and a remote driving service may be provided. Here, the vehicle platooning may refer to technology that allows a plurality of vehicles to dynamically form a group and operate in a similar manner. Also, the automatic driving may refer to technology that drives a vehicle based on a complete automation and a semi-automation. Also, the advanced sensor may refer to technology that collects and exchanges data acquired from a sensor or a video image. Also, the remote driving may refer to technology for remotely controlling a vehicle and technology for an application. That is, the aforementioned services may be provided as a V2X-based service. Here, the services are provided as examples only and the present disclosure is not limited thereto. Here, requirements, such as ultra latency, ultra connectivity, low power, and high reliability, may be required to provide the V2X service. Therefore, the 5G sidelink may require an operation method for meeting the services and the requirements according thereto. A detailed method considering the requirements is described in the following.

Hereinafter, the physical resource structure of the NR system is described.

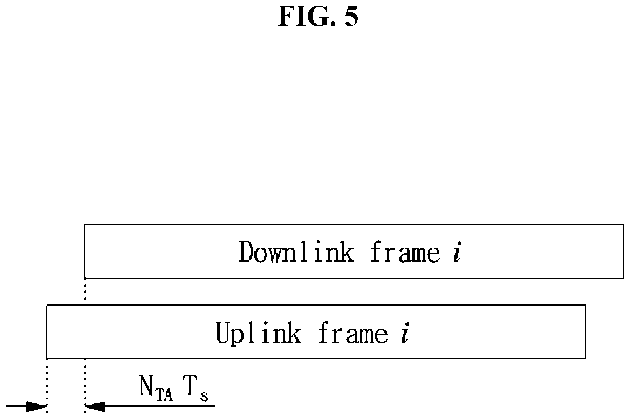

FIG. 5 illustrates examples of a frame structure for the NR system to which the present disclosure may be applied.

In NR, a basic unit of a time domain may be $T_c = 1/(\Delta f_{max} \cdot N_f)$. Here, $\Delta f_{max} = 480 \cdot 10^3$ and $N_f = 4096$. In LTE, $T_s = 1/(\Delta f_{ref} \cdot N_{f,ref})$, $\Delta f_{ref} = 15 \cdot 10^3 Hz$, and $N_{f,ref} = 2048$ may be defined as a reference time unit. The constant for the multiples relationship between the NR reference time unit and the LTE reference time unit may be defined as $\kappa = T_s/T_c = 64$.

Referring to FIG. 5, a time structure of a frame for a downlink/uplink (DL/UL) transmission may include $T_f = (\Delta f_{mas} N_f) \cdot T_s = 10ms$. Here, a single frame may include 10 subframes corresponding to $T_{sf} = (\Delta f_{mas} N_f/1000) \cdot T_s = 1ms$.

A number of consecutive OFDM symbols per subframe may be $N_{symb}^{subframe,\mu} = N_{symb}^{slot} N_{slot}^{subframe,\mu}$. Also, each frame may be divided in two half frames and the half frames may include 0~4 subframes and 5~9 subframes. Here, half frame 1 may include 0~4 subframes and half frame 2 may include 5~9 subframes.

Referring to FIG. 5, $N_{TA}$ shows a timing advance (TA) between the downlik (DL) and the uplink (UL). Here, a transmission timing of uplink transmission frame i is determined based on a downlink reception time at a UE according to the following Equation 1.

[Equation 1]

$$T_{TA} = (N_{TA} + N_{TA,offset}) \cdot T_C$$

In Equation 1, $N_{TA,offset}$ denotes a TA offset occurring due to a duplex mode difference and the like. Basically, in a frequency division duplex (FDD), $N_{TA,offset} = 0$. In a time division duplex (TDD), $N_{TA,offset}$ may be defined as a fixed value by considering a margin for a DL-UL switching time.

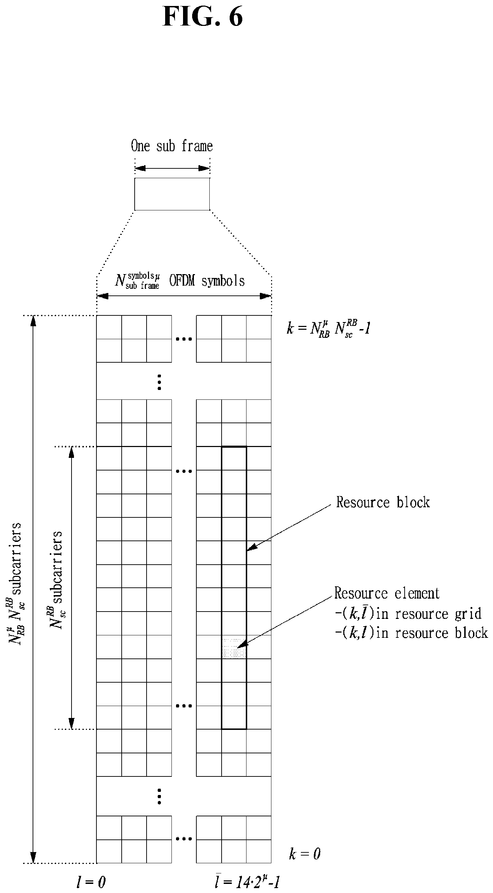

FIG. 6 illustrates an NR resource structure to which the present disclosure may apply.

A resource element within a resource grid may be indexed based on each subcarrier spacing. Here, a single resource grid may be generated for each antenna port and for subcarrier spacing. Uplink/downlink transmission and reception may be performed based on a corresponding resource grid.

A single resource block is configured on a frequency domain using 12 resource elements and configures an index n_PRB for a single resource block every 12 resource elements. An index of the resource block may be used in a specific frequency band or system bandwidth. The index for the resource block may be defined as shown in Equation 2. Herein, $N^{RB}_{sc}$ means the number of subcarriers per resource block and k means the subcarrier index.

[Equation 2]

$$n_{PRB} = \left\lfloor \frac{k}{N_{sc}^{RB}} \right\rfloor$$

Numerologies may be variously configured to meet various services and requirements of the NR system. For example, a plurality of subcarrier spacings (SCSs) may be supported, which differs from the existing LTE/LTE-A system that supports a single SCS.

A new numerology for the NR system that includes supporting the plurality of SCSs may operate in the frequency range or carrier, such as 3 GHz or less, 3 GHz~6 GHz, or 6 GHz~52.6 GHz, to solve an issue that a wide bandwidth is unavailable in the existing frequency range or carrier, such as 700 MHz or 2GHz. However, the scope of the present disclosure is not limited thereto.

Table 5 below shows an example of the numerology supported by the NR system.

[Table 5]

| u | $\Delta f = 2^u \cdot 15$ [kHz] | Cyclic prefix |
|---|---|---|
| 0 | 15 | Normal |

(continued)

| u | Δf=2^u·15 [kHz] | Cyclic prefix |
|---|---|---|
| 1 | 30 | Normal |
| 2 | 60 | Normal, Extended |
| 3 | 120 | Normal |
| 4 | 240 | Normal |

Referring to the Table 5, the numerologies may be defined based on an SCS, a cyclic prefix (CP) length, and a number of OFDM symbols per slot, which are used in an OFDM system. The aforementioned values may be provided to a UE through upper layer parameters, DL-BWP-mu and DL-BWP-cp (DL) and UL-BWP-mu and UL-BWP-cp (UL).

For example, referring to the following Table 5, if μ=2 and SCS = 60 kHz, a normal CP and an extended CP may be applied. In other numerology index, only the normal CP may be applied.

A normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for a length of another time section. Here, for coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having a number of symbols less by at least one symbol than that of the normal slot. For example, in the case of providing a low latency such as a Ultra-Reliable and Low Latency Communications (URLLC) service, a latency may decrease through the non-slot having the number of slots less than that of the normal slot. Here, the number of OFDM symbols included in the non-slot may be determined based on a frequency range. For example, a non-slot with 1 OFDM symbol length may be considered in the frequency range of 6 GHz or more. As another example, a number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7 as a non-slot standard, it is provided as an example only.

Also, for example, an SCS corresponding to μ=1 and 2 may be used in the unlicensed band of 6 GHz or less and an SCS corresponding to μ=3 and 4 may be used in the unlicensed band above 6 GHz.

[Table 6]

| u | N$^{slot}_{symb}$ | N$^{frame,u}_{slot}$ | N$^{subframe,u}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 6 shows, in the case of normal CP, a number of OFDM symbols per slot ( $N^{symb,\mu}_{slot}$ ), a number of slots per frame ( $N^{frame,\mu}_{slot}$ ), and a number of slots per subframe ( $N^{subframe,\mu}_{slot}$ ) for each SCS setting parmeter μ, as provided by Table 6. Here, in Table 6, the values are based on the normal slot having 14 OFDM symbols.

[Table 7]

| u | N$^{slot}_{symb}$ | N$^{frame,u}_{slot}$ | N$^{subframe,u}_{slot}$ |
|---|---|---|---|
| 2 | 12 | 40 | 4 |

Table 7 shows, in the case the extended CP may be applied ($\mu$ = 2 and SCS = 60 kHz), a number of slots per frame and a number of slots per subframe based on the normal slot of which the number of OFDM symbols per slot ($N_{slot}^{symb,\mu}$) is 12.

Also, as described above, a single subframe may correspond to 1 ms on a time axis. Also, a single slot may correspond to 14 symbols on the time axis. Also, for example, a single slot may correspond to 7 symbols on the time axis. Therefore, a number of slots and a number of symbols available in 10ms corresponding to a single radio frame may be differently set. Table 8 shows a number of slots and a number of symbols according to each SCS. Here, for example, an SCS of 480 kHz may not be considered and the present disclosure is not limited thereto.

[Table 8]

| SCS | Number of Slots within 10ms (14 symbols per slot) | Number of Slots within 10ms (7 symbols per slot) | Number of symbols within 10ms |
|---|---|---|---|
| 15 kHz | 10 | 20 | 140 |
| 30 kHz | 20 | 40 | 280 |
| 60 kHz | 40 | 80 | 560 |
| 120 kHz | 80 | N/A | 1120 |
| 240 kHz | 160 | N/A | 2240 |
| 480 kHz | 320 | N/A | 4480 |

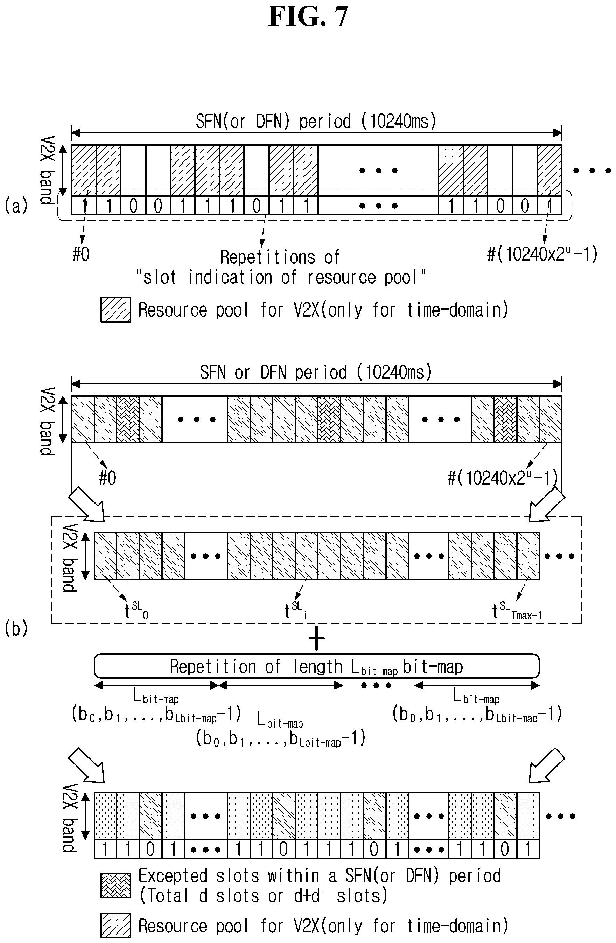

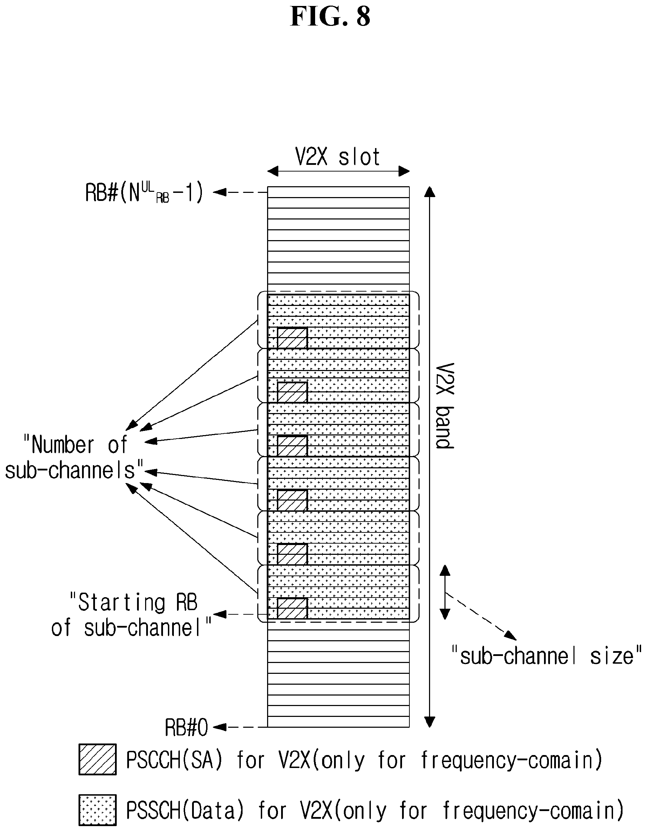

FIGS. 7 and 8 illustrate examples of V2X resource pool configuration to which the present disclosure may apply.

Referring to FIGS. 7 and 8, a method of configuring a resource pool for a control channel (PSCCH) through which scheduling assignment (SA) is transmitted and a data channel (PSSCH) through which data related thereto is transmitted in V2X is described. Here, the resource pool may refer to a set of resource candidates available for transmission of SA and/or data. Each resource pool may be called a slot pool in a time domain and may also be called a resource block pool in a frequency domain. Here, the resource pool as in the examples of FIGS. 7 and 8 may be one for vehicle (V)-UE in V2X. Also, the resource pool configuration method as in the examples of FIGS. 7 and 8 are provided as an example only and the resource pool may be configured using another method.

The resource pool as in the examples of FIGS. 7 and 8 may be defined in a UE autonomous resource selection mode (or mode 2).

In a BS resource scheduling mode (or mode 1), all of sidelink slots (e.g., corresponding to all of uplink slots in NR) in the time domain and resources corresponding to all of resource blocks (RBs) within V2X carrier or band in the frequency domain may be a set of resource candidates available for transmitting SA and/or data. Also, even in the BS resource scheduling mode (or mode 1), a set of resource candidates available for transmitting SA and/or data may be configured by separately defining the resource pool as in the UE autonomous resource selection mode (or mode 2).

That is, the resource pool according to the present disclosure described with reference to FIGS. 7 and 8 may be defined in the UE autonomous resource selection mode (or mode 2) and/or the eNodeB resource scheduling mode (or mode 1).

Hereinafter, the slot pool corresponding to the resource pool in the time domain will be further described.

FIG. 7 illustrates slots in which the resource pool is configured in the time domain, with respect to the resource pool. Referring to FIG. 7, slots for the resource pool for V2X may be defined by indicating a repetition of a bitmap with respect to all of the slots excepting specific slots. The slots for the resource pool for V2X may be slots in which transmission and/or reception of SA and/or data is allowed for the resource pool in V2X.

Here, slots to be excepted from bitmap repetitions may include slots used for transmission of a Sidelink Signal Block (SSB) including a Primary Sidelink Synchronization Signal (PSSS), a Secondary Sidelink Synchronization Signal (SSSS), and a Physical Sidelink Broadcast Channel (PSBCH). Also, the excepted slots may further include downlink (DL) slots or flexible slots, not uplink (UL) slots available as sidelink (SL) slots in TTD. Here, the excepted slots are not limited to the aforementioned example.

For example, excepted slots within a system frame number (SNF) or a D2D frame number (DFN) period may include d non-uplink slots and slots for SSB. Also, the excepted slots may further include d' slots that are additionally excepted such that a bitmap with a length of Lbitmap may be repeatedly applied by an integer multiple within the SFN or DFN period. Here, the excepted slots are not limited to the aforementioned example.

Also, the repeatedly applied bitmap may be indicated with upper layer signaling (signaling field "slot indication of resource pool" in FIG. 7) such as RRC and the like. A length of the signaling field may be 16, 20, or 100, but is not limited thereto. If the bitmap value is 1, it may indicate a slot for the resource pool. If the bitmap value is 0, it may indicate a slot that does not belong to the resource pool. Here, a value of u of FIG. 7 may follow a value defined in Table 5 to Table 7 as a value according to a Subcarrier Spacing (SCS).

Next, the resource block pool corresponding to the resource pool in the frequency domain will be further described.

FIG. 8 illustrates slots in which the resource pool is configured in the frequency domain. Referring to FIG. 8, a PSCCH that transmits SA and a PSSCH that transmits data within the resource pool may be simultaneously transmitted in a single sub-channel. Here, the PSSCH may be transmitted over the entire sub-channel, whereas the PSCCH may be transmitted in a portion of the sub-channel.

Referring to FIG. 8, in a slot in which the resource pool is configured in the time domain for V2X "Starting RB of sub-channels" may be defined based on a single RB unit with respect to all of RBs (RB#0 to $RB\#\,(N_{RB}^{UL} - 1)$) in the frequency domain (here, $N_{RB}^{UL}$ denotes a total number of RBs corresponding to a system bandwidth for uplink (LTL) and V2X for a sidelink is defined in a UL band and thus, UL may be replaced with SL (i.e., $N_{RB}^{SL}$ may be applied instead of $N_{RB}^{UL}$). The signaling field "Starting RB of sub-channels" may be indicated through upper layer signaling, such as RRC and the like. Consecutive RBs corresponding to a total number of K sub-channels starting from RB indicated with such "Starting RB of sub-channels" belong to the resource pool. Here, a number of RBs that constitute a single sub-channel may be indicated with a signaling field "Sub-channel size" and the number of K sub-channels may be indicated with a signaling field "Number of sub-channels" through upper layer signaling such as RRC.

For example, "Sub-channel size" $N_{subchannel}$ may be 10, 15, 20, 25, 50, 75, or 100 RBs, but without being limited thereto, 4, 5, or 6 RBs may be used. Also, referring to FIG. 8, the PSCCH for SA allocated to a portion of the sub-channel may be allocated to X RBs within the sub-channel. Here, $X \leq N_{Subchannel}$.

Positioning technology applied below is being further improved using long term evolution (LTE)-based NR wireless technology and, in the case of being applied for commercial purpose, includes technologies for satisfying an error of up to 3 m indoors and an error of up to 10 m outdoors for 80% of users within coverage. To this end, for uplink and/or downlink, the following various technologies are being considered, including arrival time-based technology and departure/arrival angle-based technology.

As a downlink-based method, time-based technology includes a DL-time difference of arrival (TDOA) method and angle-based technology includes a DL-angle of departure (DL-AoD) method. For example, when estimating a location of a UE based on DL-TDOA, a time difference of arrival between signals transmitted from different transmission points may be calculated and the location of the UE may be estimated through a time difference of arrival value and location information of each transmission point. Also, for example, when estimating a location of a UE based on DL-AoD, the location of the UE may be estimated by verifying an angle of departure of a signal transmitted to the UE and by verifying a direction in which the signal is transmitted based on a location of a corresponding transmission point.

Also, as an uplink-based method, time-based technology includes a UL-TDOA method and angle-based technology includes a DL-angle of arrival (AOA) method. For example, when estimating a location of a UE based on UL-TDOA, a time difference for a signal transmitted from the UE to arrive at each transmission point may be calculated and the location of the UE may be estimated through a time difference of arrival value and location information of each transmission point. Also, for example, when estimating a location of a UE based on DL-AoA, the location of the UE may be estimated by verifying an angle of arrival of a signal transmitted from the UE and by verifying a direction in which the signal is transmitted based on a location of a corresponding transmission point.

Also, a downlink and uplink-based method includes a multi-cell Round-Trip Time (RTT) method, an RTT method between one or more adjacent gNodeBs and/or Transmission Reception Points (TRPs) for NR uplink and downlink positioning, and an Enhanced Cell ID (E-CID) method. For example, when estimating a location of a UE based on multi-cell RTT, a time used to transmit a signal and to receive a response in a plurality of cells (i.e., RTT) may be measured and the location of the UE may be estimated through location information of the plurality of cells. Also, the location of the UE may be estimated by verifying an RTT signal in gNodeBs and/or TRPs. Also, when estimating a location of a UE based on E-CID, the location of the UE may be estimated through cell location information by measuring an angle of arrival and reception strength and by verifying each cell ID.

To realize the aforementioned technologies, an LTE downlink-based positioning reference signal (PRS) is being newly discussed as a "DL PRS" modified according to an NR downlink structure. Additionally, for uplink, it is being evolved into an "SRS for positioning" that is a reference signal improved by considering a sounding reference signal (SRS), which is an NR-based uplink reference signal considering MIMO, up to positioning.

Also, to provide an improved solution in association with a positioning operation, additional requirements are being considered with respect to high accuracy, low latency, network efficiency (e.g., scalability, RS overhead, etc.), and UE efficiency (e.g., power consumption, complexity, etc.) for horizontal and vertical positioning.

For example, requirements may be considered such that a positioning operation may have high accuracy considering an industrial Internet of things IoT (IIoT) scenario. To this end, a DL/UL location reference signal, signaling/procedure for accuracy improvement, reduced latency, and a method of improving network efficiency and UE efficiency may be considered.

Therefore, a work of improving performance of NR-based positioning technologies for higher accuracy and lower latency and network/UE efficiency is being applied in commercial use cases, such as IoT devices for smart home or wearable, and IIoT use cases, such as IoT devices in smart factory.

In this regard, the work aims to increase accuracy with an error of up to 1 m for commercial use cases and to increase accuracy with an error of up to 0.2 m for IIoT use cases, and to further reduce a delay time from within the existing 100 ms to within 10 ms.

Here, the IIoT scenario considering devices for smart factory indoors (indoor factory devices) may be as shown in Table 9 below. Also, for example, Table 10 below shows configuration for simulation considering the IIoT scenario. Specifically, in Table 10, a hall size, a base station (BS) location, and a room height may be set in consideration of the IIoT scenario, such as smart factory. Based thereon, a transmission and reception operation of a base station may be verified. However, it is provided as an example only and the present disclosure may not be limited to the aforementioned configuration.

In detail, the IIoT scenario may consider a dense clutter case (dense) and a sparse clutter case in an internal environment. That is, it may be distinguished depending on how many clutters are present in the internal environment. Also, as the IIoT scenario, a case in which an antenna height is higher than the average clutter height and a case in which the antenna height is lower than the average clutter height may be considered. That is, the IIoT scenario may be as shown in Table 9 below, considering the aforementioned cases.

That is, InF-SL represents a scenario considering a case with sparse clutter and in which both transmitting and receiving antennas of a base station have a lower height than the average clutter antenna height in an indoor factory environment, such as a smart factory. Also, InF-DL represents a scenario considering a case with dense clutter and in which both transmitting and receiving antennas of the base station have a lower height than the average clutter antenna height in the indoor factory environment, such as a smart factory.

Meanwhile, InF-SH represents a scenario considering a case with sparse clutter and in which transmitting or receiving antenna of the base station has a higher height than the average clutter antenna height in the indoor factory environment, such as a smart factory. Also, InF-DH represents a scenario considering a case with dense clutter and in which transmitting or receiving antenna of the base station has a higher height than the average clutter antenna height in the indoor factory environment, such as a smart factory.

Additionally, InF-HH represents a scenario considering a case in which both transmitting and receiving antennas of the base station have a higher height than the average clutter antenna height regardless of clutter density, in the indoor factory environment, such as a smart factory.

Here, a clutter refers to a form in which base stations are intensively arranged at regular intervals in a certain space. For example, the clutter may be implemented with 18 base stations as shown in Table 10 in an internal environment, but it is provided as an example only and the present disclosure is not limited thereto.

Also, as described above, considering the clutter density and the antenna height between a base station and a clutter in the scenario is because, as characteristic or interference of radio waves varies accordingly, positioning technology for satisfying various performance requirements (accuracy, latency, network/UE efficiency, etc.) required for positioning may slightly vary.

However, in actual application, common positioning technology capable of covering all requirements in the above five scenarios may be applied. Positioning technology to be described herein below may be applicable to all of the five scenarios. That is, positioning may be performed by applying the following positioning technology to be described herein to all IIoT devices that operate based on NR in an indoor factory environment, such as a smart factory.

[Table 9]

| - InF-SL : Indoor Factory with Sparse clutter and Low base station height (both Tx and Rx are below the average height of the clutter) |
| --- |

(continued)

| - InF-DL : Indoor Factory with Dense clutter and Low base station height (both Tx and Rx are below the average height of the clutter)<br>- InF-SH : Indoor Factory with Sparse clutter and High base station height (Tx or Rx elevated above the clutter)<br>- InF-DH : Indoor Factory with Dense clutter and High base station height (Tx or Rx elevated above the clutter)<br>- InF-HH : Indoor Factory with High Tx and High Rx (both elevated above the clutter) |
|---|

[Table 10]

| Layout | Hall size | InF-SH:<br>　(baseline) 300x150 m<br>　(optional) 120x60 m<br>InF-DH:<br>　(baseline) 120x60 m<br>　(optional) 300x150 m |
|---|---|---|
| | BS locations | 18 BSs on a square lattice with spacing D, located D/2 from the walls.<br>- for the small hall (L=120m x W=60m): D=20m<br>- for the big hall (L=300m x W=150m): D=50m<br> |
| | Room height | 10m |

In the following, a method of generating a positioning reference signal (PRS) in consideration of positioning requirements required by considering the aforementioned IIoT scenario and a new application is described.

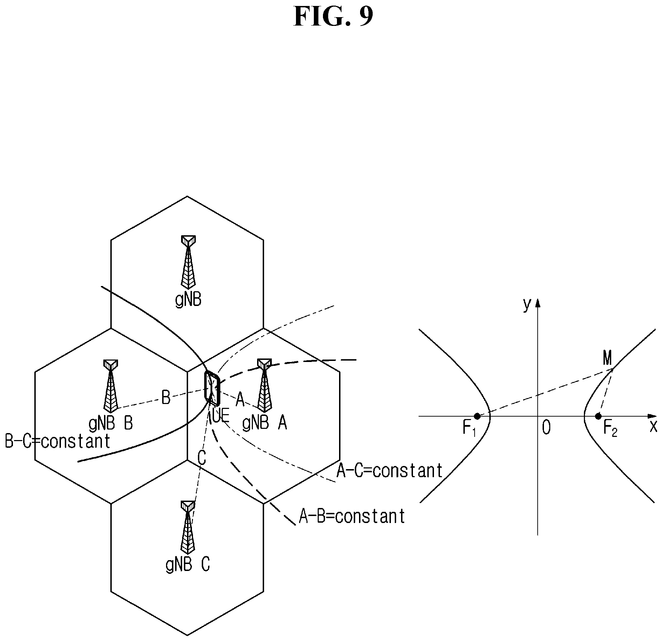

FIG. 9 illustrates a method of performing positioning based on an observed time difference of arrival (OTDOA) to which the present disclosure may apply.

OTDOA may be a method of measuring a location by tracking a signal transmitted to a ground station through a communication satellite in an LTE and/or NR system. That is, OTDOA is based on measuring a time difference of arrival between wireless signals transmitted at various locations. For example, a plurality of cells may transmit a reference signal (RS) and a UE may receive the reference signal. Since a distance between each of the plurality of cells and a location of the UE is different, a time of arrival at which a reference signal transmitted from each of the plurality of cells is received at the UE may be different. Here, the UE may calculate a time difference for a signal received from each cell and may transmit calculated information to a network. The network may combine the time difference with antenna location information of each cell to calculate the location of the UE. Here, at least three cells may be used to measure the location of the UE.

Also, for example, a difference in point in time at which the UE receives a reference signal from each of a pair of base stations (gNodeBs/eNodeBs) is defined as a reference signal time difference (hereinafter, RSTD). Here, location measurement by the RSTD may be performed based on a downlink signal. The UE may estimate a location based on TDOA measurement of special reference signals received from other base stations (gNodeBs/eNodeBs).

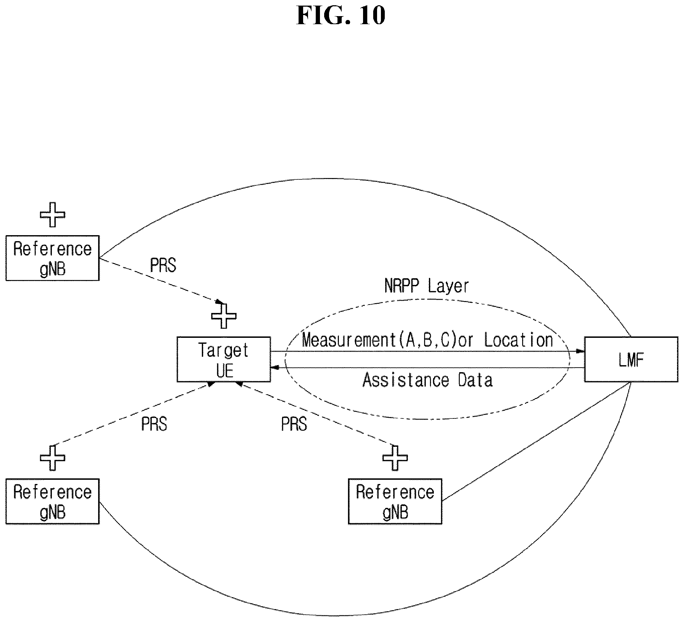

FIG. 10 illustrates a control plane and user plane configuration diagram for present invention-related to which the present disclosure may apply. For example, positioning technology may be defined as at least one of enhanced cell ID (E-CID), observed time difference of arrival (OTDOA) and A-global navigation satellite system (GNSS). Here, the aforementioned positioning technology may simultaneously support positioning solutions of control plane and user plane. LTE and/or NR network-based positioning function may be supervised by a location management function (LMF). Here, control plane positioning and user plane positioning may be performed through the LMF. Here, the LMF may be controlled at a network level and may interwork with a base station through a mobility entity (e.g., access and mobility management function (AMF)).

As another example, the LTE and/or NR network-based positioning function may be controlled under supervision of Evolved-Serving Mobile Location Centre (E-SMLC)/Secure User Plane Location (SUPL) Location Platform (SLP) based on an LTE positioning protocol (LPP). Here, positioning may be performed on the control plane through the E-SMLC and positioning may be performed on the user plane through the SLP and each may be controlled at a network level and may interwork with the base station through a mobility entity (e.g., mobility management entity (MME)).

For example, in the LTE system, positioning may be performed through location estimation based on downlink or positioning may be performed through location estimation based on a cell ID, based on a time difference. In the NR system, positioning may be performed by considering DL-based location estimation (e.g., PRS) and UL-based location estimation (e.g., SRS for positioning). Also, the positioning may be performed through a positioning operation based on a signal exchange time for a plurality of cells as a round trip time (RTT) or through a positioning operation based on a cell ID. Also, the positioning may be performed through a positioning operation based on a time difference between received signals. Also, since a new communication system performs communication based on beams, a positioning operation may be performed based on an angle difference for each beam. Downlink/uplink reference signals and UE/base station operations as described above may be as shown in Table 11 and Table 12 below.

[Table 11]

| DL/UL Reference Signals | UE Measurements | To facilitate support of the following positioning techniques |
|---|---|---|
| Release-16 DL PRS | DL RSTD | DL-TDOA |
| Release-16 DL PRS | DL PRS RSRP | DL-TDOA, DL-AoD, Multi-RTT |
| Release-16 DL PRS / Release-16 SRS for positioning | UE Rx-Tx time difference | Multi-RTT |
| Release-15 SSB / CSI-RS for RRM | SS-RSRP(RSRP for RRM), SS-RSRQ(for RRM), CSI-RSRP (for RRM), CSI-RSRQ(for RRM), SS-RSRPB(for RRM) | E-CID |

[Table 12]

| DL/UL Reference Signals | gNB Measurements | To facilitate support of the following positioning techniques |
|---|---|---|
| Release-16 SRS for positioning | UL RTOA | UL-TDOA |
| Release-16 SRS for positioning | UL SRS-RSRP | UL-TDOA, UL-AoA, Multi-RTT |
| Release-16 SRS for positioning, Release-16 DL PRS | gNB Rx-Tx time difference | Multi-RTT |
| Release-16 SRS for positioning, | AoA and ZoA | UL-AoA, Multi-RTT |

Here, the terms in Table 11 and Table 12 may be as follows.

RSTD (Reference Signal Time Difference)

RSRP (Reference Signal Received Power)

RTOA (Relative Time Of Arrival)

RSRQ (Reference Signal Received Quality)

RSRPB (Reference Signal Received Power per Branch)

RRM (Radio Resource Management)

CSI-RS (Channel State Information Reference Signal)

Here, the RSTD may represent a difference in transmission time between reference signals and the RTOA may represent a relative time value at which a signal arrived. Positioning may be performed based on location information of a transmission point by calculating a relative time difference value based on a location of a transmission point at which a reference signal is transmitted and a transmission time difference. Also, the RSRP represents power of a received reference signal and the RSRPB represents strength of a reference signal measured at each branch. The RSRQ represents quality of a received reference signal. Whether a positioning operation is possible may be verified by verifying the power and the quality of the received reference signal through the RSRP and the RSRQ. Also, the RRM represents performing resource management and verifies resources for positioning.

Therefore, in a new communication system, positioning may be performed based on at least one of downlink/uplink, time difference/angle difference, RTT, and cell ID. Here, describing a downlink PRS (DL PRS) for the positioning, a DL PRS resource set may be configured in a single base station (or transmission reception point (TRP)). Here, the DL PRS resource set may represent a set of DL PRS resources. Each DL PRS resource within the DL PRS resource set may have each corresponding DL PRS resource ID. For example, in the new communication system (e.g., NR), each base station (or TRP) may perform communication using a plurality of beams. Here, each DL PRS resource ID may correspond to each corresponding beam transmitted from a single base station (or TRP). That is, DL PRS resources in the DL PRS resource set may correspond to beams, respectively.

Here, DL PRS configuration may include a DL PRS transmission schedule. Through this, the base station (or TRP) may indicate the DL PRS configuration to the UE. Therefore, the UE may verify a DL PRS based on the indicated DL PRS configuration without performing blind detection. Numerologies for a DL PRS may be the same as numerologies for data transmission. For example, a CP length and a subcarrier spacing (SCS) for the DL PRS may be the same as a CP length and SCS for the data transmission.

Also, in at least one base station (or TRP), DL PRS resource sets may be transmitted through a positioning frequency layer. Here, since DL PRS resource sets are transmitted through the same positioning frequency layer, an SCS, a CP type, a center frequency, point A, a bandwidth and a start physical resource block (PRB), and a comb size may be configured to be the same. Here, the point A may be a value that indicates a location of resource block 0 (RB 0). The DL PRS resource sets may be transmitted through the same frequency layer. Here, a DL PRS sequence may be a binary sequence as a gold sequence, which may be the same as a DL PRS of the existing system. The DL PRS sequence ID may be 4096. This may be greater than a sequence (1024) for cell ID in NR. Also, the DL PRS may be modulated based on quadrature phase shift keying (QPSK) and may be transmitted based on a cyclic-prefix orthogonal frequency division multiplexing (CP-OFDM) method. Also, as a time axis resource for DL PRS, 12 symbols may be configured within a single slot and the comb size of up to comb-12 may be supported.

More details may be as shown in Table 13 below. That is, an interval at which a PRS is allocated on the frequency axis may vary based on the comb size. In the LTE system, DL PRSs may be transmitted using all symbols within a single slot. However, in the new communication system, i.e., the NR system, DL PRSs may be transmitted based on the different number of symbols as shown in Table 13 below.

[Table 13]

|         | 2 symbols | 4 symbols   | 6 symbols       | 12 symbols                     |
|---------|-----------|-------------|-----------------|--------------------------------|
| Comb-2  | {0,1}     | {0,1,0,1}   | {0,1,0,1,0,1}   | {0,1,0,1,0,1,0,1,0,1,0,1}          |
| Comb-4  | NA        | {0,2,1,3}   | NA              | {0,2,1,3,0,2,1,3,0,2,1,3} }    |
| Comb-6  | NA        | NA          | {0,3,1,4,2,5}   | {0,3,1,4,2,5,0,3,1,4,2,5}      |
| Comb-12 | NA        | NA          | NA              | {0,6,3,9,1,7,4,10,2,8,5,11}    |

A DL PRS transmission period may be configured for each DL PRS resource set. For example, each base station (or TRP) may configure a plurality of DL PRS resource sets. In the same base station (or TRP), a plurality of DL PRS resource sets having different periods may be present and the period may be variously configured.

Resources allocated for DL PRS transmission (hereinafter, DL PRS resource) may be repeated 1, 2, 4, 6, 8, 16, or 32 times. An interval between the respective repeated DL PRS resources may be set to one of 1, 2, 4, 8, 16, and 32 slots, but is not limited to the aforementioned embodiment.

Regarding frequency allocation for DL PRS resources, granularity of DL PRS bandwidth may be 4 PRBs. A start PRB may be indicated to the UE using a parameter and the UE may determine the start PRB based on the indicated parameter. For example, a minimum bandwidth for DL PRS may be 24 PRBs and a maximum bandwidth may be 272 PRBs.

Regarding a DL PRS, resource element (RE) offset may be configured on a frequency axis. Here, the RE offset may be configured to have a constant offset on the frequency axis based on a comb pattern, based on a first symbol of the DL PRS resource. The first symbol may be configured in the UE. Then, remaining symbols may be determined based on the RE offset, based on the first symbol.

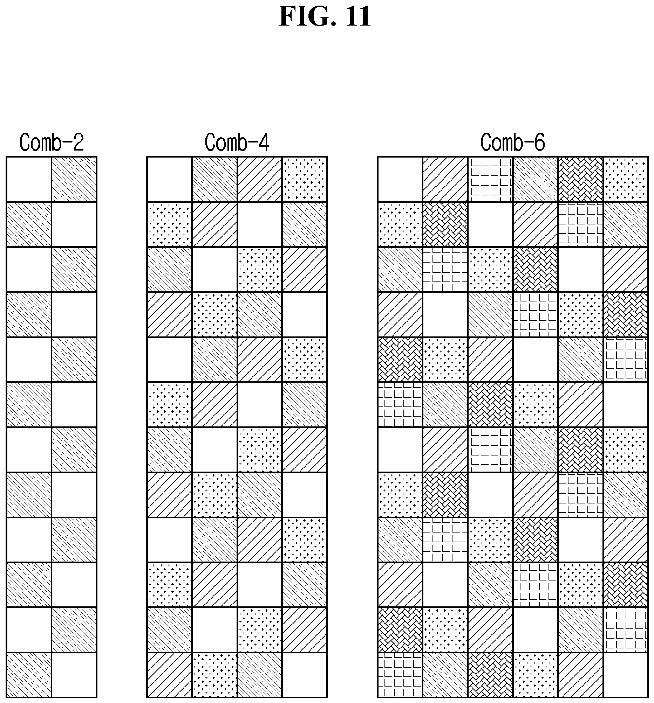

FIG. 11 illustrates a comb pattern applicable to the present disclosure.

Referring to FIG. 11, a DL PRS RE pattern in a case in which a comb size and the number of symbols are the same is described as an example.

In detail, as a case with comb size = 2 (Comb-2), a case of being allocated to two symbols (0,1) may be considered. Here, RE offset may be {0,1}. That is, DL PRS may be allocated to a first symbol and a second symbol according to RE offset {0,1} and the frequency axis may be allocated based on comb size 2. As a case with comb size = 4 (Comb-4), a case of being allocated to four symbols (0,1,2,3) may be considered. Here, RE offset may be {0,2,1,3}. That is, DL PRSs may be allocated to first to fourth symbols according to RE offset {0,2,1,3} and the frequency axis may be allocated based on comb size 4. As a case with comb size = 6 (Comb-6), a case of being allocated to six symbols (0,1,2,3,4,5) may be considered. Here, RE offset may be {0,3,1,4,2,5}. That is, DL PRSs may be allocated to first to sixth symbols according to RE offset {0,3,1,4,2,5} and the frequency axis may be allocated based on comb size 6.

The present invention may support DL PRS muting. When a DL PRS to be muted is indicated to the UE, the UE may mute the corresponding DL PRS. Here, a DL PRS muting bitmap for a DL PRS resource set may be configured and, based thereon, the DL PRS to be muted may be indicated to the UE. Here, each bit of the DL PRS muting bitmap (hereinafter, option 1 bitmap) may correspond to each occasion or consecutive instances within the DL PRS resource set. Here, when a specific bit indicates muting, all DL PRSs within an occasion or consecutive instances corresponding to the specific bit may be muted.

Also, a bitmap indicating muting (hereinafter, option 2 bitmap) may indicate muting for each DL PRS resource within an occasion or instance for a single period. Each bit of the bitmap may correspond to a repetition index of each DL PRS resource within the occasion or instance for a single period. That is, each bit may correspond to one repetition of DL PRS within each one DL PRS period and muting may be indicated by each bit. For example, the bitmap may be set to one of 2, 4, 8, 16, and 32 bits.

Regarding the muting option, at least one of the option 1 bitmap and the option 2 bitmap may be configured. For example, only the option 1 bitmap may be configured. Also, for example, only the option 2 bitmap may be configured. Also, for example, both the option 1 bitmap and the option 2 bitmap may be configured. Here, when both the option 1 bitmap and the option 2 bitmap are configured, all DL PRS resources within an occasion for which muting is indicated based on the option 1 bitmap may be muted and DL PRS resources for which muting is indicated based on the option 2 bitmap in the occasion for which muting is not indicated based on the option 1 bitmap may be muted.

In a new communication system (e.g., NR), a DL PRS may be generated and positioning may be performed. Here, referring to the aforementioned Table 13, the number of fully orthogonal resources within a single slot may be 12. Here, as a case with comb size = 2 (comb-2), when DL PRSs are allocated to two symbols, there may be two orthogonal resources and six resources may be additionally distinguished based on symbol offset. Also, as a case with comb size = 4 (comb-4), when DL PRSs are allocated to four symbols, there may be four orthogonal resources and three resources may be additionally distinguished based on symbol offset. Also, as a case with comb size = 6 (comb-6), when DL PRSs are allocated to six symbols, there may be six orthogonal resources and two resources may be additionally distinguished based on symbol offset. Also, as a case with comb size = 12 (comb-12), when DL PRSs are allocated to 12 symbols, there may be 12 orthogonal resources and only one resource may be additionally distinguished based on symbol offset.

Regarding the DL PRS, in the new communication system, up to 64 TRPs may be supported in a single frequency layer and 64 resources may be allocated for each TRP. Considering this, the number of DL PRS IDs may be 4096 (=64*64).

For example, as a case in which the UE operates based on the IIoT scenario in the band of 120 kHz, 18 TRPs may be supported in consideration of scenarios shown in the aforementioned Table 9 and Table 10. Here, considering that 64 beams are supported per TRP, each of 64 resources may be supported for DL PRS. Therefore, a total of 1152 (=18*64) resources may be required. Here, since fully orthogonal resources in one slot are 12 symbols, 96 (1152/12=96) slots may be required in consideration of 1152 resources. Here, 96 slots may correspond to 12 ms in 120 Khz.

Meanwhile, as described above, considering the IIoT scenario, positioning-related delay requirements may be set to 10 ms or less. Therefore, if the (96) slots corresponding to 12 ms are used, the delay requirements (10 ms) may not be met. That is, a method of efficiently allocating DL PRS resources may be required.

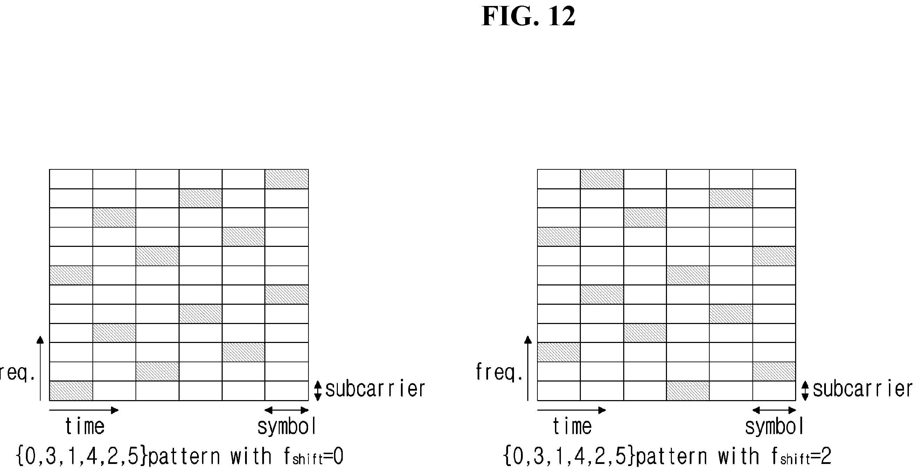

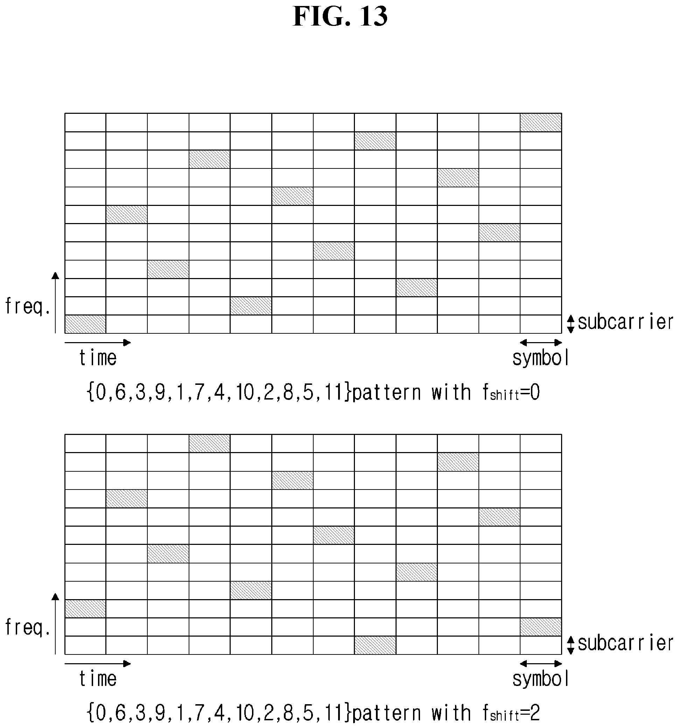

FIGS. 12 and 13 illustrate a method of performing a cyclic prefix based on a DL PRS allocation pattern applicable to the present disclosure. In the DL PRS allocation pattern, orthogonality may be broken due to collision when performing both frequency axis cyclic prefix and time axis cyclic prefix. Therefore, when performing cyclic prefix based on the DL PRS allocation pattern, only the frequency axis cyclic prefix may be possible.

Referring to FIG. 12, as a case with comb size = 6, when a pattern in which DL PRSs are allocated to six symbols is {0,3,1,4,2,5}, six patterns may be possible with the frequency axis cyclic prefix. FIG. 12 may be a resource allocation method when f=0 and when f=2.

Referring to FIG. 13, as a case with comb size = 12, when a pattern in which DL PRSs are allocated to 12 symbols is {0,6,3,9,1,7,4,10,2,8,5,11}, 12 patterns may be possible with the frequency axis cyclic prefix. FIG. 13 may be a resource allocation method when f=0 and when f=2.

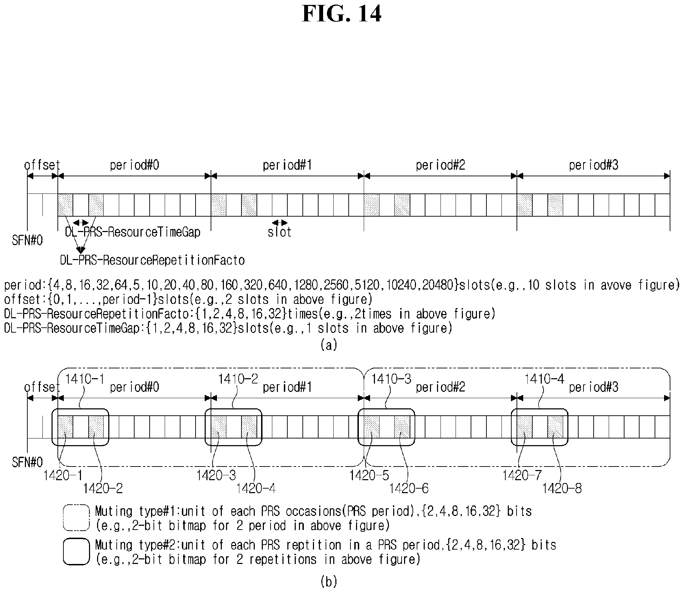

FIG. 14 illustrates a DL PRS resource allocation method applicable to the present disclosure.

In a communication system according to the present invention, DL PRS muting may be supported. If a DL PRS to be muted is indicated to a UE, the UE may mute the corresponding DL PRS. Here, a DL PRS muting bitmap for a DL PRS resource set may be configured and, based thereon, the DL PRS to be muted may be indicated to the UE. Here, each bit of the DL PRS muting bitmap (hereinafter, option 1 bitmap) may correspond to each occasion or consecutive instances within the DL PRS resource set. Here, each DL PRS occasion may correspond to all DL PRS resources (including repetitive transmission) within each DL PRS period. That is, a single DL PRS occasion may correspond to a single DL PRS period.

Here, when a specific bit indicates muting, all DL PRSs within an occasion or consecutive instances corresponding to the specific bit may be muted. For example, as described above, a DL PRS of the existing system (LTE) may also be muted on an occasion basis. As another example, a bitmap indicating muting (hereinafter, option 2 bitmap) may indicate muting for each DL PRS resource within an occasion or instance for a single period. Here, each bit of the bitmap may correspond to a repetition index of each DL PRS resource within the occasion or instance for a single period (i.e., each bit corresponds to one repetition of DL PRS within each single DL PRS period) and muting may be indicated by each bit. Here, the bitmap may be set to one of 2, 4, 8, 16, and 32 bits.

For example, regarding the muting option, at least one of the option 1 bitmap and the option 2 bitmap may be configured. For example, only the option 1 bitmap may be configured. Also, for example, only the option 2 bitmap may be configured. Also, for example, both the option 1 bitmap and the option 2 bitmap may be configured. Here, when both the option 1 bitmap and the option 2 bitmap are configured, all DL PRS resources within an occasion for which muting is indicated based on the option 1 bitmap may be muted and DL PRS resources for which muting is indicted based on the option 2 bitmap in the occasion for which muting is not indicated based on the option 1 bitmap may be muted.

Referring to (a) of FIG. 14, the UE may verify a DL PRS period and offset indicated based on DL PRS configuration. In (a) of FIG. 14, the period is configured with 10 slots and the offset is configured with 2 slots. However, it is provided as an example only and the present disclosure is not limited to the aforementioned embodiment. Also, the UE may verify a DL PRS resource repetition pattern within a period through "DL-PRS-ResourceRepetitionFactor" indicated based on the DL PRS configuration. Also, although "DL-PRS-ResourceRepetitionFactor" is configured to indicate repeating twice, it is provided as an example only and the present disclosure is not limited to the aforementioned embodiment. The UE may verify a time interval between DL PRS resources within a single period through "DL-PRS-Resource-TimeGap" indicated based on the DL PRS configuration. For example, although "DL-PRS-ResourceTimeGap" is configured as a single slot in (a) of FIG. 14, it is provided as an example only and the present disclosure is not limited to the aforementioned embodiment.

Referring to (b) of FIG. 14, the UE may perform muting based on the option 1 bitmap. For example, the option 1 bitmap may include 2 bits and be a muting bitmap for two periods and each bit may correspond to a single occasion corresponding to a single period. Here, the UE may perform muting for a corresponding occasion based on each bit. Also, for example, the option 2 bitmap may include 2 bits and each DL PRS repetition within a single period may correspond to each bit.

When muting is indicated to the UE based on the option 1 bitmap, the UE may recognize that all DL PRSs of a corresponding occasion are muted, and may perform positioning. On the contrary, in the case of the option 2 bitmap, DL PRSs for which muting is indicated through the option 2 bitmap in an occasion for which muting is not indicated to the UE based on the option 1 bitmap may be muted. That is, the UE may perform positioning for DL PRS resources indicated to not be muted based on both the option 1 bitmap and the option 2 bitmap among DL PRSs. As a detailed embodiment, in (b) of FIG. 14, each DL PRS occasion (1410-1, 1410-2, 1410-3, 1410-4) may correspond to each PRS period. Here, the first DL PRS occasion 1410-1 may correspond to "period #0", the second DL PRS occasion 1410-2 may correspond to "period #1", the third DL PRS occasion 1410-3 may correspond to "period #2", and the fourth DL PRS occasion 1410-4 may correspond to "period #3".

Since each bit of the option 1 bitmap corresponds to a DL PRS occasion, the option 1 bitmap may include 2 bits. Here, when a bit corresponding to the first DL PRS occasion 1410-1 in the 2-bit option 1 bitmap corresponding to the first DL PRS occasion 1410-1 and the second DL PRS occasion 1410-2 indicates muting, all DL PRS resources 1420-1 and 1420-2 in the first DL PRS occasion 1410-1 are muted. Also, when a bit corresponding to the second DL PRS occasion 1410-2 in the 2-bit option 1 bitmap indicates muting, all DL PRS resources 1420-3 and 1420-4 in the second DL PRS occasion 1410-2 are muted.

Meanwhile, when a bit corresponding to the third DL PRS occasion 1410-3 in the 2-bit option 1 bitmap corresponding to the third DL PRS occasion 1410-3 and the fourth DL PRS occasion 1410-4 indicates muting, all DL PRS resources 1420-5 and 1420-6 in the third DL PRS occasion 1410-3 are muted. Also, when a bit corresponding to the fourth DL PRS occasion 1410-4 in the 2-bit option 1 bitmap indicates muting, all DL PRS resources 1420-7 and 1420-8 in the fourth DL PRS occasion 1410-4 are muted.

Also, DL PRS resource repetitions may be included in each DL PRS occasion (1410-1, 1410-2, 1410-3, 1410-4). For example, the first DL PRS occasion 1410-1 includes two DL PRS resource repetitions (1420-1 and 1420-2). The second DL PRS occasion 1410-2 also includes two DL PRS resource repetitions (1420-3 and 1420-4). The third DL PRS occasion 1410-3 also includes two DL PRS resource repetitions (1420-5 and 1420-6), and the fourth DL PRS occasion 1410-4 also includes two DL PRS resource repetitions (1420-7 and 1420-8).

Here, each bit of the option 2 bitmap may correspond to each DL PRS resource repetition. Therefore, in the first DL PRS occasion 1410-1, the option 2 bitmap is set to 2 bits by two DL PRS resource repetitions (1420-1 and 1420-2).

Here, when the option 1 bitmap indicates that the first DL PRS occasion 1410-1 is to be muted, the two DL PRS resource repetitions (1420-1 and 1420-2) are muted regardless of the option 2 bitmap. On the contrary, when the option 1 bitmap indicates that the first DL PRS occasion 1410-1 is to not be muted, muting for the two DL PRS resource repetitions (1420-1 and 1420-2) is indicated by the option 2 bitmap. Here, when a bit corresponding to a first DL PRS resource repetition (1420-1) in the 2-bit option 2 bitmap indicates muting, the corresponding DL PRS resource 1420-1 is muted. Also, when a bit corresponding to a second DL PRS resource repetition (1420-2) in the 2-bit option 2 bitmap indicates muting, the corresponding DL PRS resource 1420-2 is muted. The option 2 bitmap may be applied when the option 1 bitmap indicates non-muting.

For example, in the new communication system (e.g., NR), a method and apparatus for performing positioning using a sidelink may be provided. For example, a UE that performs sidelink communication may perform the sidelink communication based on at least one of in-coverage, out-of-coverage, and partial coverage. Also, for example, as described above, the sidelink communication may support vehicle to everything (V2X), public safety, commercial services, and industrial Internet of things (IIoT).

Also, for example, positioning may be performed based on sidelink. Here, positioning may be performed based on at least one of time difference of arrival (TDOA), round trip time (RTT), angle of arrival (AOA), angle of departure (AOD), and reference signal time difference (RSTD), but may not be limited thereto. As another example, measurement for sidelink positioning may be used through combination with another measurement for RAT-based positioning (e.g., Uu based measurement), but is not limited to a specific embodiment.

Also, for example, in the case of performing sidelink positioning based on a new system, a signal design, a resource allocation, measurement, a related procedure, and other matters need to be determined from the physical layer perspective for a reference signal for sidelink positioning, which will be further described below. Also, for example, a method of recycling the existing reference signal or procedure related thereto for sidelink positioning may be performed, which is described below. In the following, a method of performing sidelink-based positioning based on the aforementioned description is described.

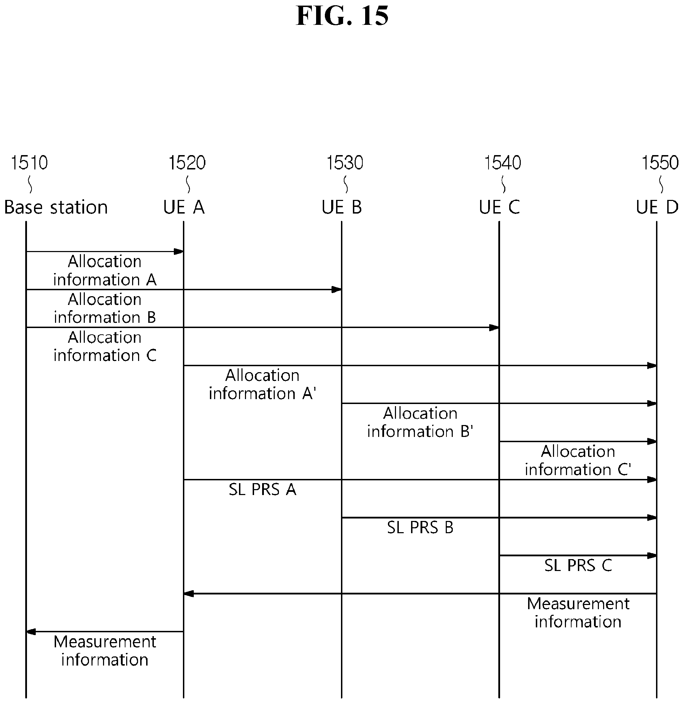

FIG. 15 illustrates a method of performing sidelink-based positioning, applicable to the present disclosure.

Referring to FIG. 15, sidelink-based positioning may be performed. As a specific example, in FIG. 15, a UE A 1520, a UE B 1530, and a UE C 1540 may be present within coverage of a base station 1510. For example, each of the UE A 1520, the UE B 1530, and the UE C 1540 may be in an RRC-connected state with the base station 1510, but the present disclosure may not be limited thereto. Here, a location of a UE D 1550 may be measured based on sidelink-based positioning.

Here, for example, sidelink communication may be possible between the UE A 1520 and the UE D 1550, sidelink communication may be possible between the UE B 1530 and the UE D 1550, and sidelink communication may be possible between the UE C 1540 and the UE D 1550. As another example, the UE A 1520, the UE B 1530, the UE C 1540, and the UE D 1550 may perform group communication-based sidelink communication based on groupcast. For example, the UE A 1520 may be a master terminal in group communication, but the present disclosure is not limited to the aforementioned embodiment.

Also, for example, the following description is made based on the aforementioned situation for clarity, but may not be limited thereto. Referring to FIG. 15, the base station 1510 may transmit allocation information A to the UE A 1520, may transmit allocation information B to the UE B 1530, and may transmit allocation information C to the UE C 1540. Here, the allocation information A may be information required for the UE A 1520 to transmit a sidelink positioning reference signal (SL PRS) A. For example, the allocation information A may include at least one of resource information and sequence information required for the UE A 1520 to transmit the SL PRS A and may further include another information. Also, the allocation information B may be information required for the UE B 1530 to transmit an SL PRS B. The allocation information B may include at least one of resource information and sequence information required for the UE B 1530 to transmit the SL PRS B and may further include another information. Also, the allocation information C may be information required for the UE C 1540 to transmit an SL PRS C. The allocation information C may include at least one of resource information and sequence information required for the UE C 1540 to transmit the SL PRS C and may further include another information.

Here, for example, the allocation information A, the allocation information B, and the allocation information C may be transmitted from the base station 1510 to the UE A 1520, the UE B 1530, and the UE C 1540, respectively, through upper layer signaling (e.g., RRC). Here, for example, each of the allocation information A, the allocation information B, and the allocation information C may be allocated by a location server and allocated information may be transmitted to the respective UEs through the base station 1510, which may not be limited to a specific embodiment.

Then, the UE A 1520 may transmit allocation information A' to the UE D 1550. Here, the allocation information A' may be information required for the UE A 1520 to transmit the SL PRS A to the UE D 1550. For example, the allocation information A' may be the same as the allocation information A. That is, the UE A 1520 may forward the allocation information received from the base station 1510 to the UE D 1550. As another example, the allocation information A' may be information generated based on the allocation information A received by the UE A 1520. Here, for example, the UE A 1520 may transmit the allocation information A' to the UE D 1550 through at least one of a physical sidelink control channel (PSCCH) and a physical sidelink shared channel (PSSCH).

Also, the UE B 1530 may transmit allocation information B' to the UE D 1550. Here, the, allocation information B' may be information required for the UE B 1530 to transmit the SL PRS B to the UE D 1550. For example, the allocation information B' may be the same as the allocation information B. That is, the UE B 1530 may forward the allocation information received from the base station 1510 to the UE D 1550. As another example, the allocation information B' may be information generated based on the allocation information B received by the UE B 1530. Here, for example, the UE B 1530 may transmit the allocation information B' to the UE D 1550 through at least one of the PSCCH and the PSSCH.

Also, the UE C 1540 may transmit allocation information C' to the UE D 1550. Here, the allocation information C' may be information required for the UE C 1540 to transmit the SL PRS C to the UE D 1550. For example, the allocation information C' may be the same as the allocation information C. That is, the UE C 1540 may forward the allocation information received from the base station 1510 to the UE D 1550. As another example, the allocation information C' may be information generated based on the allocation information C received by the UE C 1540. That, each of the UEs may transmit its allocation information to the UE D 1550. Here, for example, the UE B 1530 may transmit the allocation information B' to the UE D 1550 through at least one of the PSCCH and the PSSCH.

Then, the UE A 1520 may transmit the SL PRS A to the UE D 1550 through at least one of the PSCCH and the PSSCH. Also, the UE B 1530 may transmit the SL PRS B to the UE D 1550 through at least one of the PSCCH and the PSSCH. Also, the UE C 1540 may transmit the SL PRS C to the UE D 1550 through at least one of the PSCCH and the PSSCH. That is, each of the UEs may transmit its SL PRS to the UE D 1550 based on allocation resource information.

Then, the UE D 1550 may perform measurement based on each of the SL PRS A, the SL PRS B, and the SL PRS C received from the UE A 1520, the UE B 1530, and the UE C 1540, respectively. The UE D 1550 may transmit measurement information to the UE A 1520. Here, the measurement information may be a measurement value that is measured based on at least one of observed time difference of arrival (OTDOA) and reference signal time difference (RSTD) according to each of the SL PRS A, the SL PRS B, and the SL PRS C. For example, measurement values may be A, B, and C values for the UE A 1520, the UE B 1530, and the UE C 1540, respectively. Here, when the UE D 1550 is aware of locations of the UE A 1520, the UE B 1530, and the UE C 1540 in advance, the UE D 1550 may derive a location value of the UE D 1550 through the measurement values A, B, and C and the derived location value may be included in the measurement information. On the contrary, when the UE D 1550 is not aware of locations of the UE A 1520, the UE B 1530, and the UE C 1540 in advance, the measurement values A, B, and C may be included in the measurement information and corresponding information may be transmitted to the UE A 1520. Then, the UE A 1520 may transmit the measurement information acquired from the UE D 1550 to the base station 1510. Also, for example, the base station 1510 may further transmit the measurement information to the location server. However, the present disclosure may not be limited thereto. In the aforementioned manner, positioning may be performed.

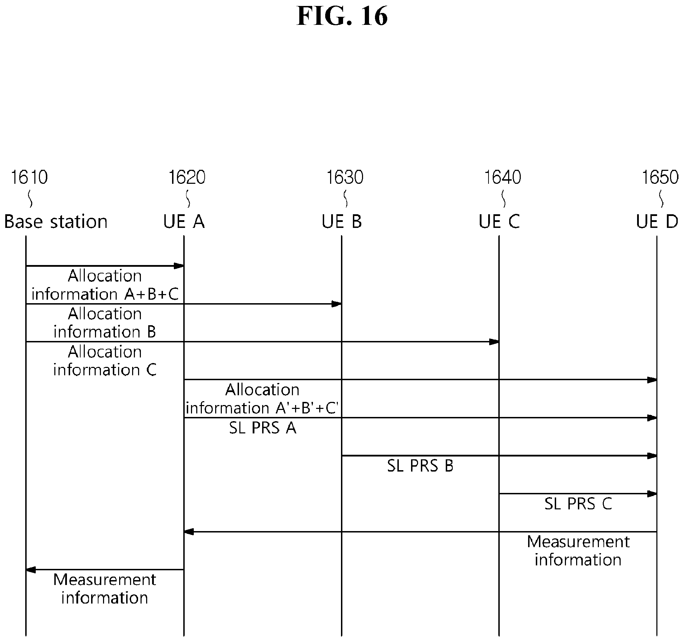

FIG. 16 illustrates a method of performing sidelink-based positioning, applicable to the present disclosure.

Referring to FIG. 16, sidelink-based positioning may be performed. As a specific example, in FIG. 16, a UE A 1620, a UE B 1630, and a UE C 1640 may be present within coverage of a base station 1610. For example, each of the UE A 1620, the UE B 1630, and the UE C 1640 may be in an RRC-connected state with the base station 1610, but the present disclosure may not be limited thereto. Here, a location of a UE D 1650 may be measured based on sidelink-based positioning.

Here, for example, sidelink communication may be possible between the UE A 1620 and the UE D 1650. As another example, the UE A 1620 may perform group communication-based sidelink communication based on groupcast. For example, the UE A 1620 may be a master terminal in group communication, but the present disclosure is not limited to the aforementioned embodiment.

Also, for example, the following description is made based on the aforementioned situation for clarity, but may not be limited thereto. Referring to FIG. 16, the base station 1610 may transmit allocation information A to the UE A 1620. Here, the UE A 1620 may perform sidelink communication with the UE D 1650, and may need to forward allocation information on the UE B 1630 and the UE C 1640 to the UE D 1650. Therefore, the base station 1610 may transmit, to the UE A 1620, allocation information B and allocation information C that are allocation information on the UE B 1630 and allocation information on the UE C 1640, respectively, with the allocation information A. That is, the UE A 1620 may acquire the allocation information A, the allocation information B, and the allocation information C from the base station 1610.

Then, the base station 1610 may transmit the allocation information B to the UE B 1630 and may transmit the allocation information C to the UE C 1640. Here, the allocation information A may be information required for the UE A 1620 to transmit an SL PRS A. For example, the allocation information A may include at least one of resource information and sequence information required for the UE A 1620 to transmit the SL PRS A and may further include other information. Also, the allocation information B may be information required for the UE B 1630 to transmit an SL PRS B. The allocation information B may include at least one of resource information and sequence information required for the UE B 1630 to transmit the SL PRS B and may further include other information. Also, the allocation information C may be information required for the UE C 1640 to transmit an SL PRS C. The allocation information C may include at least one of resource information and sequence information required for the UE C 1640 to transmit the SL PRS C and may further include other information.

Here, for example, the allocation information A, the allocation information B, and the allocation information C may be transmitted from the base station 1610 to the UE A 1620, the UE B 1630, and the UE C 1640, respectively, through upper layer signaling (e.g., RRC). Also, as described above, the UE A 1620 may acquire the allocation information B and the allocation information C with the allocation information A through upper layer signaling (e.g., RRC). Also, for example, the allocation information B and the allocation information C transmitted with the allocation information A may be transmitted based on allocation information A+B+C. Here, the allocation information A+B+C may be information generated based on the allocation information A, the allocation information B, and the allocation information C, which is described below.

Also, for example, each of the allocation information A, the allocation information B, and the allocation information C may be allocated by a location server and allocated information may be transmitted to the respective UEs through the base station 1610, which may not be limited to a specific embodiment.

Then, the UE A 1620 may transmit allocation information A' to the UE D 1650. Also, the UE A 1620 may transmit allocation information B' and allocation information C' to the UE D 1650 with the allocation information A'. That is, the UE A 1620 may transmit allocation information A'+B'+C' to the UE D 1650. Here, the allocation information A'+B'+C' may be information generated based on the allocation information A', the allocation information B', and the allocation information C', which is described below. Here, the UE A 1620 may transmit the allocation information A'+B'+C' to the UE D 1650 through at least one of a PSCCH and a PSSCH.

Here, the allocation information A' may be information required for the UE A 1620 to transmit the SL PRS A to the UE D 1650. For example, the allocation information A' may be the same as the allocation information A. As another example, the allocation information A' may be information generated based on the allocation information A received by the UE A 1620.

Also, the allocation information B' may be information required for the UE B 1630 to transmit the SL PRS B to the UE D 1650. For example, the allocation information B' that is allocation information of the UE B 1630 may be transmitted to the UE D 1650 through the UE A 1620. That is, the UE B 1630 may perform only SL PRS B transmission based on the allocation information received from the base station 1610 and the allocation information of the UE B 1630 may be delivered to the UE D 1650 through the UE A 1620.

Also, the allocation information C' that is allocation information of the UE C 1640 may be transmitted to the UE D 1650 through the UE A 1620. That is, the UE C 1640 may perform only SL PRS C transmission based on the allocation information received from the base station 1610 and the allocation information of the UE C 1640 may be delivered to the UE D 1650 through the UE A 1620.

Then, the UE A 1620 may transmit the SL PRS A to the UE D 1650 through at least one of the PSCCH and the PSSCH. Also, the UE B 1630 may transmit the SL PRS B to the UE D 1650 through at least one of the PSCCH and the PSSCH. Also, the UE C 1640 may transmit the SL PRS C to the UE D 1650 through at least one of the PSCCH and the PSSCH. That is, each of the UEs may transmit its SL PRS to the UE D 1650.

The UE D 1650 may perform measurement based on each of the SL PRS A, the SL PRS B, and the SL PRS C received from the UE A 1620, the UE B 1630, and the UE C 1640, respectively. Here, the UE D 1650 may transmit measurement information to the UE A 1620. Here, the measurement information may be a measurement value that is measured based on at least one of OTDOA and RSTD according to each of the SL PRS A, the SL PRS B, and the SL PRS C. For example, measurement values may be A, B, and C values for the UE A 1620, the UE B 1630, and the UE C 1640, respectively. Here, when the UE D 1650 is aware of locations of the UE A 1620, the UE B 1630, and the UE C 1640 in advance, the UE D 1650 may derive a location value of the UE D 1650 through the measurement values A, B, and C and the derived location value may be included in the measurement information. On the contrary, when the UE D 1650 is not aware of locations of the UE A 1620, the UE B 1630, and the UE C 1640 in advance, the measurement values A, B, and C may be included in the measurement information, which may not be limited to a specific form. Then, the UE A 1620 may transmit the measurement information acquired from the UE D 1650 to the base station 1610. Also, for example, the base station 1610 may further transmit the measurement information to the location server. However, the present disclosure may not be limited thereto. In the aforementioned manner, positioning may be performed.

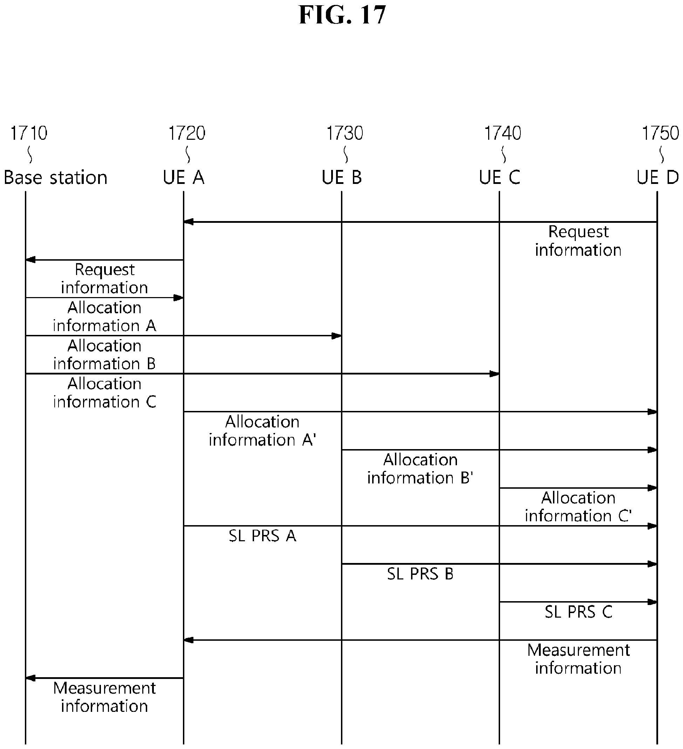

FIG. 17 illustrates a method of performing sidelink-based positioning, applicable to the present disclosure.

Referring to FIG. 17, sidelink-based positioning may be performed. As a specific example, in FIG. 17, a UE A 1720, a UE B 1730, and a UE C 1740 may be present within coverage of a base station 1710. For example, each of the UE A 1720, the UE B 1730, and the UE C 1740 may be in an RRC-connected state with the base station 1710, but the present disclosure may not be limited thereto. Here, a location of a UE D 1750 may be measured based on sidelink-based positioning.

Here, for example, sidelink communication may be possible between the UE A 1720 and the UE D 1750, sidelink communication may be possible between the UE B 1730 and the UE D 1750, and sidelink communication may be possible between the UE C 1740 and the UE D 1750. As another example, the UE A 1720, the UE B 1730, the UE C 1740, and the UE D 1750 may perform group communication-based sidelink communication based on groupcast. For example, the UE A 1720 may be a master terminal in group communication, but the present disclosure is not limited to the aforementioned embodiment.

Also, for example, the following description is made based on the aforementioned situation for clarity, but may not be limited thereto. Referring to FIG. 17, the UE D 1750 may transmit request information to the UE A 1720. Here, the request information may be information requesting location measurement of the UE D 1750. Then, the UE A 1720 may transmit the request information to the base station 1710 based on the request information acquired from the UE D 1750. Here, for example, the base station 1710 may deliver the received request information to a location server, but the present disclosure is not limited to the aforementioned embodiment.

Then, the base station 1710 may transmit allocation information to each of the UEs based on the request information. As another example, the base station 1710 may receive allocation information on each of the UEs from the location server based on the request information and, based thereon, may transmit the allocation information. The present disclosure is not limited to the aforementioned embodiment.

The base station 1710 may transmit allocation information A to the UE A 1720, may transmit allocation information B to the UE B 1730, and may transmit allocation information C to the UE C 1740. Here, the allocation information A may be information required for the UE A 1720 to transmit an SL PRS A. For example, the allocation information A may include at least one of resource information and sequence information required for the UE A 1720 to transmit the SL PRS A and may further include other information. Also, the allocation information B may be information required for the UE B 1730 to transmit an SL PRS B. The allocation information B may include at least one of resource information and sequence information required for the UE B 1730 to transmit the SL PRS B and may further include other information. Also, the allocation information C may be information required for the UE C 1740 to transmit an SL PRS C. The allocation information C may include at least one of resource information and sequence information required for the UE C 1740 to transmit the SL PRS C and may further include other information.

Here, for example, the allocation information A, the allocation information B, and the allocation information C may be transmitted from the base station 1710 to the UE A 1720, the UE B 1730, and the UE C 1740 respectively, through upper layer signaling (e.g., RRC). Here, for example, each of the allocation information A, the allocation information B, and the allocation information C may be allocated by the location server and allocated information may be transmitted to each of the UEs through the base station 1710, which may not be limited to a specific embodiment.

Then, the UE A 1720 may transmit allocation information A' to the UE D 1750. Here, the allocation information A' may be information required for the UE A 1720 to transmit the SL PRS A to the UE D 1750. For example, the allocation information A' may be the same as the allocation information A. That is, the UE A 1720 may forward the allocation information received from the base station 1710 to the UE D 1750. As another example, the allocation information A' may be information generated based on the allocation information A received by the UE A 1720. The UE A 1720 may transmit the allocation information A' to the UE D 1750 through at least one of a PSCCH and a PSSCH.

Also, the UE B 1730 may transmit allocation information B' to the UE D 1750. Here, the allocation information B' may be information required for the UE B 1730 to transmit the SL PRS B to the UE D 1750. For example, the allocation information B' may be the same as the allocation information B. That is, the UE B 1730 may forward the allocation information received from the base station 1710 to the UE D 1750. As another example, the allocation information B' may be information generated based on the allocation information B received by the UE B 1730. The UE B 1730 may transmit the allocation information B' to the UE D 1750 through at least one of the PSCCH and the PSSCH.

Also, the UE C 1740 may transmit allocation information C' to the UE D 1750. Here, the allocation information C' may be information required for the UE C 1740 to transmit the SL PRS C to the UE D 1750. For example, the allocation information C' may be the same as the allocation information C. That is, the UE C 1740 may forward the allocation information received from the base station 1710 to the UE D 1750. As another example, the allocation information C' may be information generated based on the allocation information C received by the UE C 1740. That is, each of the UEs may transmit its allocation information to the UE D 1750. Here, for example, the UE C 1740 may transmit the allocation information C' to the UE D 1750 through at least one of the PSCCH and the PSSCH.

Then, the UE A 1720 may transmit the SL PRS A to the UE D 1750 through at least one of the PSCCH and the PSSCH. Also, the UE B 1730 may transmit the SL PRS B to the UE D 1750 through at least one of the PSCCH and the PSSCH. Also, the UE C 1740 may transmit the SL PRS C to the UE D 1750 through at least one of the PSCCH and the PSSCH. That is, each of the UEs may transmit its SL PRS to the UE D 1750 based on allocation resource information.

Then, the UE D 1750 may perform measurement based on each of the SL PRS A, the SL PRS B, and the SL PRS C received from the UE A 1720, the UE B 1730, and the UE C 1740, respectively. Here, the UE D 1750 may transmit measurement information to the UE A 1720. Here, the measurement information may be a measurement value that is measured based on at least one of OTDOA and RSTD according to each of the SL PRS A, the SL PRS B, and the SL PRS C. For example, measurement values may be A, B, and C values for the UE A 1720, the UE B 1730, and the UE C 1740, respectively. Here, when the UE D 1750 is aware of locations of the UE A 1720, the UE B 1730, and the UE C 1740 in advance, the UE D 1750 may derive a location value of the UE D 1750 through the measurement values A, B, and C. On the contrary, when the UE D 1750 is not aware of locations of the UE A 1720, the UE B 1730, and the UE C 1740 in advance, the measurement values A, B, and C may be included in the measurement information, which may not be limited to a specific form. Then, the UE A 1720 may transmit the measurement information acquired from the UE D 1750 to the base station 1710. Also, for example, the base station 1710 may further transmit the measurement information to the location server. However, the present disclosure may not be limited thereto. In the aforementioned manner, positioning may be performed.

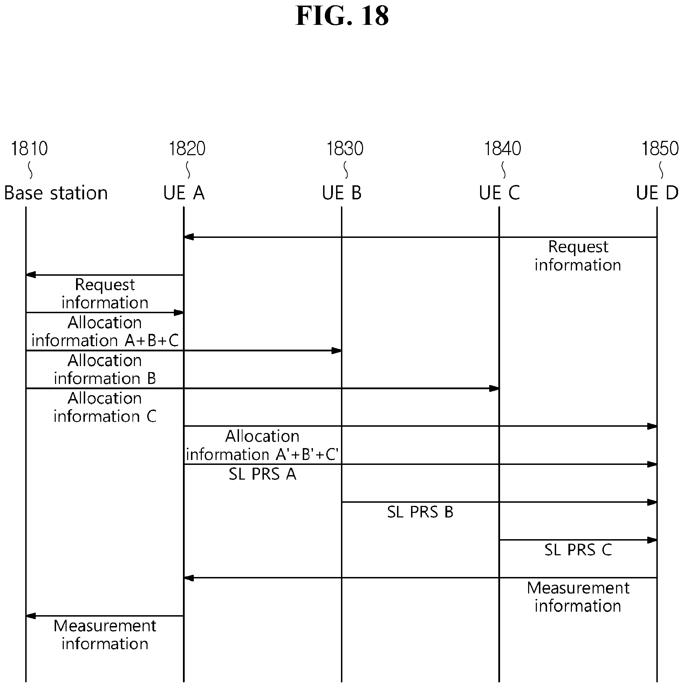

FIG. 18 illustrates a method of performing sidelink-based positioning, applicable to the present disclosure.

Referring to FIG. 18, sidelink-based positioning may be performed. As a specific example, in FIG. 18, a UE A 1820, a UE B 1830, and a UE C 1840 may be present within coverage of a base station 1810. For example, each of the UE A 1820, the UE B 1830, and the UE C 1840 may be in an RRC-connected state with the base station 1810, but the present disclosure may not be limited thereto. Here, a location of a D 1850 may be measured based on sidelink-based positioning.

Here, for example, sidelink communication may be possible between the UE A 1820 and the UE D 1850. As another example, the UE A 1820 may perform group communication-based sidelink communication based on groupcast. For example, the UE A 1820 may be a master terminal in group communication, but is not limited to the aforementioned embodiment.

Also, for example, the following description is made based on the aforementioned situation for clarity, but may not be limited thereto. Referring to FIG. 18, the UE D 1850 may transmit request information to the UE A 1820. Here, the request information may be information requesting location measurement of the UE D 1850. Then, the UE A 1820 may transmit the request information to the base station 1810 based on the request information acquired from the UE D 1850. Here, for example, the base station 1810 may deliver the received request information to a location server, but the present disclosure is not limited to the aforementioned embodiment.

Then, the base station 1810 may transmit allocation information to each of the UEs based on the request information. As another example, the base station 1810 may receive allocation information on each of the UEs from the location server based on the request information and, based thereon, may transmit the allocation information. The present disclosure is not limited to the aforementioned embodiment.

The base station 1810 may transmit allocation information A to the UE A 1820. Here, the UE A 1820 may perform sidelink communication with the UE D 1850 and needs to deliver allocation information on the UE B 1830 and the UE C 1840 to the UE D 1850. Therefore, the base station 1810 may transmit, to the UE A 1820, allocation information B that is allocation information on the UE B 1830 and allocation information C that is allocation information on the UE C 1840 with the allocation information A. That is, the UE A 1820 may acquire the allocation information A, the allocation information B, and the allocation information C from the base station 1810.

Then, the base station 1810 may transmit the allocation information B to the UE B 1830 and may transmit the allocation information C to the UE C 1840. Here, the allocation information A may be information required for the UE A 1820 to transmit an SL PRS A. For example, the allocation information A may include at least one of resource information and sequence information required for the UE A 1820 to transmit the SL PRS A and may further include other information. Also, the allocation information B may be information required for the UE B 1830 to transmit an SL PRS B. The allocation information B may include at least one of resource information and sequence information required for the UE B 1830 to transmit the SL PRS B and may further include other information. Also, the allocation information C may be information required for the UE C 1840 to transmit an SL PRS C. The allocation information C may include at least one of resource information and sequence information required for the UE C 1840 to transmit the SL PRS C and may further include other information.

Here, for example, the allocation information A, the allocation information B, and the allocation information C may be transmitted from the base station 1810 to the UE A 1820, the UE B 1830, and the UE C 1840, respectively, through upper layer signaling (e.g., RRC). Also, as described above, the UE A 1820 may acquire the allocation information B and the allocation information C with the allocation information A through upper layer signaling (e.g., RRC). Also, for example, the allocation information B and the allocation information C with the allocation information A may be allocation information A+B+C. Here, the allocation information A+B+C may be information generated based on the allocation information A, the allocation information B, and the allocation information C, which is described below.

Also, for example, each of the, allocation information A, the allocation information B, and the allocation information C may be allocated by the location server and allocated information may be transmitted to each of the UEs through the base station 1810, which may not be limited to a specific embodiment.

Then, the UE A 1820 may transmit allocation information A' to the UE D 1850. Also, the UE A 1820 may transmit allocation information B' and allocation information C' to the UE D 1850 with the allocation information A'. That is, the UE A 1820 may transmit allocation information A'+B'+C' to the UE D 1850. Here, the allocation information A'+B'+C' may be information generated based on the allocation information A', the allocation information B', and the allocation information C', which is described below. Here, the UE A 1820 may transmit the allocation information A'+B'+C' to the UE D 1850 through at least one of a PSCCH and a PSSCH.

Here, the allocation information A' may be information required for the UE A 1820 to transmit the SL PRS A to the UE D 1850. For example, the allocation information A' may be the same as the allocation information A. As another example, the allocation information A' may be information generated based on the allocation information A received by the UE A 1820.

Also, the allocation information B' may be information required for the UE B 1830 to transmit the SL PRS B to the UE D 1850. For example, the allocation information B' that is allocation information of the UE B 1830 may be transmitted to the UE D 1850 through the UE A 1820. That is, the UE B 1830 may perform only SL PRS B transmission based on the allocation information received from the base station 1810 and the allocation information of the UE B 1630 may be delivered to the UE D 1850 through the UE A 1820.

Also, the allocation information C' that is allocation information of the UE C 1840 may be transmitted to the UE D 1850 through the UE A 1820. That is, the UE C 1840 may perform only SL PRS C transmission based on the allocation information received from the base station 1810 and the allocation information of the UE C 1840 may be delivered to the UE D 1850 through the UE A 1820.

Then, the UE A 1820 may transmit the SL PRS A to the UE D 1850 through at least one of the PSCCH and the PSSCH. Also, the UE B 1830 may transmit the SL PRS B to the UE D 1850 through at least one of the PSCCH and the PSSCH. Also, the UE C 1840 may transmit the SL PRS C to the UE D 1850 through at least one of the PSCCH and the PSSCH. That is, each of the UEs may transmit its SL PRS to the UE D 1850.

Then, the UE D 1850 may perform measurement based on each of the SL PRS A, the SL PRS B, and the SL PRS C received from the UE A 1820, the UE B 1830, and the UE C 1840, respectively. Here, the UE D 1850 may transmit measurement information to the UE A 1820. Here, the measurement information may be a measurement value that is measured based on at least one of OTDOA and RSTD according to each of the SL PRS A, the SL PRS B, and the SL PRS C. For example, measurement values may be A, B, and C values for the UE A 1820, the UE B 1830, and the UE C 1840, respectively. Here, when the UE D 1850 is aware of locations of the UE A 1820, the UE B 1830, and the UE C 1840 in advance, the UE D 1850 may derive a location value of the UE D 1850 through the measurement values A, B, and C and the derived location value may be included in the measurement information. On the contrary, when the UE D 1850 is not aware of locations of the UE A 1820, the UE B 1830, and the UE C 1840 in advance, the measurement values A, B, and C may be included in the measurement information, which may not be limited to a specific form. Then, the UE A 1820 may transmit the measurement information acquired from the UE D 1850 to the base station 1810. Also, for example, the base station 1810 may further transmit the measurement information to the location server. However, the present disclosure may not be limited thereto. In the aforementioned manner, positioning may be performed.

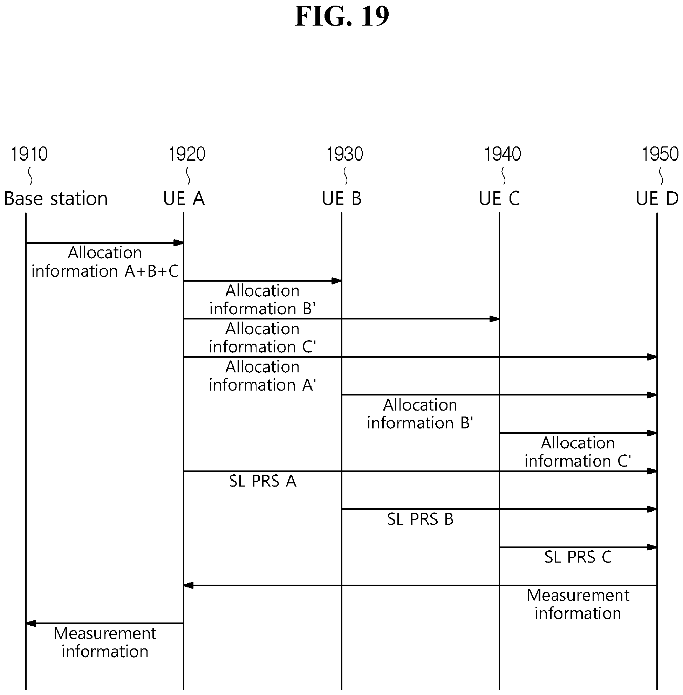

FIG. 19 illustrates a method of performing sidelink-based positioning, applicable to the present disclosure.

Referring to FIG. 19, sidelink-based positioning may be performed. As a specific example, in FIG. 19, a UE A 1920 may be present within coverage of a base station 1910. For example, the UE A 1920 may be in an RRC-connected state with the base station 1910, but the present disclosure may not be limited thereto. Here a location of a UE D 1950 may be measured based on sidelink-based positioning. Here, for example, sidelink communication may be possible between the UE A 1920 and a UE B 1930, sidelink communication may be possible between the UE A 1920 and a UE C 1940, sidelink communication may be possible between the UE A 1920 and the UE D 1950, sidelink communication may be possible between the UE B 1930 and the UE D 1950, and sidelink communication may be possible between the UE C 1940 and the UE D 1950. As another example, the UE A 1920 may perform group communication-based sidelink communication based on groupcast. For example, the UE A 1920 may be a master terminal in group communication, but is not limited to the aforementioned embodiment.

Also, for example, the following description is made based on the aforementioned situation for clarity, but may not be limited thereto. Referring to FIG. 19, the base station 1910 may transmit allocation information A, allocation information B, and allocation information C to the UE A 1920. That is, the base station 1910 may transmit the aforementioned information to the UE A 1920 as allocation information A+B+C. For example, the allocation information A+B+C may be information generated based on the allocation information A, the allocation information B, and the allocation information C, which is described below.

Here, the allocation information A may be information required for the UE A 1920 to transmit an SL PRS A. For example, the allocation information A may include at least one of resource information and sequence information required for the UE A 1920 to transmit the SL PRS A and may further include other information. Also, the allocation information B may be information required for the UE B 1930 to transmit an SL PRS B. The allocation information B may include at least one of resource information and sequence information required for the UE B 1930 to transmit the SL PRS B and may further include other information. Also, the allocation information C may be information required for the UE C 1940 to transmit an SL PRS C. The allocation information C may include at least one of resource information and sequence information required for the UE C 1940 to transmit the SL PRS C and may further include other information.

Here, for example, the allocation information A, the allocation information B, and the allocation information C may be transmitted from the base station 1910 to the UE A 1920 through upper layer signaling (e.g., RRC). That is, the aforementioned allocation information A+B+C may be transmitted from the base station 1910 to the UE A 1920 through upper layer signaling (e.g., RRC). Here, for example, each of the allocation information A, the allocation information B, and the allocation information C may be allocated by a location server and the allocated information may be transmitted to each of the UEs through the base station 1910. The present disclosure may not be limited to a specific embodiment.

Then, the UE A 1920 may generate allocation information B' and allocation information C' based on the allocation information A+B+C. Here, the allocation information B' may be the same as the allocation information B. As another example, the allocation information B' may be generated by the UE A 1920 based on the allocation information B, but is not limited to the aforementioned embodiment. Also, the allocation information C' may be the same as the allocation information C. As another example, the allocation information C' may be generated by the UE A 1920 based on the allocation information C, but is not limited to the aforementioned embodiment.

The UE A 1920 may transmit the allocation information B' to the UE B 1930 and may transmit the allocation information C' to the UE C 1940. Then, the UE A 1920 may transmit the allocation information A' to the UE D 1950. Here, the allocation information A' may be information required for the UE A 1920 to transmit an SL PRS A to the UE D 1950. For example, the allocation information A' may be the same as the allocation information A. That is, the UE A 1920 may forward the allocation information received from the base station 1910 to the UE D 1950. As another example, the allocation information A' may be information generated based on the allocation information A received by the UE A 1920. The UE A 1920 may transmit the allocation information A' to the UE D 1950 through at least one of a PSCCH and a PSSCH.

Also, the UE B 1930 may transmit allocation information B' to the UE D 1950. Here, the allocation information B' may be information required for the UE B 1930 to transmit the SL PRS B to the UE D 1950 and may be acquired from the UE A 1910. The UE B 1930 may transmit the allocation information B' to the UE D 1950 through at least one of the PSCCH and the PSSCH.

Also, the UE C 1940 may transmit the allocation information C' to the UE D 1950. Here, the allocation information C' may be information required for the UE C 1940 to transmit the SL PRS C to the UE D 1950 and may be acquired from the UE A 1910. That is, each of the UEs may transmit its allocation information to the UE D 1950. Here, for example, the UE C 1940 may transmit the allocation information C' to the UE D 1950 through at least one of the PSCCH and the PSSCH.

Then, the UE A 1920 may transmit the SL PRS A to the UE D 1950 through at least one of the PSCCH and the PSSCH. Also, the UE B 1930 may transmit the SL PRS B to the UE D 1950 through at least one of the PSCCH and the PSSCH. Also, the UE C 1940 may transmit the SL PRS C to the UE D 1950 through at least one of the PSCCH and the PSSCH. That is, each of the UEs may transmit its SL PRS to the UE D 1950 based on allocation resource information.

Then, the UE D 1950 may perform measurement based on each of the SL PRS A, the SL PRS B, and the SL PRS C received from the UE A 1920, the UE B 1930, and the UE C 1940, respectively. Here, the UE D 1950 may transmit measurement information to the UE A 1920. Here, the measurement information may be a measurement value that is measured based on at least one of OTDOA and RSTD according to each of the SL PRS A, the SL PRS B, and the SL PRS C. For example, measurement values may be A, B, and C values for the UE A 1920, the UE B 1930, and the UE C 1940, respectively. Here, when the UE D 1950 is aware of locations of the UE A 1920, the UE B 1930, and the UE C 1940 in advance, the UE D 1950 may derive a location value of the UE D 1950 through the measurement values A, B, and C and the derived location value may be included in the measurement information. On the contrary, when the UE D 1950 is not aware of locations of the UE A 1920, the UE B 1930, and the UE C 1940 in advance, the measurement values A, B, and C may be included in the measurement information, which may not be limited to a specific form. Then, the UE A 1920 may transmit the measurement information acquired from the UE D 1950 to the base station 1910. Also, for example, the base station 1910 may further transmit the measurement information to the location server. However, the present disclosure may not be limited thereto. In the aforementioned manner, positioning may be performed.

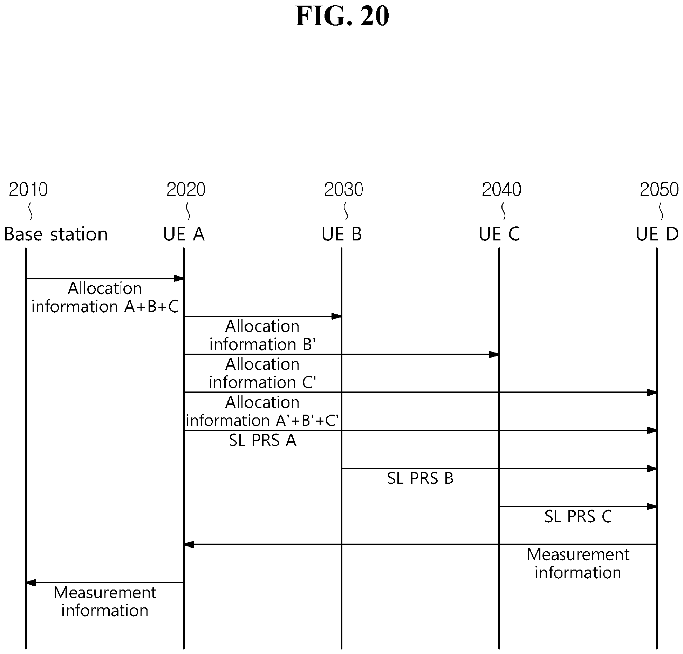

FIG. 20 illustrates a method of performing sidelink-based positioning, applicable to the present disclosure.

Referring to FIG. 20, sidelink-based positioning may be performed. As a specific example, in FIG. 20, a UE A 2020 may be present within coverage of a base station 2010. For example, the UE A 2020 may be in an RRC-connected state with the base station 2010, but the present disclosure may not be limited thereto. Here, a location of a UE D 2050 may be measured based on sidelink-based positioning. Here, for example, sidelink communication may be possible between the UE A 2020 and a UE B 2030, sidelink communication may be possible between the UE A 2020 and a UE C 2040, and sidelink communication may be possible between the UE A 2020 and the UE D 2050. As another example, the UE A 2020 may perform group communication-based sidelink communication based on groupcast. For example, the UE A 2020 may be a master terminal in group communication, but is not limited to the aforementioned embodiment.

Also, for example, the following description is made based on the aforementioned situation for clarity, but may not be limited thereto. Referring to FIG. 20, the base station 2010 may transmit allocation information A, allocation information B, and allocation information C to the UE A 2020. That is, the base station 2010 may transmit the aforementioned information to the UE A 2020 as allocation information A+B+C. For example, the allocation information A+B+C may be information generated based on the allocation information A, the allocation information B, and the allocation information C, which is described below.

Here, the allocation information A may be information required for the UE A 2020 to transmit an SL PRS A. For example, the allocation information A may include at least one of resource information and sequence information required for the UE A 2020 to transmit the SL PRS A and may further include other information. Also, the allocation information B may be information required for the UE B 2030 to transmit an SL PRS B. The allocation information B may include at least one of resource information and sequence information required for the UE B 2030 to transmit the SL PRS B and may further include other information. Also, the allocation information C may be information required for the UE C 2040 to transmit an SL PRS C. The allocation information C may include at least one of resource information and sequence information required for the UE C 2040 to transmit the SL PRS C and may further include other information.

Here, for example, the allocation information A, the allocation information B, and the allocation information C may be transmitted from the base station 2010 to the UE A 2020 through upper layer signaling (e.g., RRC). That is, the aforementioned allocation information A+B+C may be transmitted from the base station 2010 to the UE A 2020 through upper layer signaling (e.g., RRC). Here, for example, each of the allocation information A, the allocation information B, and the allocation information C may be allocated by a location server and allocated information may be transmitted to each of the UEs through the base station 2010, which may not be limited to a specific embodiment.

Then, the UE A 2020 may generate allocation information B' and allocation information C' based on the allocation information A+B+C. Here, the allocation information B' may be the same as the allocation information B. As another example, the allocation information B' may be generated by the UE A 2020 based on the allocation information B, but is not limited to the aforementioned embodiment. Also, the allocation information C' may be the same as the allocation information C. As another example, the allocation information C' may be generated by the UE A 2020 based on the allocation information C, but is not limited to the aforementioned embodiment.

The UE A 2020 may transmit the allocation information B' to the UE B 2030 and may transmit the allocation information C' to the UE C 2040. Also, the allocation information A' may be the same as the allocation information A. As another example, the allocation information A' may be generated by the UE A 2020 based on the allocation information A, but is not limited to the aforementioned embodiment. Also, the allocation information A+B+C may be the same as the allocation information A'+B'+C'. As another example, the allocation information A'+B'+C' may be generated by the UE A 2020 based on the allocation information A+B+C, but is not limited to the aforementioned embodiment.

Here, the UE A 2020 may transmit the allocation information A'+B'+C' to the UE D 2050 through at least one of a PSCCH and a PSSCH. That is, dissimilar to FIG. 19, since sidelink communication is present only between the UE A 2020 and the UE D 2050 and sidelink communication is absent between the UE B 2030 and the UE D 2050 and between the UE C 2040 and the UE D 2050, the UE A 2020 may transmit the allocation information A'+B'+C' to the UE D 2050.

Then, the UE A 2020 may transmit the SL PRS A to the UE D 2050 through at least one of the PSCCH and the PSSCH. Also, the UE B 2030 may transmit the SL PRS B to the UE D 2050 through at least one of the PSCCH and the PSSCH. Also, the UE C 2040 may transmit the SL PRS C to the UE D 2050 through at least one of the PSCCH and the PSSCH. That is, each of the UEs may be transmit its SL PRS to the UE D 2050 based on allocation resource information.

Then, the UE D 2050 may perform measurement based on each of the SL PRS A, the SL PRS B, and the SL PRS C received from the UE A 2020, the UE B 2030, and the UE C 2040, respectively. Here, the UE D 2050 may transmit measurement information to the UE A 2020. Here, the measurement information may be a measurement value that is measured based on at least one of OTDOA and RSTD according to each of the SL PRS A, the SL PRS B, and the SL PRS C. For example, measurement values may be A, B, and C values for the UE A 2020, the UE B 2030, and the UE C 2040, respectively. Here, when the UE D 2050 is aware of locations of the UE A 2020, the UE B 2030, and the UE C 2040 in advance, the UE D 2050 may derive a location value of the UE D 2050 and the derived location value may be included in the measurement information. On the contrary, when the UE D 2050 is not aware of locations of the UE A 2020, the UE B 2030, and the UE C 2040 in advance, the measurement values A, B, and C may be included in the measurement information, which may not be limited to a specific form. Then, the UE A 2020 may transmit the measurement information acquired from the UE D 2050 to the base station 2010. Also, for example, the base station 2010 may further transmit the measurement information to the location server. However, the present disclosure may not be limited thereto. In the aforementioned manner, positioning may be performed.

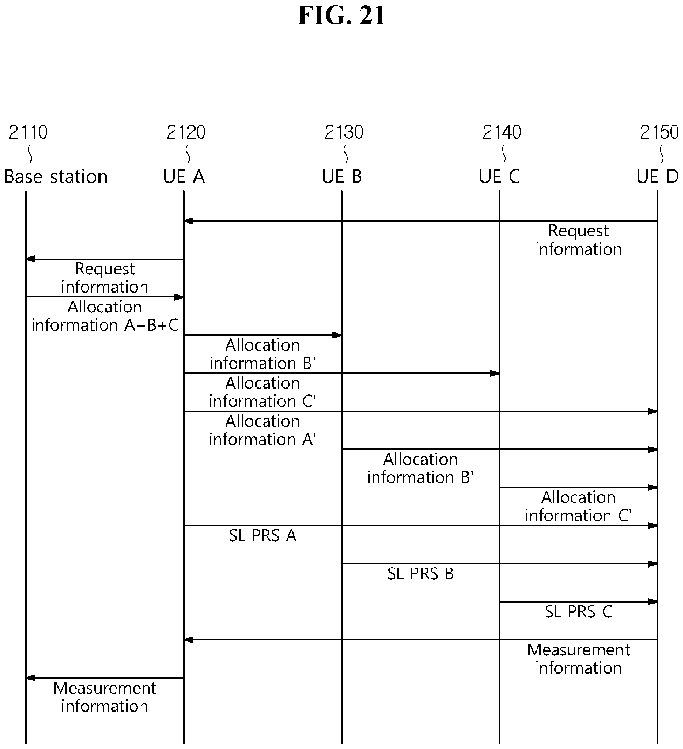

FIG. 21 illustrates a method of performing sidelink-based positioning, applicable to the present disclosure.

Referring to FIG. 21, sidelink-based positioning may be performed. As a specific example, in FIG. 21, a UE A 2120 may be present within coverage of a base station 2110. For example, the UE A 2120 may be in an RRC-connected state with the base station 2110, but the present disclosure may not be limited thereto. Here, a location of a UE D 2150 may be measured based on sidelink-based positioning. Here, for example, sidelink communication may be possible between the UE A 2120 and a UE B 2130, sidelink communication may be possible between the UE A 2120 and a UE C 2140, sidelink communication may be possible between the UE A 2120 and the UE D 2150, sidelink communication may be possible between the UE B 2130 and the UE D 2150, and sidelink communication may be possible between the UE C 2140 and the UE D 2150. As another example, the UE A 2120 may perform group communication-based sidelink communication based on groupcast. For example, the UE A 2120 may be a master terminal in group communication, but is not limited to the aforementioned embodiment.

Also, for example, the following description is made based on the aforementioned situation for clarity, but may not be limited thereto. Referring to FIG. 21, the UE D 2150 may transmit request information to the UE A 2120. Here the request information may be information requesting location measurement of the UE D 2150. Then, the UE A 2120 may transmit the request information to the base station 2110 based on the request information acquired from the UE D 2150. Here, for example, the base station 2110 may deliver the received request information to a location server, but the present disclosure is not limited to the aforementioned embodiment.

Then, the base station 2110 may transmit allocation information to each of the UEs based on the request information. As another example, the base station 2110 may receive allocation information on each of the UEs from the location server based on the request information and, based thereon, may transmit the allocation information. The present disclosure is not limited to the aforementioned embodiment.

The base station 2110 may transmit allocation information A, allocation information B, and allocation information C to the UE A 2120. For example, the base station 2110 may transmit the aforementioned information to the UE A 2120 as allocation information A+B+C. That is, the allocation information A+B+C may be information generated based on the allocation information A, the allocation information B, and the allocation information C, which is described below.

Here, the allocation information A may be information required for the UE A 2120 to transmit an SL PRS A. For example, the allocation information A may include at least one of resource information and sequence information required for the UE A 2120 to transmit the SL PRS A and may further include other information. Also, the allocation information B may be information required for the UE B 2130 to transmit an SL PRS B. The allocation information B may include at least one of resource information and sequence information required for the UE B 2130 to transmit the SL PRS B and may further include other information. Also, the allocation information C may be information required for the UE C 2140 to transmit an SL PRS C. The allocation information C may include at least one of resource information and sequence information required for the UE C 2140 to transmit the SL PRS C and may further include other information.

Here, for example, the allocation information A, the allocation information B, and the allocation information C may be transmitted from the base station 2110 to the UE A 2120 through upper layer signaling (e.g., RRC). That is, the aforementioned allocation information A+B+C may be transmitted from the base station 2110 to the UE A 2120 through upper layer signaling (e.g., RRC). Here, for example, each of the allocation information A, the allocation information B, and the allocation information C may be allocated by a location server and allocated information may be transmitted to each of the UEs through the base station 2110, which may not be limited to a specific embodiment.

Then, the UE A 2120 may generate allocation information B' and allocation information C' based on the allocation information A+B+C. Here, the allocation information B' may be the same as the allocation information B. As another example, the allocation information B' may be generated by the UE A 2120 based on the allocation information B, but is not limited to the aforementioned embodiment. Here, the allocation information C' may be the same as the allocation information C. As another example, the allocation information C' may be generated by the UE A 2120 based on the allocation information C, but is not limited to the aforementioned embodiment.

The UE A 2120 may transmit the allocation information B' to the UE B 2130 and may transmit the allocation information C' to the UE C 2140. Then, the UE A 2120 may transmit the allocation information A' to the UE D 2150.

Here, the allocation information A' may be information required for the UE A 2120 to transmit the SL PRS A to the UE D 2150. For example, the allocation information A' may be the same as the allocation information A. That is, the UE A 2120 may forward the allocation information received from the base station 2110 to the UE D 2150. As another example, the allocation information A' may be information generated based on the allocation information A received by the UE A 2120. Here, the UE A 2120 may transmit the allocation information A' to the UE D 2150 through at least one of a PSCCH and a PSSCH.

Also, the UE B 2130 may transmit the allocation information B' to the UE D 2150. Here, the allocation information B' may be information required for the UE B 2130 to transmit the SL PRS B to the UE D 2150 and may be acquired from the UE A 2110. Here, the UE B 2130 may transmit the allocation information B' to the UE D 2150 through at least one of the PSCCH and the PSSCH.

Also, the UE C 2140 may transmit the allocation information C' to the UE D 2150. Here, the allocation information C' may be information required for the UE C 2140 to transmit the SL PRS C to the UE D 2150 and may be acquired from the UE A 2110. Here, the UE C 2140 may transmit the allocation information C' to the UE D 2150 through at least one of the PSCCH and the PSSCH. That is, each of the UEs may transmit its allocation information to the UE D 2150.

Then, the UE A 2120 may transmit the SL PRS A to the UE D 2150 through at least one of the PSCCH and the PSSCH. Also, the UE B 2130 may transmit the SL PRS B to the UE D 2150 through at least one of the PSCCH and the PSSCH. Also, the UE C 2140 may transmit the SL PRS C to the UE D 2150 through at least one of the PSCCH and the PSSCH. That is each of the UEs may transmit its SL PRS to UE D 2150 based on resource allocation information.

Then, the UE D 2150 may perform measurement based on each of the SL PRS A, the SL PRS B, and the SL PRS C received from the UE A 2120, the UE B 2130, and the UE C 2140, respectively. Here, the UE D 2150 may transmit measurement information to the UE A 2120. Here, the measurement information may be a measurement value that is measured based on at least one of OTDOA and RSTD according to each of the SL PRS A, the SL PRS B, and the SL PRS C. For example, measurement values may be A, B, and C values for the UE A 2120, the UE B 2130, and the UE C 2140, respectively. Here, when the UE D 2150 is aware of locations of the UE A 2120, the UE B 2130, and the UE C 2140 in advance, the UE D 2150 may derive a location value of the UE D 2150 through the measurement values A, B, and C and the derived location value may be included in the measurement information. On the contrary, when the UE D 2150 is not aware of locations of the UE A 2120, the UE B 2130, and the UE C 2140 in advance, the measurement values A, B, and C may be included in the measurement information, which may not be limited to a specific form. Then, the UE A 2120 may transmit the measurement information acquired from the UE D 2150 to the base station 2110. Also, for example, the base station 2110 may further transmit the measurement information to the location server. However, the present disclosure may not be limited thereto. In the aforementioned manner, positioning may be performed.

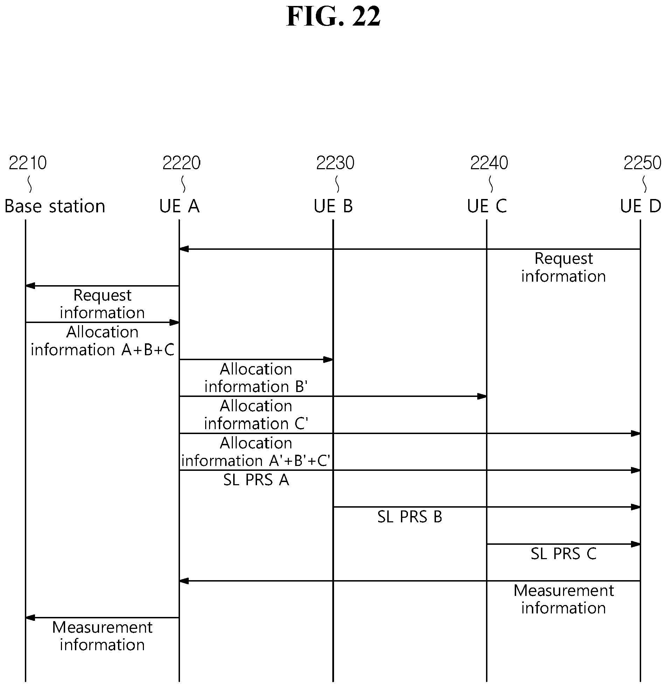

FIG. 22 illustrates a method of performing sidelink-based positioning, applicable to the present disclosure.

Referring to FIG. 22, sidelink-based positioning may be performed. As a specific example, in FIG. 22, a UE A 2220 may be present within coverage of a base station 2210. For example, the UE A 2220 may be in an RRC-connected state with the base station 2210, but the present disclosure may not be limited thereto. Here, a location of a UE D 2250 may be measured based on sidelink-based positioning. Here, for example, sidelink communication may be possible between the UE A 2220 and a UE B 2230, sidelink communication may be possible between the UE A 2220 and a UE C 2240, and sidelink communication may be possible between the UE A 2220 and the UE D 2250. As another example, the UE A 2220 may perform group communication-based sidelink communication based on groupcast. For example, the UE A 2220 may be a master terminal in group communication, but is not limited to the aforementioned embodiment.

Also, for example, the following description is made based on the aforementioned situation for clarity, but may not be limited thereto. Referring to FIG. 22, the UE D 2250 may transmit request information to the UE A 2220. Here the request information may be information requesting location measurement of the UE D 2250. Then, the UE A 2220 may transmit the request information to the base station 2210 based on the request information acquired from the UE D 2250. Here, for example, the base station 2210 may deliver the received request information to a location server, but the present disclosure is not limited to the aforementioned embodiment.

Then, the base station 2210 may transmit allocation information to each of the UEs based on the request information. As another example, the base station 2210 may receive allocation information on each of the UEs from the location server based on the request information and, based thereon, may transmit the allocation information. The present disclosure is not limited to the aforementioned embodiment.

Referring to FIG. 22, the base station 2210 may transmit allocation information A, allocation information B, and allocation information C to the UE A 2220. For example, the base station 2210 may transmit the aforementioned information to the UE A 2220 as allocation information A+B+C. That is, the allocation information A+B+C may be information generated based on the allocation information A, the allocation information B, and the allocation information C, which is described below.

Here, the allocation information A may be information required for the UE A 2220 to transmit an SL PRS A. For example, the allocation information A may include at least one of resource information and sequence information required for the UE A 2220 to transmit the SL PRS A and may further include other information. Also, the allocation information B may be information required for the UE B 2230 to transmit an SL PRS B. The allocation information B may include at least one of resource information and sequence information required for the UE B 2230 to transmit the SL PRS B and may further include other information. Also, the allocation information C may be information required for the UE C 2240 to transmit an SL PRS C. The allocation information C may include at least one of resource information and sequence information required for the UE C 2240 to transmit the SL PRS C and may further include other information.

Here, for example, the allocation information A, the allocation information B, and the allocation information C may be transmitted from the base station 2210 to the UE A 2220 through upper layer signaling (e.g., RRC). That is, the aforementioned allocation information A+B+C may be transmitted from the base station 2210 to the UE A 2220 through upper layer signaling (e.g., RRC). Here, for example, each of the allocation information A, the allocation information B, and the allocation information C may be allocated by a location server and allocated information may be transmitted to each of the UEs through the base station 2210, which may not be limited to a specific embodiment.

Then, the UE A 2220 may generate allocation information B' and allocation information C' based on the allocation information A+B+C. Here, the allocation information B' may be the same as the allocation information B. As another example, the allocation information B' may be generated by the UE A 2220 based on the allocation information B, but is not limited to the aforementioned embodiment. Here, the allocation information C' may be the same as the allocation information C. As another example, the allocation information C' may be generated by the UE A 2220 based on the allocation information C, but is not limited to the aforementioned embodiment.

The UE A 2220 may transmit the allocation information B' to the UE B 2230 and may transmit the allocation information C' to the UE C 2240. Also, the allocation information A' may be the same as the allocation information A. As another example, the allocation information A' may be generated by the UE A 2220 based on the allocation information A, but is not limited to the aforementioned embodiment. Also, the allocation information A+B+C may be the same as the allocation information A'+B'+C'. As another example, the allocation information A'+B'+C' may be generated by the UE A 2220 based on the allocation information A+B+C, but is not limited to the aforementioned embodiment.

Here, the UE A 2220 may transmit the allocation information A'+B'+C' to the UE D 2250 through at least one of a PSCCH and a PSSCH. That is, unlike FIG. 21, since sidelink communication is present only between the UE A 2220 and the UE D 2250 and sidelink communication is absent between the UE B 2230 and the UE D 2250 and between the UE C 2240 and the UE D 2250, the UE A 2220 may transmit the allocation information A'+B'+C' to the UE D 2250.

Then, the UE A 2220 may transmit the SL PRS A to the UE D 2250 through at least one of the PSCCH and the PSSCH. Also, the UE B 2230 may transmit the SL PRS B to the UE D 2250 through at least one of the PSCCH and the PSSCH. Also, the UE C 2240 may perform sidelink transmission to the UE D 2250 through at least one of the PSCCH and the PSSCH. That is, the UE C 2240 may transmit the SL PRS C to the UE D 2250. That is, each of the UEs may transmit its SL PRS to the LTE D 2250 based on allocation resource information.

Then, the UE D 2250 may perform measurement based on each of the SL PRS A, the SL PRS B, and the SL PRS C received from the UE A 2220, the UE B 2230, and the UE C 2240, respectively. Here, the UE D 2250 may transmit measurement information to the UE A 2220. Here, the measurement information may be a measurement value that is measured based on at least one of OTDOA and RSTD according to each of the SL PRS A, the SL PRS B, and the SL PRS C. For example, measurement values may be A, B, and C values for the UE A 2220, the UE B 2230, and the UE C 2240, respectively. Here, when the UE D 2250 is aware of locations of the UE A 2220, the UE B 2230, and the UE C 2240 in advance, the LTE D 2250 may derive a location value of the LTE D 2250 through the measurement values A, B, and C and the derived location value may be included in the measurement information. On the contrary, when the LTE D 2250 is not aware of locations of the UE A 2220, the UE B 2230, and the UE C 2240 in advance, the measurement values A, B, and C may be included in the measurement information, which may not be limited to a specific form. Then, the UE A 2220 may transmit the measurement information acquired from the UE D 2250 to the base station 2210. Also, for example, the base station 2210 may further transmit the measurement information to the location server. However, the present disclosure may not be limited thereto. In the aforementioned manner, positioning may be performed.

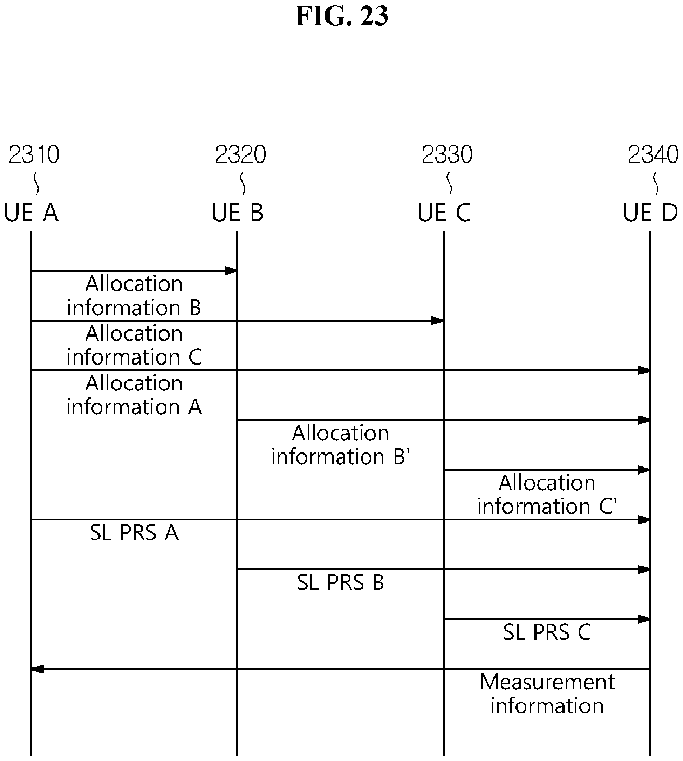

FIG. 23 illustrates a method of performing sidelink-based positioning, applicable to the present disclosure.

Referring to FIG. 23, sidelink-based positioning may be performed. As a specific example, in FIG. 23, positioning may be performed based on sidelink communication between UEs without control of a base station. For example, a location of a UE D 2340 may be measured based on sidelink-based positioning. Here, for example, sidelink communication may be possible between a UE A 2310 and a UE B 2320, sidelink communication may be possible between the UE A 2310 and a UE C 2330, sidelink communication may be possible between the UE A 2310 and the UE D 2340, sidelink communication may be possible between the UE B 2320 and the UE D 2340, and sidelink communication may be possible between the UE C 2330 and the UE D 2340. As another example, the UE A 2310 may perform group communication-based sidelink communication based on groupcast. For example, the UE A 2310 may be a master terminal in group communication, but is not limited to the aforementioned embodiment.

Also, for example, the following description is made based on the aforementioned situation for clarity, but may not be limited thereto. Referring to FIG. 23, the UE A 2310 may generate allocation information A, allocation information B, and allocation information C. For example, the UE A 2310 may transmit the generated allocation information B to the UE B 2320 and may transmit the allocation information C to the UE C 2330. Also, the UE A 2310 may transmit, to the UE D 2340, the allocation information A that is allocation information on the UE A 2310.

Here, the allocation information A may be information required for the UE A 2310 to transmit an SL PRS A. For example, the allocation information A may include at least one of resource information and sequence information required for the UE A 2310 to transmit the SL PRS A and may further include other information. Also, the allocation information B may be information required for the UE B 2320 to transmit an SL PRS B. The allocation information B may include at least one of resource information and sequence information required for the UE B 2320 to transmit the SL PRS B and may further include other information. Also, the allocation information C may be information required for the UE C 2330 to transmit an SL PRS C. The allocation information C may include at least one of resource information and sequence information required for the UE C 2330 to transmit the SL PRS C and may further include other information.

Then, the UE B 2320 may generate allocation information B' based on the allocation information B acquired from the UE A 2310 and may transmit the same to the UE D 2340 through at least one of a PSCCH and a PSSCH. Here, the allocation information B' may be the same as the allocation information B. As another example, the allocation information B' may be generated by the UE B 2320 based on the allocation information B, but is not limited to the aforementioned embodiment.

Also, the UE C 2330 may generate allocation information C' based on the allocation information C acquired from the UE A 2310 and may transmit the same to the UE D 2340 through at least one of the PSCCH and the PSSCH. Here, the allocation information C' may be the same as the allocation information C. As another example, the allocation information C' may be generated by the UE C 2330 based on the allocation information C, but is not limited to the aforementioned embodiment.

Then, the UE A 2310 may transmit the SL PRS A through at least one of the PSCCH and the PSSCH. Also, the UE B 2320 may transmit the SL PRS B to the UE D 2340 through at least one of the PSCCH and the PSSCH. Also, the UE C 2330 may transmit the SL PRS C to the UE D 2340 through at least one of the PSCCH and the PSSCH. That is, each of the UEs may transmits its SL PRS to the UE D 2340 based on allocation resource information.

Then, the UE D 2340 may perform measurement based on each of the SL PRS A, the SL PRS B, and the SL PRS C received from the UE A 2310, the UE B 2320, and the UE C 2330, respectively. Here, the UE D 2340 may transmit measurement information to the UE A 2310. Here, the measurement information may be a measurement value that is measured based on at least one of OTDOA and RSTD according to each of the SL PRS A, the SL PRS B, and the SL PRS C. For example, measurement values may be A, B, and C values for the UE A 2310, the UE B 2320, and the UE C 2330, respectively. Here, when the UE D 2340 is aware of locations of the UE A 2310, the UE B 2320, and the UE C 2330 in advance, the UE D 2340 may derive a location value of the UE D 2340 through the measurement values A, B, and C and the derived location value may be included in the measurement information. On the contrary, when the UE D 2340 is not aware of locations of the UE A 2310, the UE B 2320, and the UE C 2330 in advance, the measurement values A, B, and C may be included in the measurement information, which may not be limited to a specific form.

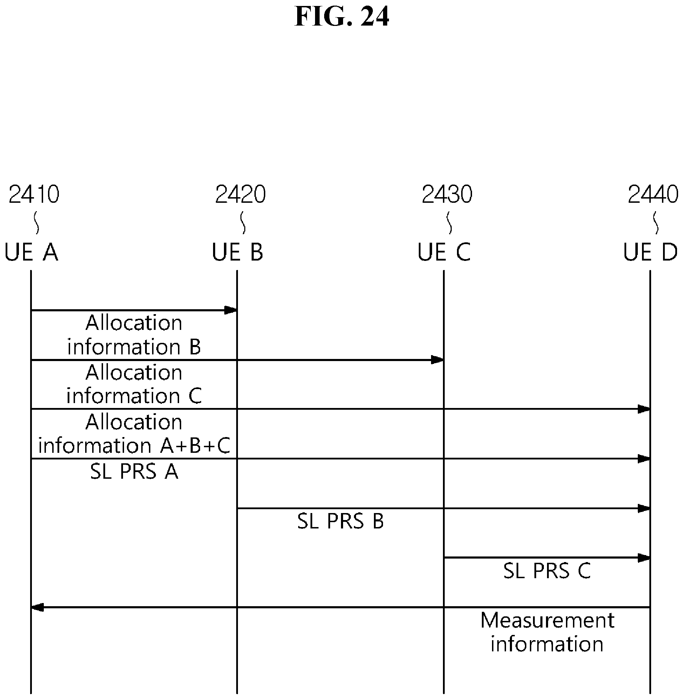

FIG. 24 illustrates a method of performing sidelink-based positioning, applicable to the present disclosure.

Referring to FIG. 24, sidelink-based positioning may be performed. As a specific example, in FIG. 24, positioning may be performed based on sidelink communication between UEs without control of a base station. For example, a location of a UE D 2440 may be measured based on sidelink-based positioning. Here, for example, sidelink communication may be possible between a UE A 2410 and a UE B 2420, sidelink communication may be possible between the UE A 2410 and a UE C 2430, and sidelink communication may be possible between the UE A 2410 and the UE D 2440. As another example, the UE A 2410 may perform group communication-based sidelink communication based on groupcast. For example, the UE A 2410 may be a master terminal in group communication, but is not limited to the aforementioned embodiment.

Also, for example, the following description is made based on the aforementioned situation for clarity, but may not be limited thereto. Referring to FIG. 24, the UE A 2410 may generate allocation information A, allocation information B, and allocation information C. For example, the UE A 2410 may transmit the generated allocation information B to the UE B 2420 and may transmit the allocation information C to the UE C 2430. Also, the UE A 2410 may transmit, to the UE D 2440, the allocation information A that is allocation information on the UE A 2410 with the allocation information B and the allocation information C. That is, the UE A 2410 may transmit allocation information A+B+C to the UE D 2440. Here, the allocation information A+B+C may be information that is generated based on the allocation information A, the allocation information B, and the allocation information C, which is described below.

Here, the allocation information A may be information required for the UE A 2410 to transmit an SL PRS A. For example, the allocation information A may include at least one of resource information and sequence information required for the UE A 2410 to transmit the SL PRS A and may further include other information. Also, the allocation information B may be information required for the UE B 2420 to transmit an SL PRS B. The allocation information B may include at least one of resource information and sequence information required for the UE B 2420 to transmit the SL PRS B and may further include other information. Also, the allocation information C may be information required for the UE C 2r30 to transmit an SL PRS C. The allocation information C may include at least one of resource information and sequence information required for the UE C 2r30 to transmit the SL PRS C and may further include other information.

Then, the UE A 2410 may transmit the SL PRS A to the UE D 2440 through at least one of a PSCCH and a PSSCH. Also, the UE B 2420 may transmit the SL PRS B to the UE D 2440 through at least one of the PSCCH and the PSSCH. Also, the UE C 2430 may transmit the SL PRS C to the UE D 2440 through at least one of the PSCCH and the PSSCH. That is, each of the UEs may transmits its SL PRS to the UE D 2440 based on allocation resource information.

Then, the UE D 2440 may perform measurement based on each of the SL PRS A, the SL PRS B, and the SL PRS C received from the UE A 2410, the UE B 2420, and the UE C 2430, respectively. Here, the UE D 2440 may transmit measurement information to the UE A 2410. Here, the measurement information may be a measurement value that is measured based on at least one of OTDOA and RSTD according to each of the SL PRS A, the SL PRS B, and the SL PRS C. For example, measurement values may be A, B, and C values for the UE A 2410, the UE B 2420, and the UE C 2430, respectively. Here, when the UE D 2440 is aware of locations of the UE A 2410, the UE B 2420, and the UE C 2430 in advance, the UE D 2440 may derive a location value of the UE D 2440 through the measurement values A, B, and C and the derived location value may be included in the measurement information. On the contrary, when the UE D 2440 is not aware of locations of the UE A 2410, the UE B 2420, and the UE C 2430 in advance, the measurement values A, B, and C may be included in the measurement information, which may not be limited to a specific form.

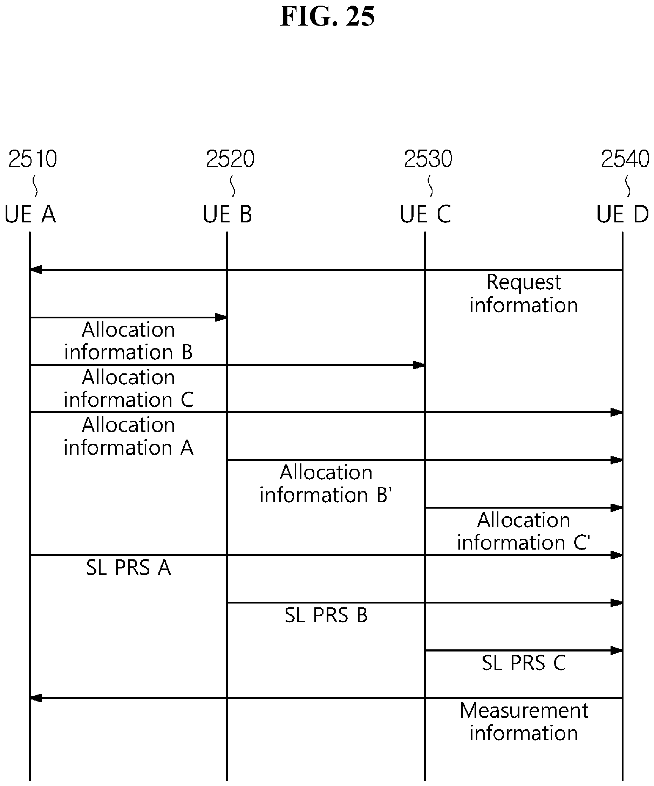

FIG. 25 illustrates a method of performing sidelink-based positioning, applied to the present disclosure.

Referring to FIG. 25, sidelink-based positioning may be performed. As a specific example, in FIG. 25, positioning may be performed based on sidelink communication between UEs without control of a base station. For example, a UE D 2540 may be measured based on sidelink-based positioning. Here, for example, sidelink communication may be possible between a UE A 2510 and a UE B 2520, sidelink communication may be possible between the UE A 2510 and a UE C 2530, sidelink communication may be possible between the UE A 2510 and a UE D 2540, sidelink communication may be possible between the UE B 2520 and the UE D 2540, and sidelink communication may be possible between the UE C 2530 and the UE D 2540. As another example, the UE A 2510 may perform group communication-based sidelink communication based on groupcast. For example, the UE A 2410 may be a master terminal in group communication, but is not limited to the aforementioned embodiment.

Also, for example, the following description is made based on the aforementioned situation for clarity, but may not be limited thereto. Referring to FIG. 25, the UE D 2540 may transmit request information to the UE A 2510. Here, the request information may be information requesting location measurement of the UE D 2540. Then, the UE A 2510 may generate allocation information on each of the UEs based on the request information. For example, the UE A 2510 may generate allocation information A, allocation information B, and allocation information C. For example, the UE A 2510 may transmit the generated allocation information B to the UE B 2520 and may transmit the allocation information C to the UE C 2530. Also, the UE A 2510 may transmit, to the UE D 2540, the allocation information A that is allocation information on the UE A 2510.

Here, the allocation information A may be information required for the UE A 2510 to transmit an SL PRS A. For example, the allocation information A may include at least one of resource information and sequence information required for the UE A 2510 to transmit the SL PRS A and may further include other information. Also, the allocation information B may be information required for the UE B 2520 to transmit an SL PRS B. The allocation information B may include at least one of resource information and sequence information required for the UE B 2520 to transmit the SL PRS B and may further include other information. Also, the allocation information C may be information required for the UE C 2530 to transmit an SL PRS C. The allocation information C may include at least one of resource information and sequence information required for the UE C 2530 to transmit the SL PRS C and may further include other information.

Here, for example, then, the UE B 2520 may generate allocation information B' based on the allocation information B acquired from the UE A 2510 and may transmit the same to the UE D 2530 through at least one of a PSCCH and a PSSCH. Here, the allocation information B' may be the same as the allocation information B. As another example, the allocation information B' may be generated by the UE B 2520 based on the allocation information B, which is not limited to the aforementioned embodiment.

Also, the UE C 2530 may generate allocation information C' based on the allocation information C acquired from the UE A 2510 and may transmit the same to the UE D 2530 through at least one of the PSCCH and the PSSCH. Here, the allocation information C' may be the same as the allocation information C. As another example, the allocation information C' may be generated by the UE C 2530 based on the allocation information C, which is not limited to the aforementioned embodiment.

Then, the UE A 2510 may transmit the SL PRS A to the UE D 2540 through at least one of the PSCCH and the PSSCH. Also, the UE B 2520 may transmit the SL PRS B to the UE D 2540 through at least one of the PSCCH and the PSSCH. Also, the UE C 2530 may transmit the SL PRS C to the UE D 2540 through at least one of the PSCCH and the PSSCH. That is, each of the UEs may transmits its SL PRS to the UE D 2540 based on allocation resource information.

Then, the UE D 2540 may perform measurement based on each of the SL PRS A, the SL PRS B, and the SL PRS C received from the UE A 2510, the UE B 2520, and the UE C 2530, respectively. Here, the UE D 2540 may transmit measurement information to the UE A 2510. Here, the measurement information may be a measurement value that is measured based on at least one of OTDOA and RSTD according to each of the SL PRS A, the SL PRS B, and the SL PRS C. For example, measurement values may be A, B, and C values for the UE A 2510, the UE B 2520, and the UE C 2530, respectively. Here, when the UE D 2540 is aware of locations of the UE A 2510, the UE B 2520, and the UE C 2530 in advance, the UE D 2540 may derive a location value of the UE D 2540 through the measurement values A, B, and C and the derived location value may be included in the measurement information. On the contrary, when the UE D 2540 is not aware of locations of the UE A 2510, the UE B 2520, and the UE C 2530 in advance, the measurement values A, B, and C may be included in the measurement information, which may not be limited to a specific form.

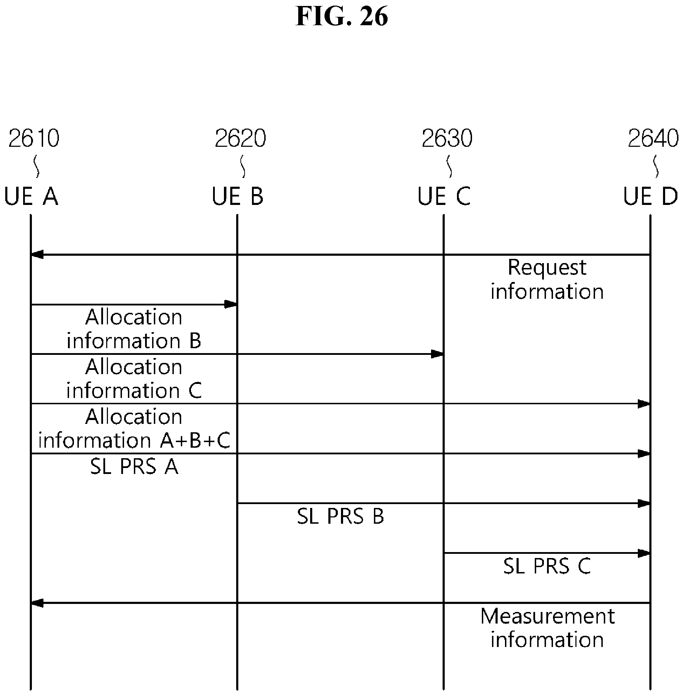

FIG. 26 illustrates a method of performing sidelink-based positioning, applied to the present disclosure.

Referring to FIG. 26, sidelink-based positioning may be performed. As a specific example, in FIG. 26, positioning may be performed based on sidelink communication between UEs without control of a base station. For example, a location of a UE D 2640 may be measured based on sidelink-based positioning. Here, for example, sidelink communication may be possible between a UE A 2610 and a UE B 2620, sidelink communication may be possible between the UE A 2610 and a UE C 2630, and sidelink communication may be possible between the UE A 2610 and the UE D 2640. As another example, the UE A 2610 may perform group communication-based sidelink communication based on groupcast. For example, the UE A 2610 may be a master terminal in group communication, but is not limited to the aforementioned embodiment.

Also, for example, the following description is made based on the aforementioned situation for clarity, but may not be limited thereto. Referring to FIG. 26, the UE D 2640 may transmit request information to the UE A 2610. Here, the request information may be information requesting location measurement of the UE D 2640. Then, the UE A 2610 may generate allocation information on each of the UEs based on the request information. For example, the UE A 2610 may generate allocation information A, allocation information B, and allocation information C. For example, the UE A 2610 may transmit the generated allocation information B to the UE B 2620 and may transmit the allocation information C to the UE C 2630. Also, the UE A 2610 may transmit, to the UE D 2640, the allocation information A that is allocation information on the UE A 2610 with the allocation information B and the allocation information C. That is, the UE A 2610 may transmit allocation information A+B+C to the UE D 2640. Here, the allocation information A+B+C may be information that is generated based on the allocation information A, the allocation information B, and the allocation information C, which is described below.

Here, the allocation information A may be information required for the UE A 2610 to transmit an SL PRS A. For example, the allocation information A may include at least one of resource information and sequence information required for the UE A 2610 to transmit the SL PRS A and may further include other information. Also, the allocation information B may be information required for the UE B 2620 to transmit an SL PRS B. The allocation information B may include at least one of resource information and sequence information required for the UE B 2620 to transmit the SL PRS B and may further include other information. Also, the allocation information C may be information required for the UE C 2630 to transmit an SL PRS C. The allocation information C may include at least one of resource information and sequence information required for the UE C 2630 to transmit the SL PRS C and may further include other information.

Then, the UE A 2610 may transmit the SL PRS A to the UE D 2640 through at least one of the PSCCH and the PSSCH. Also, the UE B 2620 may transmit the SL PRS B to the UE D 2640 through at least one of the PSCCH and the PSSCH. Also, the UE C 2630 may transmit the SL PRS C to the UE D 2640 through at least one of the PSCCH and the PSSCH. That is, each of the UEs may transmits its SL PRS to the UE D 2640 based on allocation resource information.

Then, the UE D 2640 may perform measurement based on each of the SL PRS A, the SL PRS B, and the SL PRS C received from the UE A 2610, the UE B 2620, and the UE C 2630, respectively. Here, the UE D 2640 may transmit measurement information to the UE A 2610. Here, the measurement information may be a measurement value that is measured based on at least one of OTDOA and RSTD according to each of the SL PRS A, the SL PRS B, and the SL PRS C. For example, measurement values may be A, B, and C values for the UE A 2610, the UE B 2620, and the UE C 2630. Here, when the UE D 2640 is aware of locations of the UE A 2610, the UE B 2620, and the UE C 2630 in advance, the UE D 2640 may derive a location value of the UE D 2640 through the measurement values A, B, and C and the derived location value may be included in the measurement information. On the contrary, when the UE D 2640 is not aware of locations of the UE A 2610, the UE B 2620, and the UE C 2630 in advance, the measurement values A, B, and C may be included in the measurement information, which may not be limited to a specific form.

By referring to FIGS. 15 to 26 described above, positioning may be performed based on an SL PRS. Here, for example, allocation information for SL PRS positioning may include at least one of resource information and sequence information for SL PRS transmission. Also, for example, as described above, the allocation information may include other information. Here, for example, a resource and a sequence for each SL PRS may be different and a method of distinguishing the same may be required.

As a specific example, a UE may generate an SL PRS sequence based on Equation 3 below, but it is an example only and the present disclosure may not be limited thereto. Here, in Equation 3, an initial value for pseudo-random sequence c(i) may be generated based on Equation 4 below. Here, $n_{s,f}^{\mu}$ denotes a slot number, $n_{ID,seq}^{PRS}$ denotes a sequence ID, $l$ denotes a sequence-mapping OFDM symbol within a slot.

[Equation 3]

$$r(m) = \frac{1}{\sqrt{2}}\big(1 - 2c(2m)\big) + j\frac{1}{\sqrt{2}}\big(1 - 2c(2m + 1)\big)$$

[Equation 4]

$$c_{init} = \left(2^{22}\left\lfloor\frac{n_{ID,seq}^{PRS}}{1024}\right\rfloor + 2^{10}\big(N_{symb}^{slot}n_{s,f}^{\mu} + l + 1\big)\big(2\big(n_{ID,seq}^{PRS} \bmod 1024\big) + 1\big) + \right.$$

$$\left.\big(n_{ID,seq}^{PRS} \bmod 1024\big)\right) \bmod 2^{31}$$

Here, for example, when an SL PRS is generated based on Equation 3 and Equation 4, $n_{ID,seq}^{PRS}$ may be set to $n_{ID,seq}^{PRS} \in \{0, 1, \ldots, 4095\}$ as a sequence ID for SL PRS generation. For example, a sequence ID of existing DL PRS may also be $n_{ID,seq}^{PRS} \in \{0, 1, \ldots, 4095\}$. That is, the sequence ID for SL PRS generation may be generated based on the same range as that of the sequence ID of the DL PRS. For example, in the same manner as before, the SL PRS sequence may be generated through a 12-bit PRS ID having $n_{ID,seq}^{PRS} \in \{0, 1, \ldots, 4095\}$ transmitted to the UE through upper layer signaling (e.g., RRC). Here, sequence information of allocation information A (or allocation information A') may include sequence ID information on the SL PRS A. Also, sequence information of allocation information B (or allocation information B') may include sequence ID information on the SL PRS B. Also, sequence information of allocation information C (or allocation information C') may include sequence ID information on the SL PRS C.

Also, for example, since allocation information A+B+C is generated based on the allocation information A, the allocation information B, and the allocation information C, the allocation information A+B+C may include each corresponding sequence ID information as sequence information in information for each of the allocation information A, the allocation information B, and the allocation information C.

However, for example, the aforementioned $n_{ID,seq}^{PRS}$ may have the same range as that of the existing DL PRS. Therefore, it needs to be distinguished from the DL PRS. Here, for example, the sequence ID for the SL PRS may be selected from among remaining IDs excluding PRS IDs allocated for the DL PRS. That is, the DL PRS may take precedence over the SL PRS and a PRS ID not used for the DL PRS may be used for the SL PRS.

As another example, the aforementioned sequence ID information may be provided from a base station to a UE through upper layer signaling (e.g., RRC). Therefore, in FIGS. 15 to 22, the UE may acquire sequence ID information. However, as shown in FIGS. 23 to 26, the UE that performs sidelink communication without control of the base station may not acquire PRS ID information. Therefore, in FIGS. 23 to 26, the UE needs to determine a PRS ID by itself.

As a specific example, a case of performing group communication-based sidelink communication may be considered. Here, a PRS ID for a PRS sequence may be determined based on a combination of a group ID and an in-group UE ID. For example, in group communication-based sidelink communication, when a UE A is a master terminal within a group, the UE A may acquire group ID information in advance as identification information on the group. That is, a group ID that the UE A already has may be the group ID.

As another example, the group ID may be an ID of the UE A. That is, the UE A's ID itself may be the group ID.

Here, the UE A's ID may be '$n^{SA}_{ID}$ (sidelink group destination identity)' as ID included and indicated in sidelink assignment (SA), but may not be limited thereto.

As another example, the UE A's ID may be $N^X_{ID}$ derived by the UE A. Here, for example, $N^X_{ID}$ may be the same as Equation 5 below as a decimal number of CRC of a PSCCH associated with a PSSCH, but may not be limited thereto. Here, $p_i$ denotes each parity bit and L denotes the number of parity bits.

[Equation 5]

$$N^X_{ID} = \sum_{i=0}^{L-1} p_i \cdot 2^{L-1-i}$$

As a specific example, a case in which an SL PRS ID is based on 12 bits like the existing DL PRS ID may be considered. Here, for example, a group ID the UE already has may include 9 bits and, even in the case of '$n^{SA}_{ID}$ as ID included and indicated in SA as the UE A's ID, may be a 9-bit ID. That is, the group ID may include 9 bits. On the other hand, if the UE A's ID is $N^X_{ID}$ derived by the UE A, $N^X_{ID}$ may be a modular function and may include 9 bits based on modular $2^9$ or 10 bits based on modular $2^{10}$. For example, as described above, the group ID may include 9 bits and 10 bits. Here, since the SL PRS ID includes 12 bits as before, the in-group UE ID may include 3 bits if the group ID includes 9 bits. On the other hand, if the group ID includes 10 bits, the in-group UE ID may include 2 bits. That is, the SL PRS ID may be configured using 12 bits as before and the number of bits of the in-group UE ID may be adjusted based on the number of bits of the group ID.

As a specific example, if the group ID includes 10 bits, an in-group UE ID value for UE A may be 00, an in-group UE ID value for UE B may be 01, and an in-group UE ID value for UE C may be 10, with 2 bits. However, the present disclosure may not be limited thereto. Also, for example, if the group ID includes 9 bits, an in-group UE ID value for UE A may be 000, an in-group UE ID value for UE B may be 001, and an in-group UE ID value for UE C may be 010, with 3 bits. However, the present disclosure may not be limited thereto.

As another example, the SL PRS ID may be configured based on 9+N bits. Here, 9 bits may be the group ID and N bits may be the in-group UE ID. For example, regarding the SL PRS ID, it may be divided by 1024 based on modular 1024 in Equation 4 above and may be configured with 9+N bits accordingly. For example, as described above, in the case of using the UE A's existing group ID as the group ID or in the case of '$n^{SA}_{ID}$ included and indicated in SA as the UE A's ID, the group ID may be a 9-bit ID. Also, in the case of $N^X_{ID}$, it is a modular function and the group ID may be configured with 9 bits based on modular $2^9$. Here, as the in-group UE ID, N bits may be an integer of 2 or more. That is, an in-group UE ID value for UE A may be 00, an in-group UE ID value for UE B may be 01, and an in-group UE ID value for UE C may be 10, with 2 bits. However, the present disclosure may not be limited thereto. Also, for example, an in-group UE ID value for UE A may be 000, an in-group UE ID value for UE B may be 001, and an in-group UE ID value for UE C may be 010, with 3 bits. However, the present disclosure may not be limited thereto.

As another example, the SL PRS ID may be configured based on 16+N bits. Here, 16 bits may be the group ID and N bits may be the in-group UE ID. Here, for example, regarding the SL PRS ID, it may be divided by 1024 based on modular 1024 in Equation 4 above and may be configured with 16+N bits accordingly.

For example, in the case of the aforementioned $N^X_{ID}$, it is a modular function and the group ID may be configured with 16 bits based on modular $2^{16}$. Here, as the in-group UE ID, N bits may be an integer of 2 or more. That is, an in-group UE ID value for UE A may be 00, an in-group UE ID value for UE B may be 01, and an in-group UE ID value for UE C may be 10, with 2 bits. However, the present disclosure may not be limited thereto. Also, for example, an in-group UE ID value for UE A may be 000, an in-group UE ID value for UE B may be 001, and an in-group UE ID value for UE C may be 010, with 3 bits. However, the present disclosure may not be limited thereto.

As another example, the SL PRS ID may be configured based on $N^X_{ID}$+N bits. Here, the group ID may use $N^X_{ID}$ as is and N bits may be the in-group UE ID. Here, for example, regarding the SL PRS ID, it may be divided by 1024 based on modular 1024 in Equation 4 above and may be configured with $N^X_{ID}$+N bits accordingly.

For example, the group ID may use the aforementioned $N^X_{ID}$ as is. Here, as the in-group UE ID, N bits may be an integer of 2 or more. That is, an in-group UE ID value for UE A may be 00, an in-group UE ID value for UE B may be 01, and an in-group UE ID value for UE C may be 10, with 2 bits. However, the present disclosure may not be limited thereto. Also, for example, an in-group UE ID value for UE A may be 000, an in-group UE ID value for UE B may be 001, and an in-group UE ID value for UE C may be 010, with 3 bits. However, the present disclosure may not be limited thereto.

As another example, as described above, in the case of configuring the SL PRS ID, the group ID may be used as the UE A's ID. Here, for example, regarding the SL PRS ID, $N^X_{ID}$ for each UE may be individually configured and used. For example, in FIGS. 15 to 23, $N^X_{ID}$ for each of the UE A, the UE B, and the UE C may be individually configured. That is, an SL PRS sequence of each of the UEs may be derived through Equation 4 above based on $N^X_{ID}$ for each of the UEs. Here, $N^X_{ID}$ for each of the UEs is a modular function and may be calculated based on modular $2^{16}$ and may

be applied to Equation 4. As another example, $N^X_{ID}$ for each of the UEs may be applied to Equation 4 above without applying the modular function, which may not be limited to the aforementioned embodiment.

Also, for example, in the existing system, a positioning frequency layer (PositioningFrequencyLayer) may not support a plurality of DL PRS configurations. That is, only a single positioning frequency layer may be used in the same OFDM symbol. Here, to reduce latency and to improve device efficiency, the new system may support up to positioning frequency layers for a DL PRS. However, it is only an example and the number of positioning frequency layers may be further increased and the present disclosure is not limited to the aforementioned embodiment.

Also, at least one DL PRS resource set may be configured within the positioning frequency layer. For example, one or two DL PRS resource sets may be configured in a single Transmission Reception Point (TRP). As a specific example, when 18 TRPs are present and one DL PRS resource set is configured per one TRP, the total number of DL PRS resource sets may be 18. However, it is provided as an example only and the present disclosure is not limited to the aforementioned embodiment. Also, at least one DL PRS resource may be configured in each DL PRS resource set. For example, at least one beam may be considered within a single TRP and a DL PRS resource may correspond to each beam. As a specific example, when the number of beams considered in a specific TRP in frequency range (FR) 2 is 64, 64 DL PRS resources corresponding to the respective beams may be included in the DL PRS resource set. However, it is provided as an example only and the present disclosure is not limited to the aforementioned embodiment.

Here, parameters for DL PRS resource sets may be as shown in Table 14 below and parameters for DL PRS resources may be as shown in Table 15 below. However, the present disclosure is not limited thereto.

[Table 14]

| |
|---|
| - nr-DL-PRS-ResourceSetId |
| ID for identifying a DL PRS resource set |
| - dl-PRS-Periodicity-and-ResourceSetSlotOffset |
| Period for DL PRS and offset for DL PRS resource set |
| - dl-PRS-ResourceRepetitionFactor |
| Number of repetitions of each DL PRS resource in a single DL PRS resource set |
| - dl-PRS-ResourceTimeGap |
| Indicates a time interval and the number of slots between two DL PRS resources repeated in a single DL PRS resource set |
| - dl-PRS-MutingPatternList |
| Indicates a DL PRS resource muted in a single DL PRS resource set |
| - nr-DL-PRS-SFN0-Offset |
| Indicates an offset value from a start point, SFN0, of DL PRS period |
| - dl-PRS-CombSizeN |
| Indicates a DL PRS comb size and comb pattern |
| - dl-PRS-ResourceBandwidth |
| Indicates bandwidth for DL PRS resource |
| - dl-PRS-StartPRB |
| Indicates a start PRB index for DL PRS |

[Table 15]

| |
|---|
| - dl-PRS-ResourceList |
| DL PRS resource list in a single DL PRS resource set |
| - nr-DL-PRS-ResourceId |
| DL PRS resource ID in a single DL PRS resource set |
| - dl-PRS-SequenceId |
| Indicates initial value $c_{init}$ for generating a DL PRS sequence in DL PRS resource |
| - dl-PRS-ReOffset |
| Indicates a start RE in a single DL PRS resource in a frequency domain in consideration of a comb pattern |
| - dl-PRS-ResourceSlotOffset |
| Indicates a start slot in a DL PRS resource in correspondence to slot offset of a DL PRS resource set |
| - dl-PRS-ResourceSymbolOffset |

(continued)

Indicates a start symbol in a slot of a DL PRS resource
- dl-PRS-NumSymbols
Indicates the number of symbols in a slot of a DL PRS resource
- dl-PRS-QCL-Info
Indicates quasi-co location (QCL) information of a signal different from a DL PRS resource

Here, for example, as described above, resource information for SL PRS transmission may be included in allocation information for an SL PRS. For example, a case in which allocation information A for an SL PRS A, allocation information B for an SL PRS B, and allocation information C for an SL PRS C are configured may be considered. Here, for example, each of the allocation information A, the allocation information B, and the allocation information C may be generated based on parameters in the aforementioned "DL PRS resource set" and "DL PRS resource". That is, resource information as allocation information for an SL PRS may be generated based on DL PRS resource information. Here, for example, parameters for "SL PRS resource set" may be configured based on parameters in the "DL PRS resource set". Here, for example, the "SL PRS resource set" of each of the allocation information A, the allocation information B, and the allocation information C may be the same. Therefore, parameters within the "SL PRS resource set" for each of the allocation information A, the allocation information B, and the allocation information C may have the same value. That is, in the aforementioned SL PPS related operation based on FIGS. 15 to 23, a resource set included in each piece of allocation information may be the same. Also, for example, parameters of the "SL PRS resource" may be configured based on parameters within the "DL PRS resource". Here, some of the parameters within the "SL PRS resource" for each of the allocation information A, the allocation information B, and allocation information C may have different values. For example, some parameters among the parameters within the "SL PRS resource" for each of the allocation information A, the allocation information B, and the allocation information C are configured to be the same and thus, have the same value. However, some values may be configured with different values in consideration of each SL PRS. However, the "SL PRS resource set" and the "SL PRS resource" for each of the allocation information A, the allocation information B, and the allocation information C may be configured for each of the allocation information A, the allocation information B, and the allocation information C regardless of whether parameter values are the same.

As another example, in the aforementioned allocation information, allocation information A+B+C may be considered. Here, as described above, the allocation information A+B+C may be configured based on the allocation information A, the allocation information B, and the allocation information C. Here, as a specific example, the allocation information A+B+C may be configured based on the allocation information A. Here, the allocation information A+B+C may be pre-defined or indicated only for a configuration different from the allocation information A for each of the allocation information B and the allocation information C, based on the allocation information A. As a specific example, regarding the allocation information A+B+C, the aforementioned parameters included in the "SL PRS resource set" may be the same in all of the allocation information A, the allocation information B, and the allocation information C. Therefore, the allocation information A+B+C may also be configured based on the same "SL PRS resource set". On the contrary, in the case of the "SL PRS resource", some values may be configured to be the same and some values may be configured to be different for each of the allocation information A, the allocation information B, and the allocation information C. Here, the allocation information A+B+C may be additionally indicated only for different parameters based on the allocation information A. For example, when a specific parameter in the "SL PRS resource" has a different value for each of the allocation information A, the allocation information B, and the allocation information C, the allocation information A+B+C may include three different parameter values. On the contrary, when the specific parameter in the "SL PRS resource" has the same value for each of the allocation information A, the allocation information B, and the allocation information C, the allocation information A+B+C may include a single identical parameter value.

As another example, when a specific parameter in the "SL PRS resource" has a different value for each of the allocation information A, the allocation information B, and the allocation information C, the allocation information A+B+C may include a single parameter value based on the allocation information A and only a difference may be pre-defined through comparison to the allocation information B and /allocation information C.

As a specific example, the aforementioned SL PRS sequence ID ("SL-PRS-SequenceId") may be considered as specific parameters in the "SL PRS resource". Here, for example, a case in which a group ID may be the same in the allocation information A, the allocation information B, and the allocation information C and only an in-group UE ID is different may be considered. Here, the allocation information A+B+C may include one group ID information and three in-group UE ID information and through this, allocation information may be efficiently configured.

As another example, the respective offset values may be considered as "SL-PRS-ReOffset", "SL-PRS-ResourceSlotOffset", and "SL-PRS-ResourceSymbolOffset". Here, a case in which some of the aforementioned offset values are the same and some are different may be considered. That is, a case in which only one among resource element offset, slot offset, and symbol offset is the same and the rest are different for the allocation information A, the allocation information B, and the allocation information C may be considered. Here, the allocation information A+B+C may include only a single parameter for the same offset and may include a parameter for each UE for different offset.

As another example, the aforementioned SL PRS sequence ID ("SL-PRS-SequenceId") may be considered as specific parameters in the "SL PRS resource". Here, for example, a case in which a group ID may be the same in the allocation information A, the allocation information B, and the allocation information C and only an in-group UE ID is different may be considered. Here, the allocation information A+B+C may be configured based on the allocation information A. For example, since the group ID is the same based on the UE A, only one parameter may be transmitted. On the contrary, the in-group UE ID may be different in the allocation information A, the allocation information B, and the allocation information C and may be indicated based on 0, 1, 2.... in a pre-defined manner. That is, in the allocation information A+B+C, only a difference may be indicated in a pre-defined manner based on the allocation information A. However, the present disclosure may not be limited to the aforementioned method.

As another example, the offset values may be considered as "SL-PRS-ReOffset" , "SL-PRS-ResourceSlotOffset", and "SL-PRS-ResourceSymbolOffset". Here, a case in which some of the aforementioned offset values are the same and some are different may be considered. That is, a case in which only one among resource element offset, slot offset, and symbol offset is different and the rest are the same for the allocation information A, the allocation information B, and the allocation information C may be considered. Here, the allocation information A+B+C may include only a single parameter for the same offset based on the allocation information A. On the contrary, in the case of different offset, the allocation information A+B+C may be indicated by allocating only a different value, such as 0, offset1, offset2..., in a pre-defined manner based on the allocation information A. That is, in the allocation information A+B+C, only a difference may be indicated in a pre-defined manner based on the allocation information A. However, the present disclosure may not be limited to the aforementioned method.

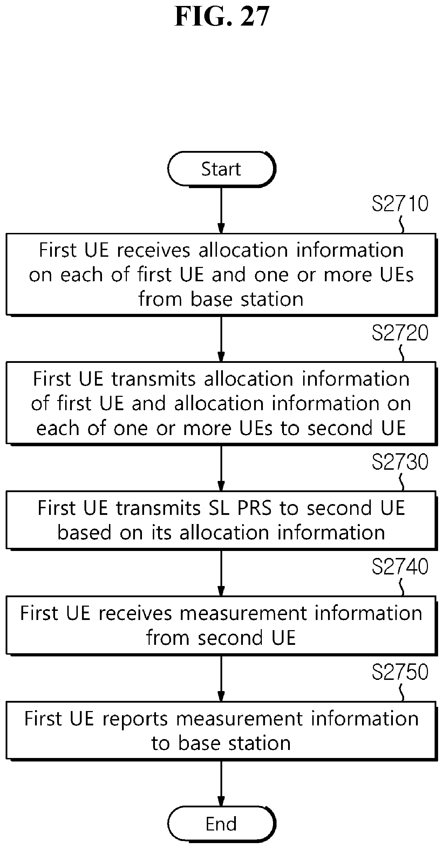

FIG. 27 is a flowchart illustrating a method of performing sidelink positioning, applied to the present disclosure.

Referring to FIG. 27, a first UE and one or more UEs may be present within base station coverage. Here, each of the first UE and the one or more UEs may be in an RRC-connected state with a base station, but the present disclosure may not be limited thereto. Here, for example, a location of a second UE may be measured based on sidelink-based positioning. Here, for example, the first UE may receive allocation information on each of the first UE and the one or more UEs from the base station (S2710). Here, the allocation information may be the same as in FIG. 16. Also, for example, as described above, each of the one or more UEs may acquire its allocation information from the base station. Then, the first UE may transmit the allocation information of the first UE and the allocation information on each of the one or more UEs to the second UE (S2720). Then, the first UE may transmit an SL PRS to the second UE based on the allocation information (S2730). Here, each of the one or more UEs may transmit its SL PRS to the second UE based on its allocation information. Then, the second UE may perform measurement based on the received SL PRSs and may report the same to the first UE. That is, the first UE may receive measurement information from the second UE (S2740). Then, as described above, the first UE may report the measurement information to the base station (S2750).

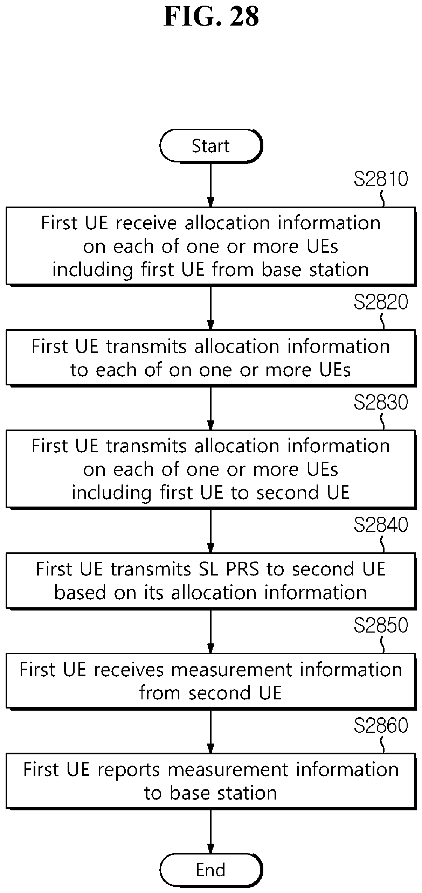

FIG. 28 is a flowchart illustrating a method of performing sidelink positioning, applied to the present disclosure.

Referring to FIG. 28, a first UE may be present within base station coverage. For example, the first UE may be in an RRC-connected state with a base station, but the present disclosure may not be limited thereto. Here, a location of a second UE may be measured based on sidelink-based positioning. For example, the first UE may receive allocation information on each of the first UE and one or more UEs from the base station (S2810). Here, as described above, the allocation information may be the same as in FIG. 20. Also, for example, the first UE may transmit the allocation information of each of the one or more UEs to each corresponding UE (S2820). Then, the first UE may transmit the allocation information of the first UE and the allocation information on each of the one or more UEs to the second UE (S2830). Then, the first UE may transmit an SL PRS to the second UE based on the allocation information (S2840). Here, each of the one or more UEs may transmit its SL PRS to the second UE based on its allocation information. Then, the second UE may perform measurement based on the received SL PRSs and may report the same to the first UE. That is, the first UE may receive measurement information from the second UE (S2850). Then, as described above, the first UE may report the measurement information to the base station (S2860).

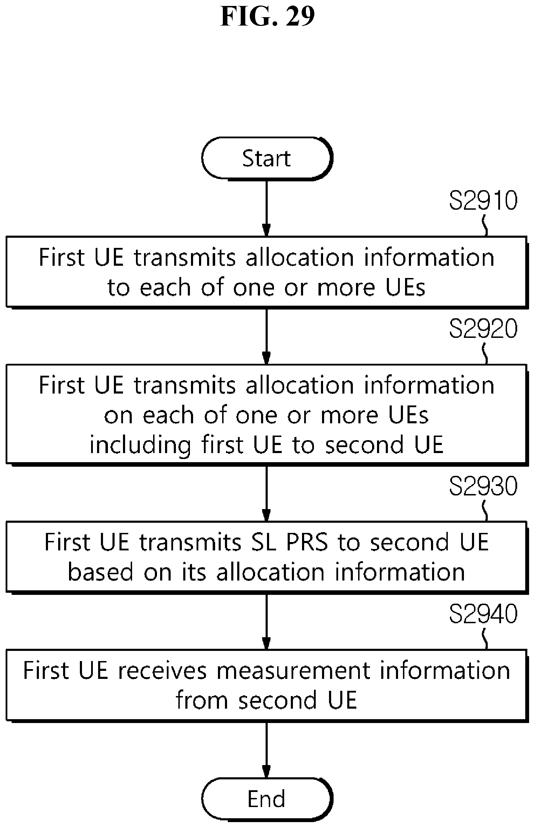

FIG. 29 is a flowchart illustrating a method of performing sidelink positioning, applied to the present disclosure. Referring to FIG. 29, a UE may generate allocation information without control of a base station. Here, a location of a second UE may be measured based on sidelink-based positioning. For example, a first UE may generate allocation information on each of the first UE and one or more UEs. Here, the allocation information may be the same as in FIG. 24. Here, the first UE may transmit the allocation information on the one or more UEs to the one or more UEs, respectively (S2910). Then, the first UE may transmit the allocation information on the first UE and the allocation information on each of the one or more UEs to the second UE (S2920). Then, the first UE may transmit an SL PRS to the second UE based on the allocation information (S2930). Here, each of the one or more UEs may transmit its SL PRS to the second UE based on its allocation information. Then, the second UE may perform measurement based on the received SL PRSs and may report the same to the first UE. That is, the first UE may receive the measurement information from the second

# EP 4 460 117 A1

UE (S2940).

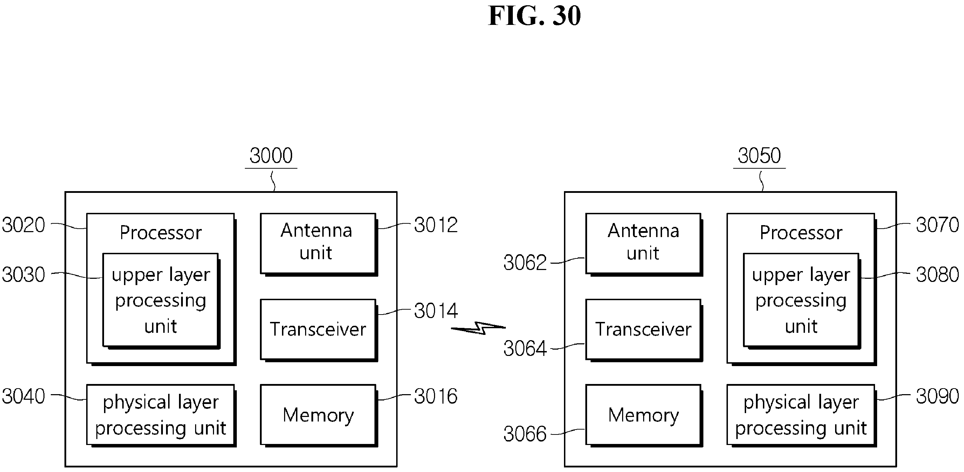

FIG. 30 is a diagram illustrating a configuration of a base station device and a terminal device according to the present disclosure may apply.

A base station device 3000 may include a processor 3010, an antenna device 3012, a transceiver 3014, and a memory 3016.

The processor 3020 may perform baseband-related signal processing and may include an upper layer processing unit 3030 and a physical (PHY) layer processing unit 3040. The upper layer processing unit 3030 may process an operation of a MAC layer, an RRC layer, or more upper layers. The PHY layer processing unit 3040 may process an operation (e.g., uplink received signal processing, downlink transmission signal processing, etc.) of a PHY layer. The processor 3020 may also control the overall operation of the base station device 3000, in addition to performing the baseband-related signal processing.

The antenna device 3012 may include at least one physical antenna. If the antenna device 3012 includes a plurality of antennas, multiple input multiple output (MIMO) transmission and reception may be supported. The transceiver 3014 may include a radio frequency (RF) transmitter and an RF receiver. The memory 3016 may store operation-processed information of the processor 3020, software, an operating system (OS), an application, etc., associated with an operation of the base station device 3000, and may include a component, such as a buffer.

The processor 3020 of the base station device 3000 may be configured to implement an operation of a base station in the embodiments set forth herein.

The terminal device 3050 may include a processor 3070, an antenna device 3062, a transceiver 3064, and a memory 3066. For example, the terminal device 3050 may communicate with the base station device 3000. As another example, the terminal device 3050 may perform sidelink communication with another terminal device. That is, the terminal device 3050 of the present invention refers to any device capable of communicating with at least one of the base station device 3000 and another terminal device and is not limited to communication with a specific device.

The processor 3070 may perform baseband-related signal processing and may include an upper layer processing unit 3080 and a PHY layer processing unit 3090. The upper layer processing unit 3080 may process an operation of a MAC layer, an RRC layer, or more upper layers. The PHY layer processing unit 3090 may process an operation (e.g., downlink received signal processing, uplink transmission signal processing, etc.) of a PHY layer. The processor 3070 may also control the overall operation of the terminal device 3050 in addition to performing the baseband-related signal processing.

The antenna device 3062 may include at least one physical antenna. If the antenna device 3062 includes a plurality of antennas, MIMO transmission and reception may be supported. The transceiver 3064 may include an RF transmitter and an RF receiver. The memory 3066 may store operation-processed information of the processor 3070, software, an OS, an application, etc., associated with an operation of the terminal device 3050, and may include a component, such as a buffer. As an example, the operations of FIGS. 1 to 29 described above may be performed based on the base station 3000 and the terminal device 3050, and may not be limited to a specific embodiment.

The various examples herein are to explain the representative aspects of the present disclosure instead of describing all the possible combinations and matters described in the various examples may independently apply or may apply through at least two combinations thereof.

Also, various examples of the present disclosure may be implemented by hardware, firmware, software, or combination thereof. In the case of implementation by hardware, the examples may be implemented by one or more application-specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present invention includes a software or machine executable instructions (for example, operating system, application, firmware, program, etc.) for enabling to implement operations according to the methods of the various embodiments, and a device or a non-transitory computer-readable medium executable on a computer storing such a software or instructions.

## INDUSTRIAL APPLICABILITY

The present disclosure may apply to other systems.

## Claims

1. A method of performing sidelink positioning in a wireless communication system, the method comprising:

   as an operation of receiving, by a first user equipment (UE), respective allocation information on one or more UEs including the first UE from a base station, receiving, by each of the one or more UEs, the respective allocation information from the base station;

transmitting, by the first UE, allocation information of the first UE and the respective allocation information on the one or more UEs to a second UE;

as an operation of transmitting, by the first UE, a sidelink positioning reference signal (SL PRS) to the second UE based on the allocation information of the first UE, receiving, by the second UE, an SL PRS from each of the one or more UEs based on the allocation information on the one or more UEs received from the first UE;

receiving, by the first UE, measurement information from the second UE; and

reporting, by the first UE, the measurement information to the base station.

2. A method of performing sidelink positioning in a wireless communication system, the method comprising:

receiving, by a first user equipment (UE), respective allocation information on one or more UEs including the first UE from a base station;

transmitting, by the first UE, the respective allocation information on the one or more UEs to the one or more UEs;

transmitting, by the first UE, allocation information of the first UE and the respective allocation information on the one or more UEs to a second UE;

as an operation of transmitting, by the first UE, a sidelink positioning reference signal (SL PRS) to the second UE based on the allocation information of the first UE, receiving, by the second UE, an SL PRS from each of the one or more UEs based on the allocation information on the one or more UEs received from the first UE;

receiving, by the first UE, measurement information from the second UE; and

reporting, by the first UE, the measurement information to the base station.

3. A method of performing sidelink positioning in a wireless communication system, the method comprising:

transmitting, by a first user equipment (UE), respective allocation information on one or more UEs to the one or more UEs;

transmitting, by the first UE, allocation information of the first UE and the respective allocation information on the one or more UEs to a second UE;

as an operation of transmitting, by the first UE, a sidelink positioning reference signal (SL PRS) to the second UE based on the allocation information of the first UE, receiving, by the second UE, an SL PRS from each of the one or more UEs based on the allocation information on the one or more UEs received from the first UE; and

receiving, by the first UE, measurement information from the second UE.

# FIG. 1

(a)V2V OPERATION

(b)V2I OPERATION

(c)V2P OPERATION

# FIG. 2

(a)V2V OPERATION

(b)V2I OPERATION

(c)V2P OPERATION

# FIG. 3

(a)

(b)

# FIG. 4

5G sidelink

N-V2X

IoT & Public Sefety

Vehicle Platooning

Advanced Sensor     sidelink

Automatic Driving System

Automatic Driving

Remote Driving

Remote Driving System

5G sidelink

EP 4 460 117 A1

# FIG. 5

| Downlink frame $i$ |
|---|

| Uplink frame $i$ |
|---|

$N_{TA} T_s$

# FIG. 6

One sub frame

$N_{\text{sub frame}}^{\text{symbols}\mu}$ OFDM symbols

$k = N_{RB}^{\mu} \, N_{sc}^{RB} \text{-} 1$

Resource block

Resource element
$-(k,\bar{l})$ in resource grid
$-(k,l)$ in resource block

$N_{RB}^{\mu} \, N_{sc}^{RB}$ subcarriers

$N_{sc}^{RB}$ subcarriers

$k = 0$

$l = 0$

$\bar{l} = 14 \cdot 2^{\mu} \text{-} 1$

# FIG. 7

SFN(or DFN) period (10240ms)

V2X band

(a)

1 1 0 0 1 1 1 0 1 1 · · · 1 1 0 0 1 · · ·

#0

Repetitions of
"slot indication of resource pool"

#(10240x2$^u$-1)

▨ Resource pool for V2X(only for time-domain)

SFN or DFN period (10240ms)

V2X band

#0

#(10240x2$^u$-1)

V2X band

$t^{SL}_0$

$t^{SL}_i$

$t^{SL}_{Tmax-1}$

(b)

+

Repetition of length $L_{bit-map}$ bit-map

$L_{bit-map}$

$(b_0,b_1,...,b_{Lbit-map}-1)$ $L_{bit-map}$
$(b_0,b_1,...,b_{Lbit-map}-1)$

$L_{bit-map}$

$(b_0,b_1,...,b_{Lbit-map}-1)$

V2X band

1 1 0 1 · · · 1 1 0 1 1 1 0 1 · · · 1 1 0 1

▨ Excepted slots within a SFN(or DFN) period
(Total d slots or d+d' slots)

▨ Resource pool for V2X(only for time-domain)

# FIG. 8

# FIG. 9

# FIG. 10

# FIG. 11

Comb-2          Comb-4                          Comb-6

# FIG. 12

{0,3,1,4,2,5}pattern with $f_{shift}=0$

{0,3,1,4,2,5}pattern with $f_{shift}=2$

EP 4 460 117 A1

# FIG. 13

{0,6,3,9,1,7,4,10,2,8,5,11}pattern with $f_{shift}=0$

{0,6,3,9,1,7,4,10,2,8,5,11}pattern with $f_{shift}=2$

# FIG. 14

offset | period#0 | period#1 | period#2 | period#3

SFN#0

DL-PRS-ResourceTimeGap

slot

DL-PRS-ResourceRepetitionFacto

period:{4,8,16,32,64,5,10,20,40,80,160,320,640,1280,2560,5120,10240,20480}slots(e.g.,10 slots in avove figure)
offset:{0,1,...,period-1}slots(e.g.,2 slots in above figure)
DL-PRS-ResourceRepetitionFacto:{1,2,4,8,16,32}times(e.g.,2times in above figure)
DL-PRS-ResourceTimeGap:{1,2,4,8,16,32}slots(e.g.,1 slots in above figure)

(a)

1410-1 period#0 | 1410-2 period#1 | 1410-3 period#2 | 1410-4 period#3

offset

SFN#0

1420-1
1420-2
1420-3
1420-4
1420-5
1420-6
1420-7
1420-8

Muting type#1:unit of each PRS occasions(PRS period),{2,4,8,16,32} bits
(e.g.,2-bit bitmap for 2 period in above figure)

Muting type#2:unit of each PRS reptition in a PRS period,{2,4,8,16,32} bits
(e.g.,2-bit bitmap for 2 repetitions in above figure)

(b)

# FIG. 15

# FIG. 16

# FIG. 17

# FIG. 18

# FIG. 19

# FIG. 20

2010      2020      2030      2040      2050

Base station     UE A      UE B      UE C      UE D

Allocation information A+B+C

Allocation information B'

Allocation information C'

Allocation information A'+B'+C'

SL PRS A

SL PRS B

SL PRS C

Measurement information

Measurement information

# FIG. 21

# FIG. 22

# FIG. 23

# FIG. 24

# FIG. 25

# FIG. 26

# FIG. 27

```
        ┌─────────────┐
        │    Start     │
        └──────┬──────┘
               │                    S2710
               ▼
┌──────────────────────────────────────┐
│  First UE receives allocation information │
│  on each of first UE and one or more UEs  │
│         from base station                  │
└──────────────────┬───────────────────┘
                   │                 S2720
                   ▼
┌──────────────────────────────────────┐
│  First UE transmits allocation information │
│  of first UE and allocation information on │
│  each of one or more UEs to second UE     │
└──────────────────┬───────────────────┘
                   │                 S2730
                   ▼
┌──────────────────────────────────────┐
│  First UE transmits SL PRS to second UE   │
│    based on its allocation information     │
└──────────────────┬───────────────────┘
                   │                 S2740
                   ▼
┌──────────────────────────────────────┐
│  First UE receives measurement information │
│          from second UE                    │
└──────────────────┬───────────────────┘
                   │                 S2750
                   ▼
┌──────────────────────────────────────┐
│  First UE reports measurement information  │
│          to base station                   │
└──────────────────┬───────────────────┘
                   │
                   ▼
        ┌─────────────┐
        │     End      │
        └─────────────┘
```

# FIG. 28

Start

S2810

First UE receive allocation information
on each of one or more UEs
including first UE from base station

S2820

First UE transmits allocation information
to each of on one or more UEs

S2830

First UE transmits allocation information
on each of one or more UEs
including first UE to second UE

S2840

First UE transmits SL PRS to second UE
based on its allocation information

S2850

First UE receives measurement information
from second UE

S2860

First UE reports measurement information
to base station

End

# FIG. 29

Start

S2910

First UE transmits allocation information to each of one or more UEs

S2920

First UE transmits allocation information on each of one or more UEs including first UE to second UE

S2930

First UE transmits SL PRS to second UE based on its allocation information

S2940

First UE receives measurement information from second UE

End

**FIG. 30**

EP 4 460 117 A1

## INTERNATIONAL SEARCH REPORT

| International application No. |
| --- |
| **PCT/KR2022/021363** |

**A.    CLASSIFICATION OF SUBJECT MATTER**

**H04W 64/00**(2009.01)i; **H04W 24/10**(2009.01)i; **H04W 72/20**(2023.01)i; **H04W 4/40**(2018.01)i

According to International Patent Classification (IPC) or to both national classification and IPC

**B.    FIELDS SEARCHED**

Minimum documentation searched (classification system followed by classification symbols)

H04W 64/00(2009.01); G01S 5/02(2010.01); H04W 4/02(2009.01); H04W 4/029(2018.01); H04W 4/22(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크 포지셔닝 참조신호(sidelink positioning reference signal, SL PRS), 할당(allocation), 구성(configuration), 측정(measurement), 보고(report)

**C.    DOCUMENTS CONSIDERED TO BE RELEVANT**

| Category* | Citation of document, with indication, where appropriate, of the relevant passages | Relevant to claim No. |
| --- | --- | --- |
| X | US 2021-0219103 A1 (HUAWEI TECHNOLOGIES CO., LTD.) 15 July 2021 (2021-07-15)<br>See paragraphs [0195]-[0198], [0203]-[0204] and [0247]; claim 15; and figures 14, 16 and 21. | 1-3 |
| A | WO 2021-057175 A1 (DATANG MOBILE COMMUNICATIONS EQUIPMENT CO., LTD.) 01 April 2021 (2021-04-01)<br>See page 13, line 27 - page 15, line 17; claims 1 and 8; and figure 5. | 1-3 |
| A | WO 2021-092813 A1 (NOKIA SHANGHAI BELL CO., LTD. et al.) 20 May 2021 (2021-05-20)<br>See paragraphs [0048]-[0067]; and figure 2. | 1-3 |
| A | US 2015-0296359 A1 (QUALCOMM INCORPORATED) 15 October 2015 (2015-10-15)<br>See paragraphs [0192]-[0193]. | 1-3 |
| A | US 2020-0128506 A1 (TELEFONAKTIEBOLAGET LM ERICSSON (PUBL)) 23 April 2020 (2020-04-23)<br>See paragraphs [0068]-[0115]; and figure 2. | 1-3 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 March 2023** | **29 March 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

International application No.

**PCT/KR2022/021363**

| Patent document cited in search report | | | Publication date (day/month/year) | Patent family member(s) | | | Publication date (day/month/year) |
|---|---|---|---|---|---|---|---|
| US | 2021-0219103 | A1 | 15 July 2021 | CN | 112789912 | A | 11 May 2021 |
| | | | | CN | 112789912 | B | 24 May 2022 |
| | | | | EP | 3847857 | A1 | 14 July 2021 |
| | | | | WO | 2020-064120 | A1 | 02 April 2020 |
| WO | 2021-057175 | A1 | 01 April 2021 | CN | 112584487 | A | 30 March 2021 |
| | | | | CN | 112584487 | B | 18 October 2022 |
| | | | | EP | 4037345 | A1 | 03 August 2022 |
| | | | | KR | 10-2022-0071243 | A | 31 May 2022 |
| | | | | US | 2022-0321293 | A1 | 06 October 2022 |
| WO | 2021-092813 | A1 | 20 May 2021 | CN | 114651492 | A | 21 June 2022 |
| | | | | EP | 4059283 | A1 | 21 September 2022 |
| US | 2015-0296359 | A1 | 15 October 2015 | US | 9462448 | B2 | 04 October 2016 |
| | | | | WO | 2015-160705 | A2 | 22 October 2015 |
| | | | | WO | 2015-160705 | A3 | 25 February 2016 |
| US | 2020-0128506 | A1 | 23 April 2020 | EP | 3808141 | A1 | 21 April 2021 |
| | | | | EP | 3808141 | A4 | 19 January 2022 |
| | | | | US | 11425676 | B2 | 23 August 2022 |
| | | | | WO | 2019-240635 | A1 | 19 December 2019 |

Form PCT/ISA/210 (patent family annex) (July 2022)